# EUROPÄISCHE PATENTSCHRIFT

(11) **EP 1 789 499 B1**
(45) Veröffentlichungstag und Bekanntmachung des Hinweises auf die Patenterteilung: **23.03.2011**
(21) Anmeldenummer: 05787134.5
(22) Anmeldetag: 30.08.2005
(51) Int. Cl.: C09B 67/22

(54) **FARBSTOFFMISCHUNGEN VON FASERREAKTIVEN AZOFARBSTOFFEN, IHRE HERSTELLUNG UND IHRE VERWENDUNG**
DYE MIXTURES OF FIBRE-REACTIVE AZO DYES PRODUCTION AND USE THEREOF
MELANGES DE COLORANTS AZOIQUES REAGISSANT AVEC LES FIBRES, LEUR PRODUCTION ET LEUR UTILISATION

(30) Priorität: 02.09.2004 DE 102004042521
(43) Veröffentlichungstag der Anmeldung: 30.05.2007
(73) Patentinhaber: DyStar Colours Deutschland GmbH, 65926 Frankfurt am Main (DE)
(72) Erfinder: RUSS, Werner Hubert, 65439 Flörsheim-Wicker (DE); EICHHORN, Joachim, 65929 Frankfurt (DE); MEIER, Stefan, 60529 Frankfurt (DE)
(86) Internationale Anmeldenummer: PCT/EP2005/054264
(87) Internationale Veröffentlichungsnummer: WO 2006/024639

(56) Entgegenhaltungen:
- EP-A- 0 242 850
- EP-A- 1 213 329
- WO-A-03/080739
- DE-A1- 19 620 415

## Beschreibung

Die Erfindung liegt auf dem technischen Gebiet der faserreaktiven Azofarbstoffe.

Farbstoffmischung faserreaktiver Azofarbstoffe und deren Verwendung zum Färben von Hydroxy- und Carbonamldgruppen-haltigen Material in schwarzen Farbtönen sind beispielsweise aus den Dokumenten US 5,445,654, US 5,611,821, KR 94-2560, Sho 58-160362 und EP-A-0 870 807 bekannt. Diese besitzen jedoch gewisse anwendungstechnische Mängel, wie beispielsweise eine zu große Abhängigkeit der Farbausbeute von wechselnden Färbeparametern im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefern). Folge dieser Mängel können beispielsweise schlechte Reproduzierbarkeiten der erhältlichen Färbungen sein, was letztendlich die Wirtschaftlichkeit des Färbeprozesses beeinträchtigt. In der EP, A, 1, 213, 329 werden schwarzfärbende Reaktivfarbstoffmischungen beschrieben mit guten Allgemeinechtheiten. Auch die WO, A, 03/080739 beschreibt schwarzfärbende Azofarbstoffzusammensetzungen.

Infolgedessen besteht weiterhin ein Bedarf nach neuen Reaktivfarbstoffen bzw. Reaktivfarbstoffmischungen mit verbesserten Eigenschaften, wie hohe Substantivität bei gleichzeitig guter Auswaschbarkeit von nicht fixierten Anteilen. Sie müssen darüberhinaus auch gute färberische Ausbeuten aufweisen und eine hohe Reaktivität besitzen, wobei insbesondere Färbungen mit hohen Fixiergraden geliefert werden sollen.

Mit der vorliegenden Erfindung wurden nunmehr Farbstoffmischungen gefunden, die diese oben beschriebenen Eigenschaften in hohem Maße besitzen. Die neuen Farbstoffmischungen zeichnen sich vor allem durch hohe Fixierausbeuten und Farbstärken bei leichter Auswaschbarkeit der nicht auf der Faser fixierten Anteile aus. Zudem weisen die Färbungen gute Allgemeinechtheiten, wie beispielsweise hohe Lichtechtheit und sehr gute Nassechtheiten auf.

Die Erfindung betrifft somit Farbstoffmischungen, die einen oder mehrere, wie zwei oder drei, bevorzugt 1 oder 2, Farbstoffe der nachstehend angegebenen und definierten allgemeinen Formel (I), 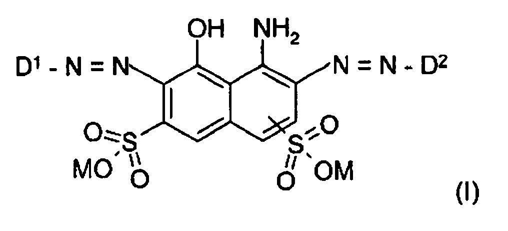 und einen oder mehrere, wie zwei oder drei, bevorzugt 1 oder 2, Farbstoffe der nachstehend angegebenen und definierten allgemeinen Formel (II) 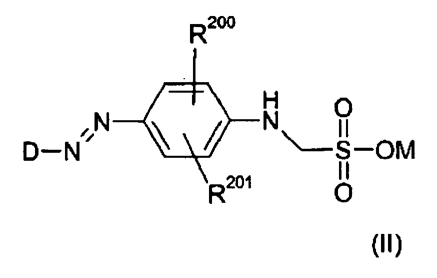 und optional einen oder mehrere, wie zwei oder drei, bevorzugt 1 oder 2, Farbstoffe der nachstehend angegebenen und definierten allgemeinen Formel (III) 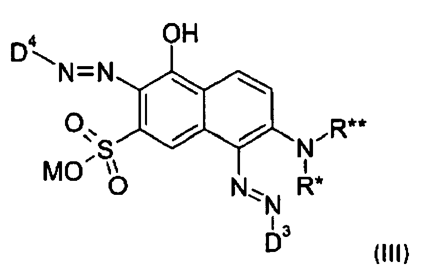 und optional einen oder mehrere, wie zwei oder drei, bevorzugt einen oder zwei Farbstoffe der nachstehend angegebenen und definierten allgemeinen Formel (IV) 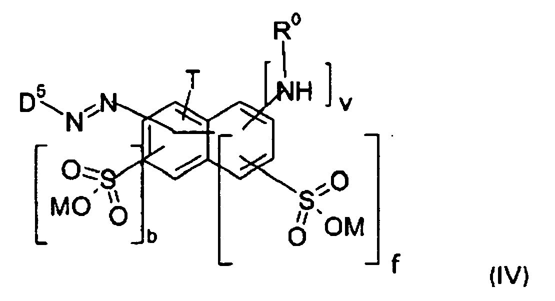 enthalten, in welchen bedeuten:
D, D¹, D², D³, D⁴ und D⁵ sind unabhängig voneinander eine Gruppe der allgemeinen Formel (1) 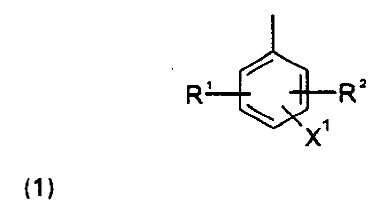 worin
   - R¹ und R²: unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
   - X¹: für Wasserstoff oder eine Gruppe der Formel -SO₂-Z steht,
   wobei
   Z -CH = CH₂, -CH₂CH₂Z¹ oder Hydroxy bedeutet,
   worin
   Z¹ Hydroxy oder eine unter Alkaliwirkung abspaltbare Gruppe ist oder
D, D¹, D², D³, D⁴ und D⁵ bedeuten unabhängig voneinander eine Naphthylgruppe der allgemeinen Formel (2) 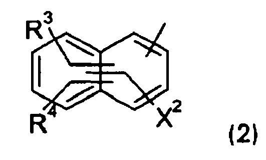 worin
   - R³ und R⁴: unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
   - X²: eine der Bedeutungen von X¹ hat; oder
D, D¹, D², D³, D⁴ und D⁵ sind unabhängig voneinander eine Gruppe der allgemeinen Formel (3) 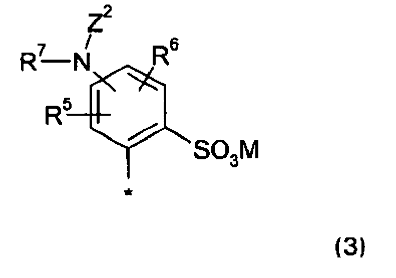 worin
   - R⁵ und R⁶: unabhängig voneinander eine der Bedeutungen von R¹ und R² haben;
   - R⁷: ist Wasserstoff, (C₁-C₄)-Alkyl, unsubstituiertes oder durch (C₁-C₄)- Alkyl, (C₁-C₄)-Alkoxy, Sulfo, Halogen oder Carboxy substituiertes Phenyl; und
   - Z²: ist eine Gruppe der allgemeinen Formel (4) oder (5) oder (6) 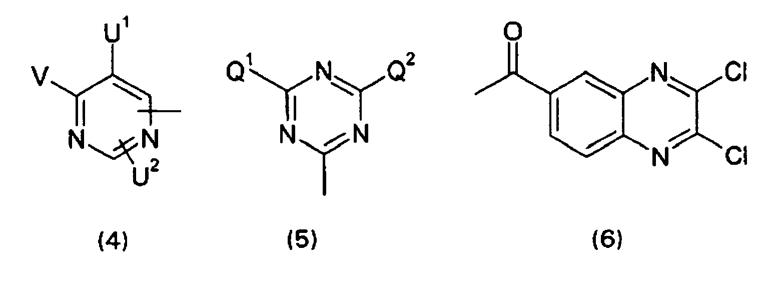 worin
   V Fluor oder Chlor bedeutet;
   U¹, U² unabhängig voneinander Fluor, Chlor oder Wasserstoff sind; und
   Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)- Alkylmercapto, Pyridino, Carboxypyridino, Carbamoylpyridino oder eine Gruppe der allgemeinen Formel (7) oder (8) bedeuten 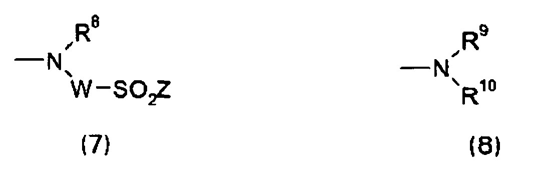 worin
   R⁸ Wasserstoff oder (C₁-C₈)-Alkyl, Sulfo-(C₁-C₈)-Alkyl oder Phenyl ist, das unsubstituiert oder durch (C₁-C₄)-Alkyl, (C₁-C₄-Alkoxy, Sulfo, Halogen, Carboxy, Acetamido, Ureido substituiert ist;
   R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁- C₆)-Alkyl ist;
   W ist Phenylen, das unsubstituiert oder substituiert ist durch 1 oder 2 Substituenten, wie (C₁-C₄)-Alkyl, (C₁- C₄)-Alkoxy, Carboxy, Sulfo, Chlor, Brom, oder ist (C₁- C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
   Z die obengenannte Bedeutung hat; oder
D, D¹, D², D³, D⁴ und D⁵ stehen unabhängig voneinander für eine Gruppe der allgemeinen Formel (9) 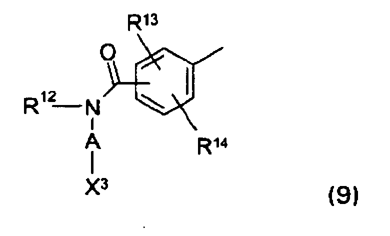
worin
- R¹²: Wasserstoff, (C₁-C₄)-Alkyl, Aryl oder ein substituierter Arylrest ist;
- R¹³ und R¹⁴: unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
- A: eine Phenylengruppe der allgemeinen Formel (10) ist 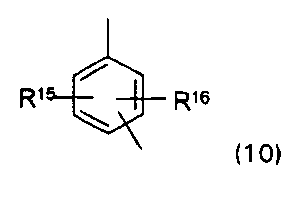 worin
R¹⁵ und R¹⁶ unabhängig voneinander Wasserstoff, (C₁-C₄)-Alkyl, (C₁- C₄)-Alkoxy, Hydroxy, Sulfo, Carboxy, Cyano, Nitro, Amido, Ureido oder Halogen bedeuten; oder
- A: ist eine Naphthylengruppe der allgemeinen Formel (11) 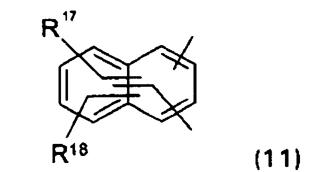 worin
R¹⁷ und R¹⁸ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
A ist eine Polymethylengruppe der allgemeinen Formel (12)

-(CR¹⁹R²⁰)ₖ- (12)

worin
k eine ganze Zahl größer 1 ist und
R¹⁹ und R²⁰ unabhängig voneinander Wasserstoff, (C₁-C₄)-Alkyl, (C₁-C₄)-Alkoxy, Hydroxy, Cyano, Amido, Halogen oder Aryl sind; und
X³ eine der Bedeutungen von X¹ hat; und
- R⁰: für eine Gruppe der allgemeinen Formel (4) oder (5) steht oder eine Gruppe der allgemeinen Formel (13) 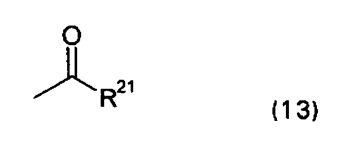
bedeutet, worin;
- R²¹: (C₁-C₆)-Alkyl, Sulfo-(C₁-C₆)-Alkyl, Carboxy-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist; und
- R²⁰⁰ und R²⁰¹: unabhängig voneinander Wasserstoff, (C₁-C₄ )-Alkyl, (C₁-C₄)- Alkoxy, -NH-COR⁸, -NH-CONH₂, -SO₃H, -COOH, -COOR^{b} bedeuten, wobei R^{a} und R^{b} für (C₁-C₄)-Alkyl oder gegebenenfalls substitutiertes Aryl stehen; und
- R*, R**: unabhängig voneinander Wasserstoff, (C₁-C₄)-Alkyl oder eine Gruppe der Formel (14) -CH₂-SO₃M (14) sind,
- b, f und v: unabhängig voneinander für 0 oder 1 stehen; und
- T: für Hydroxy oder NH₂ steht, wobei für T gleich NH₂ v für 0 steht; und
- M: Wasserstoff, ein Alkalimetall oder ein Äquivalent eines Erdalkalimetalls
bedeutet.

Die Farbstoffe der allgemeinen Formeln (1) - (IV) enthalten mindestens eine faserreaktive Gruppe der Formel -SO₂-Z oder -Z².

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl. Analoges gilt für (C₁-C₄)-Alkoxygruppen.

Für Substituenten R stehende Arylgruppen sind insbesondere die Phenylgruppe. Eine für R⁸ bis R¹⁰, R¹², R²¹ R^{a} oder R^{b} stehende substituierte Arylgruppe ist, insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe.

Für Substituenten R stehendes Halogen ist insbesondere Fluor, Chlor und Brom, wobei Fluor und Chlor bevorzugt sind.

Alkalisch eliminierbare Substituenten Z¹, die in ß-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.

Z ist bevorzugt Vinyl, ß-Chlorethyl und insbesondere bevorzugt ß-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) bis (IV) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I) bis (IV) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

Die Reste R²⁰⁰ und R²⁰¹ in der allgemeinen Formel (II) bedeuten unabhängig voneinander bevorzugt Wasserstoff, Methyl, Methoxy, Hydroxy, Acetylamino, Ureido, Sulfo, Carboxy, Amido oder Halogen, wobei Wasserstoff, Methyl, Methoxy, Acetylamino und Ureido besonders bevorzugt sind.

Die Reste R* und R** in der allgemeinen Formel (III) bedeuten unabhängig voneinander bevorzugt Wasserstoff, Methyl oder eine Gruppe der Formel (14), wobei Wasserstoff oder eine Gruppe der Formel (14) besonders bevorzugt sind. Die Reste R¹ und R² sind bevorzugt Wasserstoff, (C₁-C₄)-Alkylgruppen, (C₁-C₄)-Alkoxygruppen, Sulfo oder Carboxy und besonders bevorzugt Wasserstoff, Methyl, Methoxy oder Sulfo.

Die Reste R³ bis R⁶ und R¹² bis R²⁰ sind bevorzugt Wasserstoff, R³ bis R⁶, R¹⁷ und R¹⁸ sind außerdem bevorzugt Sulfo.

Die Reste R⁷ bis R¹⁰ sind bevorzugt Wasserstoff oder Methyl, R⁷ und R⁸ sind bevorzugt auch Phenyl und R⁹ und R¹⁰ sind bevorzugt 2-Sulfoethyl, 2-, 3- oder 4-Sulfophenyl oder R⁹ und R¹⁰ bilden ein cyclisches Ringsystem, das bevorzugt der Formel -(CH₂)₂-O-(CH₂)₂- entspricht.

Beispiele für Gruppen D bis D⁵ der allgemeinen Formel (1) und (2) sind 2-(ß-Sulfatoethylsulfonyl)-phenyl, 3-(ß-Sulfatoethylsulfonyl)-phenyl, 4-(ß-Sulfatoethylsulfonyl)-phenyl, 2-Carboxy-5-(ß-sulfatoethylsulfonyl)-phenyl, 2-Chlor-4-(ß-sulfatoethylsulfonyl)-phenyl, 2-Chlor-5-(ß-sulfatoethylsulfonyl)-phenyl, 2-Brom-4-(ß-sulfatoethylsulfonyl)-phenyl, 2-Sulfo-4-(ß-sulfatoethylsulfonyl)-phenyl, 2-Sulfo-5-(ß-sulfatoethylsulfonyl)-phenyl, 2-Methoxy-5-(ß-sulfatoethylsulfonyl)-phenyl, 2-Ethoxy-5-(ß-sulfatoethylsulfonyl)-phenyl, 2,5-Dimethoxy-4-(ß-sulfatoethylsulfonyl)-phenyl, 2-Methoxy-5-methyl-4-(ß-sulfatoethylsulfonyl)-phenyl, 2-Methyl-4-(ß-sulfatoethylsulfonyl)-phenyl, 2- oder 3- oder 4-(ß-Thiosulfatoethytsulfonyl)-phenyl, 2-Methoxy-5-(ß-thiosulfatoethylsulfonyl)-phenyl, 2-Sulfo-4-(ß-phosphatoethylsulfonyl)-phenyl, 2- oder 3- oder 4-Vinylsulfonyl-phenyl, 2-Sulfo-4-vinylsulfonyl-phenyl, 2-Chlor-4-(ß-chlorethylsulfonyl)-phenyl, 2-Chlor-5-(ß-chlorethylsulfonylyphenyl, 3- oder 4-(ß-Acetoxyethylsulfonyl)-phenyl, 6- oder 8-(ß-Sulfatoethylsulfonyl)-naphth-2-yl, 6-(ß-Sulfatoethylsulfonyl)-1-sulfo-naphth-2-yl und 8-(ß-Sulfatoethylsulfonyl)-6-sulfo-naphth-2-yl, hiervon bevorzugt sind 3-(ß-Sulfatoethylsulfonyl)-phenyl, 4-(ß-Sulfatoethylsulfonyl)-phenyl, 2-Sulfo-4-(ß-sulfatoethylsulfonyl)-phenyl, 2-Methoxy-5-(ß-sulfatoethylsulfonyl)-phenyl, 2,5-Dimethoxy-4-(ß-sulfatoethylsulfonyl)-phenyl, 2-Methoxy-5-methyl-4-(ß-sulfatoethylsulfonyl)-phenyl und 3- oder 4-Vinylsulfonyl-phenyl, oder D¹ bis D⁵ entsprechen einer Gruppe der allgemeinen Formeln (3) oder (9), wobei R⁵ bis R⁷ und R¹² bis R¹⁴ die oben beschriebenen bevorzugten Bedeutungen besitzen.

Im Falle, dass D bis D⁵ für eine Gruppe der allgemeinen Formel (1) und X¹ für - SO₂Z stehen, steht die SO₂Z-Gruppe bevorzugt in meta- oder para-Stellung zur Diazogruppe und im Falle, dass D bis D⁵ für eine Gruppe der allgemeinen Formel (2) steht, steht die Bindung, die zur Diazogruppe führt bevorzugt in ß-Stellung an den Naphthalinkern gebunden.

Im Falle, dass A für Phenylen und X³ für -SO₂Z stehen, steht die SO₂Z-Gruppe bevorzugt in meta- oder para-Stellung zum Stickstoffatom. In der Gruppe der allgemeinen Formel (9) steht die Carbonamid-Gruppe bevorzugt in para- oder meta-Position zur Diazogruppe. Im Falle, dass A für Naphthylen steht, steht die Bindung, die zum Stickstoffatom führt, bevorzugt in ß-Stellung an den Naphthalinkern gebunden.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen.

Besonders bevorzugt steht A für 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹² bevorzugt Phenyl und 2-Sulfophenyl bedeutet.

k bedeutet bevorzugt die Zahl 2 oder 3.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1 ,4-phenylen, 1,2-Ethylen, 1,3-Propylen.

Beispiele für die Gruppen Q¹ und Q² in der allgemeinen Formel (5) sind unabhängig voneinander Fluor, Chlor, Hydroxy, Methoxy, Ethoxy, Phenoxy, 3-Sulfophenoxy, 4-Sulfophenoxy, Methylmercapto, Cyanamido, Amino, Methylamino, Ethylamino, Morpholino, Piperidino, Phenylamino, Methylphenylamino, 2-Sulfophenylamino, 3-Sulfophenylamino, 4-Sulfophenylamino, 2,4-Disulfophenylamino, 2,5-Disulfophenylamino, 2-Sulfoethylamino, N-Methyl-2-sulfoethylamino, Pyridino, 3-Carboxypyridino, 4-Carboxypyridino, 3-Carbamoylpyridino, 4-Carbamoylpyridino, 2-(2-Sulfatoethylsulfonyl)-phenylamino, 3-(2-Sulfatoethylsulfonyl)-phenylamino, 4-(2-Sulfatoethylsulfonyl)-phenylamino, N-Ethyl-3-(2-sulfatoethylsulfonyl)-phenylamino, N-Ethyl-4-(2-sulfatoethylsulfonyl)-phenylamino, 2-Carboxy-5-(2-sulfatoethylsulfonyl)-phenylamino), 2-Chlor-4-(2-sulfatoethylsulfonyl)-phenylamino, 2-Chlor-5-(2-sulfatoethylsulfonyl)-phenylamino, 2-Brom-4-(2-sulfatoethylsulfonyl)-phenylamino, 2-Sulfo-4-(2-sulfatoethylsulfonyl)-phenylamino, 2-Sulfo-5-(2-sulfatoethylsulfonyl)-phenylamino, 2-Methoxy-5-(2-sulfatoethylsulfonyl)-phenylamino, 2,5-Dimethoxy-4-(2-sulfatoethylsulfonyl)-phenylamino, 2-Methoxy-5-methyl-4-(2-sulfatoethylsuffonyl)-phenylamino, 2-Methyl-4-(2-sulfatoethylsulfonyl)-phenylamino, 2-(Vinylsulfonyl)-phenylamino, 3-(Vinylsulfonyl)-phenylamino, 4-(Vinylsulfonyl)-phenylamino, N-Ethyl-3-(vinylsulfonyl)-phenylamino, N-Ethyl-4-(vinylsulfonyl)-phenylamino, 6-(2-Sulfatoethylsulfonyl)-naphth-2-ylamino, 8-(2-Sulfatoethylsulfonyl)-naphth-2-ylamino, 8-(2-Sulfatoethylsulfonyl)-6-sulfo-naphth-2-ylamino, 3-(2-(2-Sulfatoethylsulfonyl)-ethylcarbamoyl)-phenylamino, 4-(2-(2-Sulfatoethylsulfonyl)-ethylcarbamoyl)-phenylamino, 3-(2-(Vinylsulfonyl)-ethylcarbamoyl)-phenylamino, 4-(2-(2-Vinylsulfonyl)-ethylcarbamoyl)-phenylamino, 4-(N-Methyl-2-(2-sulfatoethylsulfonyl)-ethylcarbamoyl)-phenylamino, 4-(N-Phenyl-2-(2-sulfatoethylsulfonyl)-ethylcarbamoyl)-phenylamino, 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, 3-(2-Sulfatoethylsulfonyl)-propylamino, N-Methyl-N-(2-(2-sulfatoethylsulfonyl)-ethyl)-amino, N-Phenyl-N-(2-(2-sulfatoethylsulfonyl)-ethyl)-amino, N-Phenyl-N-(2-(2-sulfatoethylsulfonyl)-propyl)-amino.

Bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfaphenylamino, 4-Sulfophenylamino, N-Methyl-2-sulfoethylamino, 3-Carboxypyridino, 4-Carboxypyridino, 3-Carbamoylpyridino, 4-Carbamoylpyridino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, N-Methyl-N-(2-(2-sulfatoethylsulfonyl)-ethyl)-amino, N-Phenyl-N-(2-(2-sulfatoethylsulfonyl)-ethyl)-amino.

Besonders bevorzugt stehen die Gruppen Q¹ und Q² in der allgemeinen Formel (5) unabhängig voneinander für Fluor, Chlor, Cyanamido, Morpholino, 2-Sulfophenylamino, 3-Sulfophenylamino, 4-Sulfophenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), N-Methyl-N-(2-(2-sulfatoethylsulfonyl)-ethyl)-amino, N-Phenyl-N-(2-(2-sulfatoethylsulfonyl)-ethyl)-amino.

Beispiele für die Gruppe Z² sind 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluor-pyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlor-pyrimidin-6-yl, oder eine Gruppe der allgemeinen Formel (5) mit den oben angegebenen Beispielen für Q¹ und Q² oder eine Gruppe der allgemeinen Formel (6).

Bevorzugt bedeutet Z² 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl oder eine Gruppe der allgemeinen Formel (5) mit den oben angegebenen bevorzugten Gruppen Q¹ und Q².

Besonders bevorzugt steht Z² für 2,4-Difluor-pyrimidin-6-yl, 5-Chlor-2,4-difluor-pyrimidin-6-yl oder für eine Gruppe der allgemeinen Formel (5) mit den oben angegebenen besonders bevorzugten Gruppen Q¹ und Q².

In Formel (IV) steht T bevorzugt für Hydroxy oder Amino, in α-Position an den Naphthalinkern gebunden, wobei Hydroxy besonders bevorzugt ist.

b und v stehen bevorzugt für 1 und f für 0.

R⁰ steht besonders bevorzugt für Acetyl, 2,4-Dichlor-1,3,5-triazin-6-yl oder 2,4-Difluor-pyrimidin-6-yl.

Die erfindungsgemäßen Farbstoffmischungen enthalten Bisazofarbstoffe der allgemeinen Formel (I) in einer Menge von 30 bis 95 Gew.-%, bevorzugt 50 bis 90 Gew.-% und Farbstoffe der allgemeinen Formel (II) und gegebenenfalls (III) und/ oder (IV) unabhängig voneinander jeweils in einer Menge von 1 bis 70 Gew.-%, bevorzugt 5 bis 50 Gew.-%.

Optional können die erfindungsgemäßen Farbstoffmischungen außerdem einen oder mehrere Monoazofarbstoffe der allgemeinen Formeln (15) bis (18) in einer Menge bis zu 10 Gew.-%, bevorzugt bis zu 5 Gew.-%, enthalten, 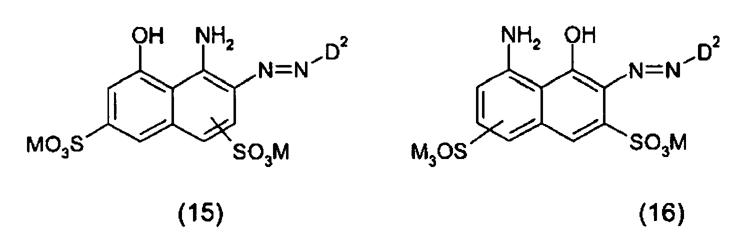 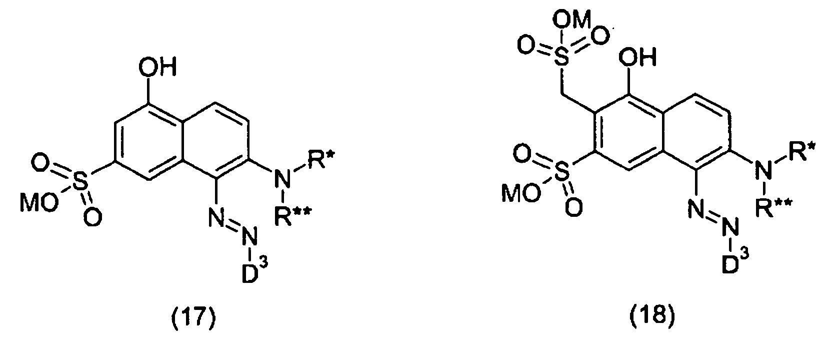 wobei D², D³, M, R* und R** die oben genannten Bedeutungen haben.

Bevorzugt stehen D² und D³ unabhängig voneinander für 3-(ß-Sulfatoethylsulfonyl)-phenyl, 4-(ß-Sulfatoethylsulfonyl)-phenyl, 2-Sulfo-4-(ß-sulfatoethylsulfonyl)-phenyl, 2-Methoxy-5-(ß-sulfatoethylsulfonyl)-phenyl, 2,5-Dimethoxy-4-(ß-sulfatoethylsulfonyl)-phenyl, 2-Methoxy-5-methyl-4-(ß-sulfatoethylsulfonyl)-phenyl, 3- oder 4-Vinylsulfonyl-phenyl, 2-Sulfo-4-(vinylsulfonyl)-phenyl, 2-Methoxy-5-(vinylsulfonyl)-phenyl, 2,5-Dimethoxy-4-(vinylsulfonyl)-phenyl oder 2-Methoxy-5-methyl-4-(vinylsulfonyl)-phenyl.

Bevorzugte Farbstoffmischungen enthalten einen oder mehrere, wie zwei oder drei, bevorzugt 1 oder 2 Farbstoffe der angegebenen und definierten allgemeinen Formel (l), 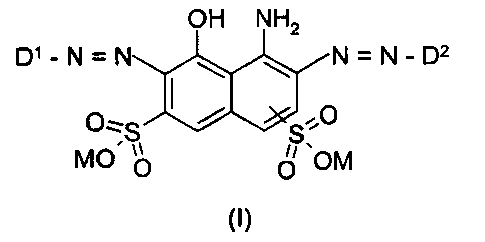 und einen oder mehrere, wie zwei oder drei, bevorzugt 1 oder 2, Farbstoffe der nachstehend angegebenen und definierten allgemeinen Formel (II) 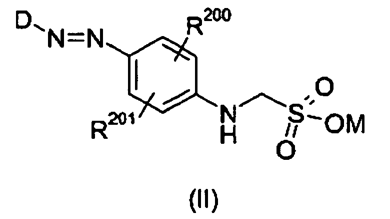 in welchen D¹, D², D, R²⁰⁰, R²⁰¹ und M die oben genannten Bedeutungen haben.

Weiterhin sind bevorzugte Farbstoffmischungen solche, die einen oder mehrere, wie zwei oder drei, bevorzugt 1 oder 2, Farbstoffe der nachstehend angegebenen und definierten allgemeinen Formel (I), 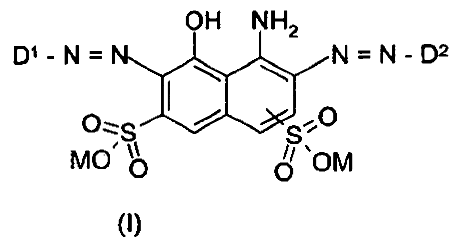 einen oder mehrere, wie zwei oder drei, bevorzugt 1 oder 2, Farbstoffe der nachstehend angegebenen und definierten allgemeinen Formel (II) 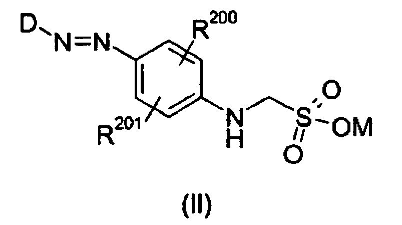 und einen oder mehrere Farbstoffe der nachstehend angegebenen und definierten allgemeinen Formel (III) 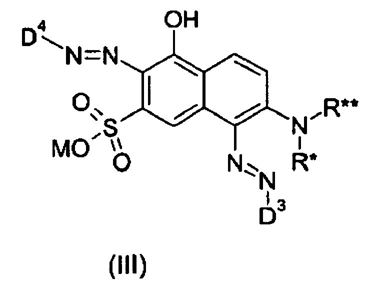 enthalten, in welchen D¹, D², D³, D⁴, D, R²⁰⁰, R²⁰¹, R*, R** und M die oben genannten Bedeutungen haben.

Weiterhin enthalten bevorzugte Mischungen einen oder mehrere Farbstoffe der allgemeinen Formel (I) 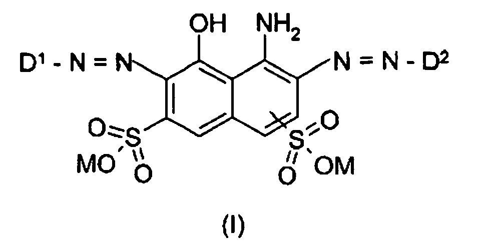 einen oder mehrere, wie zwei oder drei, bevorzugt 1 oder 2, Farbstoffe der nachstehend angegebenen und definierten allgemeinen Formel (II) 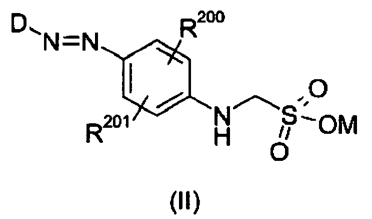 und einen oder mehrere Farbstoffe der nachstehend angegebenen und definierten allgemeinen Formel (IV), 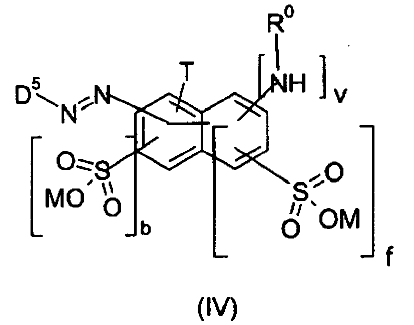 in welchen D¹, D², D⁵, D, R²⁰⁰, R²⁰¹, R⁰, T, b, f, v und M die oben genannten Bedeutungen haben.

Weiterhin enthalten bevorzugte Mischungen einen oder mehrere Farbstoffe der allgemeinen Formel (I), 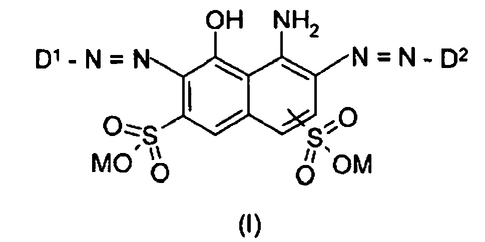 worin D¹, D² und M die oben genannten Bedeutungen haben,
einen oder mehrere, wie zwei oder drei, bevorzugt 1 oder 2, Farbstoffe der nachstehend angegebenen und definierten allgemeinen Formel (II) 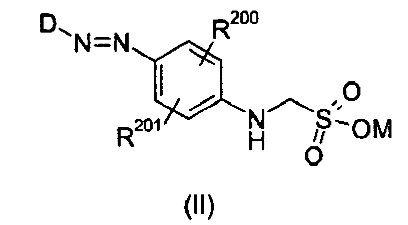 worin D, R²⁰⁰, R²⁰¹ und M die oben genannten Bedeutungen haben, sowie einen oder mehrere Farbstoffe der allgemeinen Formel (III) 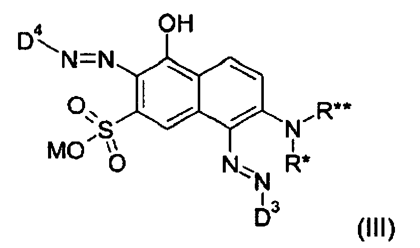 worin D³, D⁴, R*, R** und M die oben genannten Bedeutungen haben, sowie einen oder mehrere Farbstoffe der allgemeinen Formel (IV) 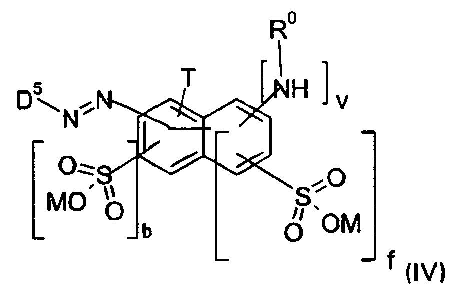 worin D⁵, R⁰, T, M, b, f, und v die oben genannten Bedeutungen haben.

Weitere bevorzugte Farbstoffmischungen enthalten einen oder mehrere, wie zwei oder drei, bevorzugt 1 oder 2, Farbstoffe der nachstehend angegebenen und definierten allgemeinen Formel (I), 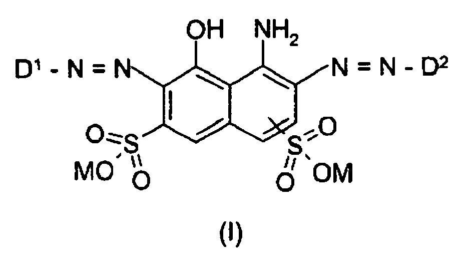 einen oder mehrere, wie zwei oder drei, bevorzugt 1 oder 2, Farbstoffe der nachstehend angegebenen und definierten allgemeinen Formel (II) 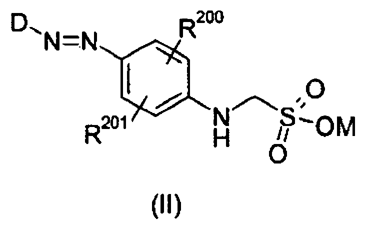 und einen oder mehrere, wie zwei oder drei, bevorzugt 1 oder 2, Farbstoffe der nachstehend angegebenen und definierten allgemeinen Formel (III-a) 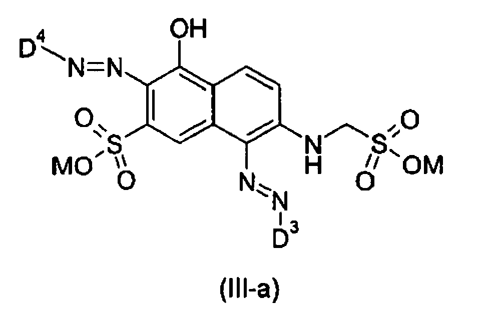 worin
D¹, D², D³, D⁴, D, R²⁰⁰, R²⁰¹ und M die oben angegebenen Bedeutungen haben. Besonders bevorzugt stehen D¹, D², D³, D⁴ und D unabhängig voneinander für 3-(ß-Sulfatoethylsulfonyl)-phenyl, 4-(ß-Sulfatoethylsulfonyl)-phenyl, 2-Sulfo-4-(ß-sulfatoethylsulfonyl)-phenyl, 2-Methoxy-5-(ß-sulfatoethylsulfonyly-phenyl, 2,5-Dimethoxy-4-(ß-sulfatoethylsulfonyl)-phenyl, 2-Methoxy-5-methyl-4-(ß-sulfatoethylsulfonyl)-phenyl, 3- oder 4-Vinylsulfonyl-phenyl, 2-Sulfo-4-(vinylsulfonyl)-phenyl, 2-Methoxy-5-(vinylsulfonyl)-phenyl, 2,5-Dimethoxy-4-(vinylsulfonyl)-phenyl oder 2-Methoxy-5-methyl-4-(vinylsulfonyl)-phenyl.

Weiterhin enthalten bevorzugte Mischungen einen oder mehrere Farbstoffe der allgemeinen Formel (I) 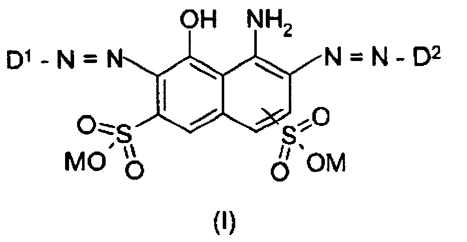 einen oder mehrere, wie zwei oder drei, bevorzugt 1 oder 2, Farbstoffe der nachstehend angegebenen und definierten allgemeinen Formel (II) 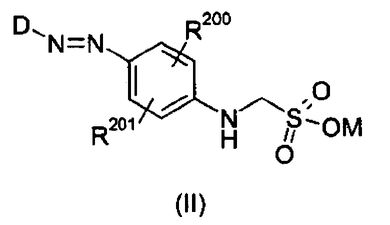 und einen oder mehrere Farbstoffe der nachstehend angegebenen und definierten allgemeinen Formel (IV-a), 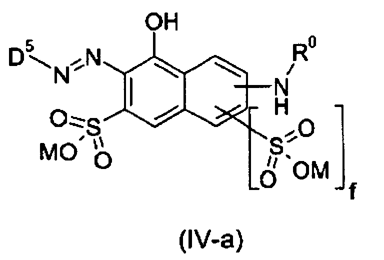 in welchen D¹, D², D⁵, D, R²⁰⁰, R²⁰¹, R⁰, f und M die oben genannten Bedeutungen haben.

Besonders bevorzugte erfindungsgemäße Reaktivfarbstoffmischungen sind dadurch gekennzeichnet, dass sie mindestens einen Farbstoff der allgemeinen Formel (I-b) 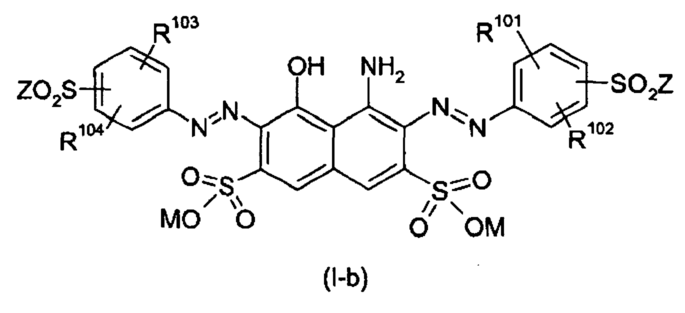 und mindestens einen Farbstoff der allgemeinen Formel (II-a) 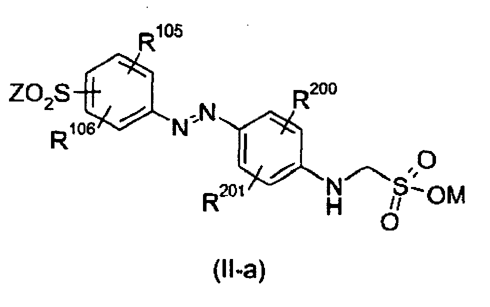 enthalten, wobei in den allgemeinen Formeln (I-b) und (II-a) R¹⁰¹ bis R¹⁰⁶ bevorzugt unabhängig voneinander für Wasserstoff, C₁-C₄-Alkyl, C₁-C₄-Alkoxy, Sulfo, Carboxy oder Halogen stehen. In Formel (II-a) haben R²⁰⁰ und R²⁰¹ unabhängig voneinander eine der oben angegebenen Bedeutungen und Z steht in Formel (I-b) und (II-a) für Vinyl oder ß-Sulfatoethyl.

Auch sind weitere bevorzugte Farbstoffmischungen solche, die mindestens einen Farbstoff der allgemeinen Formel (I-b), 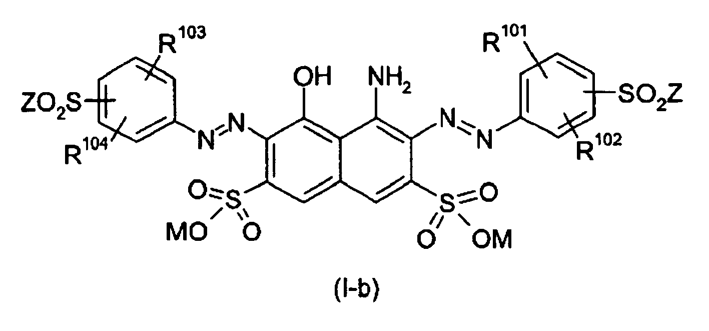 mindestens einen Farbstoff der allgemeinen Formel (II-a) 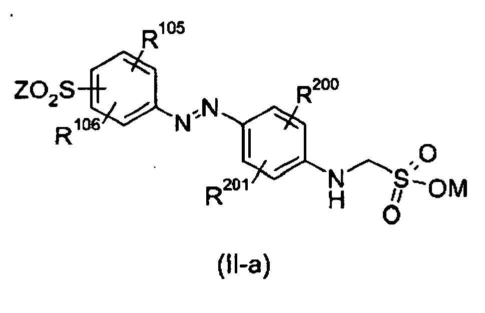 und mindestens einen Farbstoff der allgemeinen Formel (III-b) 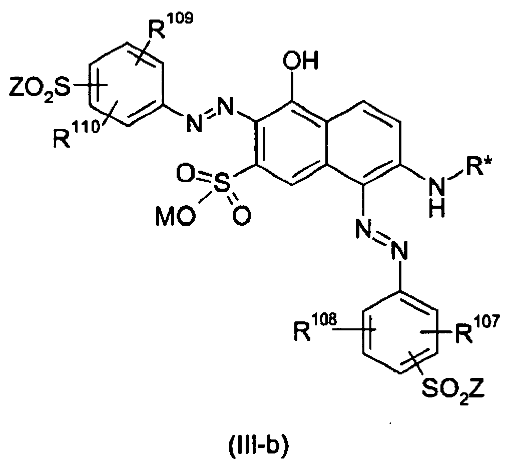 enthalten, worin M, Z, R²⁰⁰, R²⁰¹ und R* wie oben angegeben, definiert sind und R¹⁰¹ bis R¹¹⁰ unabhängig voneinander für Wasserstoff, Methyl, Methoxy oder Sulfo stehen.

Weitere besonders bevorzugte erfindungsgemäße Mischungen enthalten einen oder mehrere Farbstoffe der allgemeinen Formel (I-b), 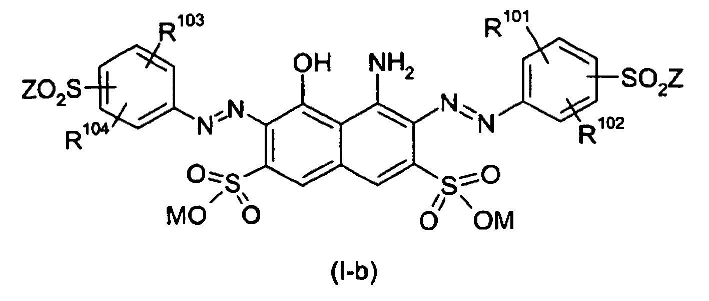 mindestens einen Farbstoff der allgemeinen Formel (II-a) 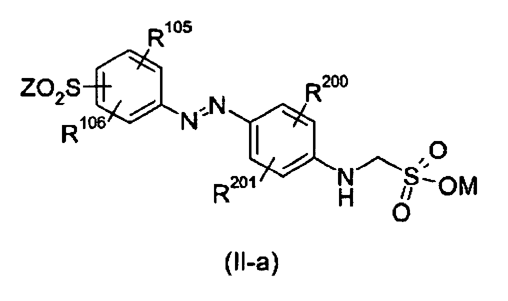 und einen oder mehrere Farbstoffe der allgemeinen Formel (III-c)

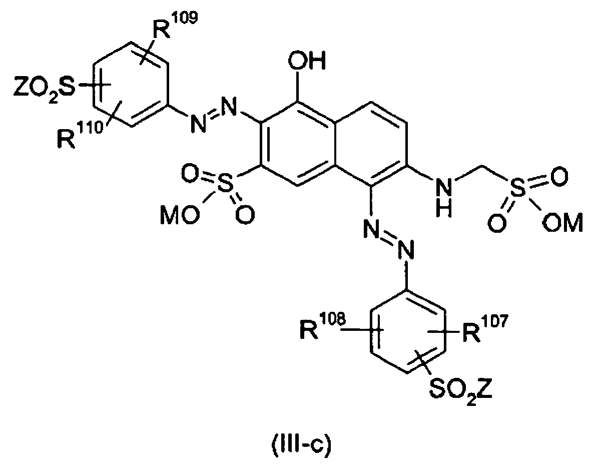

In den allgemeinen Formeln (I-b), (II-a) und (III-c) haben M und Z die obengenannten Bedeutungen.

In den allgemeinen Formeln (I-b), (II-a) und (III-c) stehen R¹⁰¹ bis R¹¹⁰ unabhängig voneinander bevorzugt für Wasserstoff, C₁-C₄-Alkyl, C₁-C₄-Alkoxy, Sulfo, Carboxy oder Halogen und Z für Vinyl oder ß-Sulfatoethyl, ganz besonders bevorzugt sind in den Formeln (I-b), (II-a) und (III-c) R¹⁰¹ bis R¹¹⁰ unabhängig voneinander Wasserstoff, Methyl, Methoxy oder Sulfo und Z Vinyl oder ß-Sulfatoethyl.

In der allgemeinen Formel (II-a) haben R²⁰⁰ und R²⁰¹ eine der obengenannten Bedeutungen.

Außerdem sind bevorzugte Farbstoffmischungen solche, die mindestens einen Farbstoff der allgemeinen Formel (I-b), 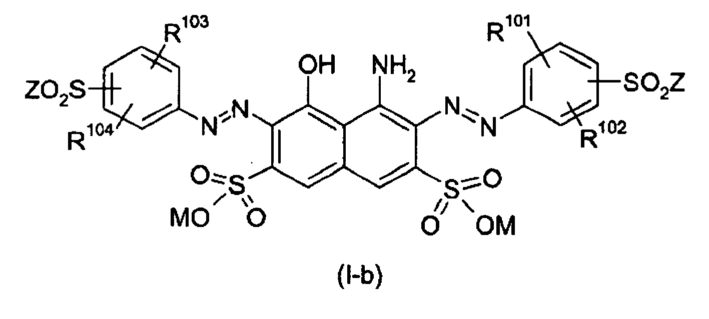 mindestens einen Farbstoff der allgemeinen Formel (II-a) 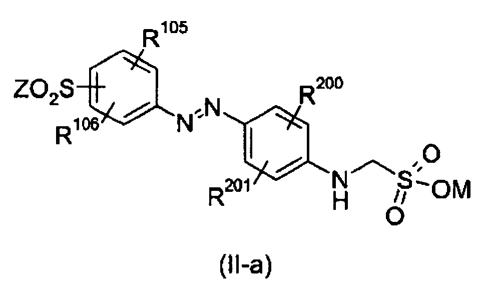 und mindestens einen Farbstoff der allgemeinen Formel (IV-b) 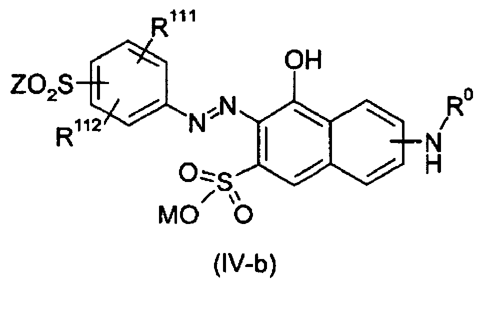 enthalten, worin M, Z, R²⁰⁰, R²⁰¹ und R⁰ wie oben angegeben, definiert sind und R¹⁰¹ bis R¹⁰⁶ und R¹¹¹ und R¹¹² unabhängig voneinander für Wasserstoff, Methyl, Methoxy oder Sulfo stehen.

Weitere bevorzugte Farbstoffmischungen enthalten mindestens einen Farbstoff der allgemeinen Formel (I-b), 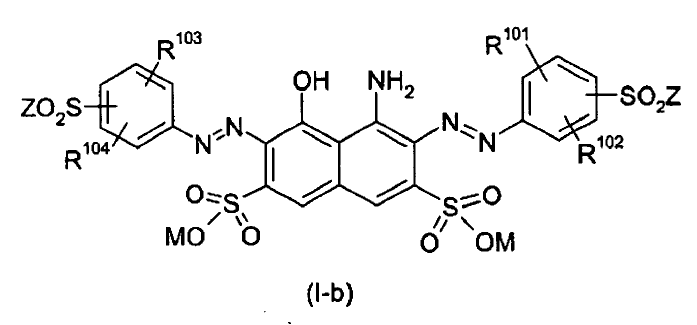 mindestens einen Farbstoff der allgemeinen Formel (II-a) 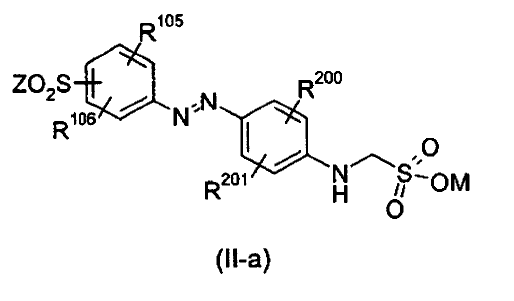 und mindestens einen Farbstoff der allgemeinen Formel (IV-c), 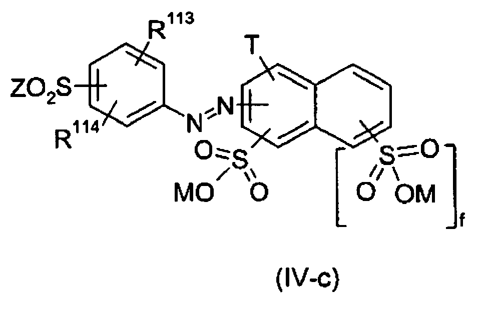 worin M, Z, R²⁰⁰, R²⁰¹, T und f wie oben angegeben, definiert sind, sowie R¹⁰¹ bis R¹⁰⁶ und R¹¹³ und R¹¹⁴ unabhängig voneinander für Wasserstoff, Methyl, Methoxy oder Sulfo stehen.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, außerdem Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 20 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, so beträgt der Gesamtfarbstoffgehalt in diesen wäßrigen Lösungen bis zu etwa 50 Gew.-%, wie beispielsweise zwischen 5 und 50 Ges.-%, wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Farbstoffe der allgemeinen Formel (I) sind zahlreich in der Literatur beschrieben und beispielsweise aus der U.S.-Patentschrift 2 657 205 und aus der japanischen Patentanmeldungs-Veröffentlichung Sho-58-160 362 sowie aus der U.S.-Patentschrift 4 257 770 und der dort genannten Literatur bekannt, Farbstoffe der allgemeinen Formel (II) sind aus DE 3614045 bekannt und Farbstoffe der allgemeinen Formel (III) sind in DE 196 00 765 A1 beschrieben. Farbstoffe der allgemeinen Formel (IV) sind ebenfalls zahlreich beschrieben und über Standardsynthesemethoden zugänglich. Farbstoffe der allgemeinen Formeln (15) bis (18) werden teilweise während der Synthese von Farbstoffen der allgemeinen Formeln (I) und (III) gebildet und sind ebenfalls über Standardsynthesemethoden zugänglich. Farbstoffe der allgemeinen Formeln (15) und (16) werden üblicherweise als Nuancierkomponenten eingesetzt.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen. Beispielsweise kann, wenn die Diazokomponenten mit den Gruppen D¹, D⁴, D⁵ und D gemäß den allgemeinen Formeln (I) und (II) sowie ggf. (III) und/oder (IV) gleiche Bedeutung besitzen (D¹ = D⁴ = D⁵ = D), ein Amin der allgemeinen Formel (19)

D¹ - NH₂ (19),

worin D¹ wie oben angegeben definiert ist, in üblicher Weise diazotiert und die erhaltene Diazoniumverbindung anschließend mit einer wässrigen Lösung oder Suspension einer Mischung mit festgelegtem Verhältnis eines Monoazofarbstoffs
gemäß der allgemeinen Formel (15), und einer Kupplungskomponente der allgemeinen Formel (24), 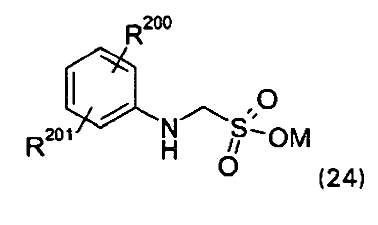 worin R²⁰⁰, R²⁰¹ und M wie oben angegeben definiert sind sowie ggf. einem Monoazofarbstoff gemäß der allgemeinen Formel (17) und/oder einer Kupplungskomponente der allgemeinen Formel (20) 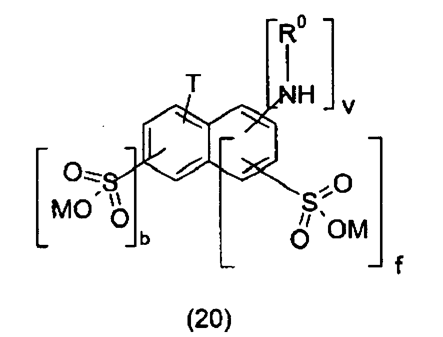 worin T, R⁰, M, b, f und v wie oben angegeben definiert sind, umgesetzt werden.

Für den Fall, daß die Gruppen D² und D³ sowie D¹, D⁴, D⁵ und D gemäß den allgemeinen Formeln (I) und (II) sowie ggf. (III) und/oder (IV) gleiche Bedeutung besitzen (D² = D³ und D¹ = D⁴ = D⁵ = D), kann die erfindungsgemäße Farbstoffmischung hergestellt werden, indem man ein Amin der allgemeinen Formel (21),

D² - NH₂ (21),

worin D² wie oben angegeben definiert ist, in üblicher Weise diazotiert und auf eine Kupplungskomponente der allgemeinen Formel (22) sowie ggf. (23) 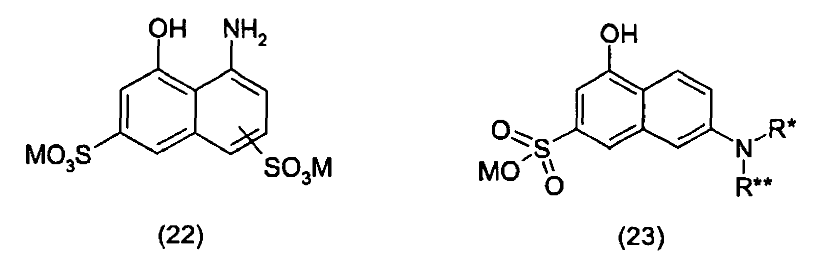 worin M, R* und R** wie oben angegeben definiert sind, bei einem pH-Wert unterhalb von 3 in erster Stufe kuppelt, die erhaltene Reaktionsmischung mit einer weiteren Kupplungskomponente der allgemeinen Formel (24) und ggf. (20) versetzt und anschließend ein Amin der allgemeinen Formel (19) diazotiert und mit der erhaltenen Mischung der Monoazofarbstoffe der allgemeinen Formeln (15) und ggf. (17) sowie der Kupplungskomponente der allgemeinen Formel (24) und ggf. (20) kuppelt.

Alternativ kann die erfindungsgemäße Farbstoffmischung für den Fall, daß die Gruppen D bis D⁵ gemäß den allgemeinen Formeln (I) und (II) sowie ggf. (III) und/oder (IV) gleiche Bedeutung besitzen (D¹ = D² = D³ = D⁴ = D⁵ = D), hergestellt werden, indem man ein Amin der allgemeinen Formel (19) in üblicher Weise diazotiert und auf eine Mischung mit festgelegtem Verhältnis der Kupplungskomponenten der allgemeinen Formeln (22) und (24) sowie ggf. (23) und/oder (20) zuerst bei einem pH-Wert unterhalb von 3 in erster Stufe zu einer Mischung der Monoazofarbstoffe der allgemeinen Formeln (15) und ggf. (17) sowie der Kupplungskomponente der allgemeinen Formel (24) und ggf. (20) kuppelt, und daran anschließend durch Erhöhung des pH-Wertes die Zweitkupplung zur Mischung der Farbstoffe der allgemeinen Formeln (I) und (II) sowie ggf. (III) und/oder (IV) durchführt.

Die erfindungsgemäße Farbstoffmischung wird in an und für sich bekannter Weise durch Aussalzen beispielsweise mit Kochsalz oder Kaliumchlorid oder durch Sprühtrocknung bzw. Eindampfen isoliert.

Farbstoffmischungen die neben ß-Chloroethylsulfonyl oder ß-Thiosulfatoethylsulfonyl oder ß-Sulfatoethylsulfonyl-Gruppen auch Vinylsulfonylgruppen als reaktive Reste haben, können nicht nur ausgehend von entsprechend substituierten Vinylsulfonyl-Anilinen oder Naphthylaminen synthetisiert werden, sondern auch durch Umsetzung einer Farbstoffmischung, worin Z für ß-Chloroethyl, ß-Thiosulfatoethyl, oder ß-Sulfatoethyl steht, mit einer für den gewünschten Anteil erforderlichen Menge an Alkali und Überführung der genannten ß-substituierten Ethylsulfonylgruppen in Vinylsulfonylgruppen erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy- und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet. Auch können die bei der Synthese anfallenden Lösungen der erfindungsgemäßen Farbstoffmischungen, gegebenenfalls nach Zusatz einer Puffersubstanz, gegebenenfalls auch nach Aufkonzentrieren oder Verdünnen, direkt als Flüssigpräparation der färberischen Verwendung zugeführt werden.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in WO 96/37641 und WO 96/37642 sowie in EP-A-0 538 785 und EP-A-0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, beispielsweise im Verhältnis Ware zu Flotte von 1 : 5 bis 1 : 100, bevorzugt 1 : 6 bis 1 : 30, unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondee 45 bis 65°C und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Weiterhin betrifft die vorliegende Erfindung die Verwendung der erfindungsgemäßen Farbstoffmischungen in Drucktinten für den digitalen Textildruck nach dem Ink-Jet Verfahren.

Die erfindungsgemäßen Drucktinten enthalten einen oder mehrere der genannten Reaktivfarbstoffe, beispielsweise in Mengen von 0,1 Gew.-% bis 50 Gew.-%, bevorzugt in Mengen von 1 Gew.-% bis 30 Gew.-% und besonders bevorzugt in Mengen von 1 Gew.-% bis 15 Gew.-% bezogen auf das Gesamtgewicht der Tinte. Ebenfalls enthalten sein können Kombinationen der genannten Reaktivfarbstoffe mit anderen Reaktivfarbstoffen, die im Textildruck Verwendung finden. Für den Einsatz der Tinten im Continuous flow Verfahren kann durch Elektrolytzusatz eine Leitfähigkeit von 0,5 bis 25 mS/m eingestellt werden. Als Elektrolyt eignen sich beispielsweise : Lithiumnitrat, Kaliumnitrat. Die erfindungsgemäßen Farbstofftinten können organische Lösungsmittel mit einem Gesamtgehalt von 1-50%, bevorzugt von 5-30 Ges.-% enthalten. Geeignete organische Lösungsmittel sind beispielsweise Alkohole, z. B.: Methanol, Ethanol, 1-Propanol, Isopropanol, 1-Butanol, tert. Butanol, Pentylalkohol, mehrwertige Alkohole z. B.: 1,2-Ethandiol, 1,2,3-Propantriol, Butandiol, 1,3- Butandiol, 1,4-Butandiol, 1,2-Propandiol, 1,3-Propandiol, Pentandiol, 1,4-Pentandiol, 1,5-Pentandiol, Hexandiol, D,L-1,2-Hexandiol, 1,6-Hexandiol, 1,2,6-Hexantriol, 1,2-Octandiol, Polyalkylenglykole, z. B.: Polyethylenglykol, Polypropylenglykol, Alkylenglykole mit 2 bis 8 Alkylengruppen, z. B.: Monoethylenglykol, Diethylenglykol, Triethylenglykol, Tetraethylenglykol, Thioglykol, Thiodiglykol, Butyltriglykol, Hexylenglykol, Propylenglykol, Dipropylenglykol, Tripropylenglykol, niedrige Alkylether mehrwertiger Alkohole, z. B.: Ethylenglykolmonomethylether, Ethylenglykolmonoethylether, Ethylenglykolmonobutylether, Diethylenglykolmonomethylether, Diethylenglykolmonoethylether, Diethylenglykolmonobutylether, Diethylenglykolmonohexylether, Triethylenglykolmonomethylether, Triethylenglykolmonobutylether, Tripropylenglykolmonomethylether, Tetraethylenglykolmonomethylether, Tetraethylenglykolmonobutylether, Tetraethylenglykoldimethylether, Propylenglykolmonomethylether, Propylenglykolmonoethylether, Propylenglykolmonobutylether, Tripropylenglykolisopropylether, Polyalkylenglykolether, wie z. B.: Polyethylenglokolmonomethylether, Polypropylenglykolglycerolether, Polyethylenglykoltridecylether, Polyethylenglykolnonylphenylether, Amine, wie z. B.: Methylamin, Ethylamin, Diethylamin,Triethylamin, Dimethylamin, Trimethylamin, Dibutylamin, Diethanolamin, Triethanolamin, N-Acetylethanolamin, N-Formylethanolamin, Ethylendiamin, Harnstoffderivate, wie z. B.: Harnstoff, Thioharnstoff, N-Methylharnstoff, N,N'-Dimethylharnstoff, Ethylenharnstoff, 1,1,3,3-Tetramethylharnstoff, Amide, wie z. B.: Dimethylformamid, Dimethylacetamid, Acetamid, Ketone oder Ketoalkohole, wie z. B.: Aceton, Diacetonalkohol, cyclische Ether, wie z. B.; Tetrahydrofuran, Dioxan, Trimethylolethan, Trimethylolpropan, 2- Butoxyethanol, Benzylalkohol, Gammabutyrolacton, epsilon -Caprolactam, ferner Sulfolan, Dimethylsulfolan, Methylsulfolan, Dimethylsulfon, Butadiensulfon, Dimethylsulfoxid, Dibutylsulfoxid, N-Cyclohexyl-Pyrrolidon, N-Methyl-2-pyrrolidon, N-Ethyl-pyrrolidon, 2-Pyrrolidon, 1-(2-Hydroxyethyl)-2-pyrrolidon, 1-(3-Hydroxypropyl)-2-pyrrolidon, 1,3-Dimethyl-2-imidazolidinon, 1,3-Dimethyl-2-imidazolinon, 1,3-Bismethoxymethylimidazolidin, 2-(2- Methoxyethoxy)ethanol, 2-(2-Ethoxyethoxy)ethanol, 2-(2-Butoxyethoxy)ethanol, 2- (2-Propoxyethoxy)ethanol, Pyridin, Piperidin, Trimethoxypropan, 1,2- Dimethoxypropan, Ethylacetat, Ethylendiamintetraacetat, Ethylpentylether.

Weiterhin können die erfindungsgemäßen Drucktinten die üblichen Zusatzstoffe enthalten, wie beispielsweise Viskositätsmoderatoren um Viskositäten im Bereich von 1,5 bis 40,0 mPas in einem Temperaturbereich von 20 bis 50°C einzustellen. Bevorzugte Tinten haben eine Viskosität von 1,5 bis 20 mPas und besonders bevorzugte Tinten haben eine Viskosität von 1,5 bis 15 mPas. Als Viskositätsmoderatoren eignen sich rheologische Additive beispielsweise: Polyvinylcaprolactam, Polyvinylpyrrolidon sowie deren Co-Polymere Polyetherpolyol, Assoziatiwerdicker, Polyharnstoff, Polyurethan, Natriumalginate, modifizierte Galaktomannane, Polyetherhamstoff, Polyurethan, nichtionogene Celluloseether. Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.

Als oberflächenaktive Substanzen eignen sich beispielsweise : Tenside aller Art, bevorzugt nichtionogene Tenside, Butyldiglykol, 1,2 Hexandiol.

Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die Tinten können in üblicher Weise durch Mischen der Komponenten in Wasser hergestellt werden.

Die erfindungsgemäßen Farbstofftinten eignen sich für den Einsatz in Tintenstrahldruckverfahren zum Bedrucken der verschiedensten vorpräparierten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die erfindungsgemäßen Drucktinten sind auch zum Bedrucken von vorbehandelten hydroxygruppenhaltigen bzw. aminogruppenhaltigen Fasern geeignet, die in Mischgeweben enthalten sind, z. B. von Gemischen aus Baumwolle, Seide, Wolle mit Polyesterfasern oder Polyamidfasern.

Im Gegensatz zum konventionellen Textildruck, bei dem die Druckfarbe bereits sämtliche Fixierchemikalien und Verdickungsmittel für einen Reaktivfarbstoff enthält, müssen beim Ink-Jet-Druck die Hilfsmittel in einem separaten Vorbehandlungsschritt auf das textile Substrat aufgebracht werden.

Die Vorbehandlung des textilen Substrates, wie zum Beispiel Cellulose- und Celluloseregeneratfasem sowie Seide und Wolle - erfolgt vor dem Bedrucken mit einer wässrigen alkalischen Flotte. Zur Fixierung von Reaktivfarbstoffen benötigt man Alkali, beispielsweise Natriumcarbonat, Natriumbicarbonat, Natriumacetat, Trinatriumphosphat, Natriumsilikat, Natriumhydroxid, Alkalispender wie zum Beispiel Natriumchloracetat, Natriumformiat, hydrotrope Substanzen wie zum Beispiel Harnstoff, Reduktionsinhibitoren, wie zum Beispiel Natriumnitrobenzolsulfonate, sowie Verdickungsmittel, die das Fliessen der Motive beim Aufbringen der Druckfarbe verhindern, dies sind beispielsweise Natriumalginate, modifizierte Polyacrylate oder hochveretherte Galaktomannane.

Diese Reagenzien zur Vorpräparierung werden mit geeigneten Auftragsgeräten, beispielsweise mit einem 2- oder 3-Walzenfoulard, mit berührungslosen Sprühtechnologien, mittels Schaumauftrag oder mit entsprechend angepassten Ink-Jet Technologien in definierter Menge gleichmäßig auf das textile Substrat aufgebracht und anschließend getrocknet.

Nach dem Bedrucken wird das textile Fasermaterial bei 120 bis 150°C getrocknet und anschließend fixiert.

Die Fixierung der mit Reaktivfarbstoffen hergestellten Ink-Jet-Drucke kann erfolgen bei Raumtemperatur, oder mit Sattdampf, mit überhitztem Dampf, mit Heißluft, mit Mikrowellen, mit Infrarotstrahlung, mit Laser- oder Elektronenstrahlen oder mit anderen geeigneten Energieübertragungsarten.

Man unterscheidet ein- und zweiphasige Fixierungsprozesse:

Bei der einphasigen Fixierung befinden sich die zur Fixierung notwendigen Chemikalien bereits auf dem textilen Substrat.

Bei der zweiphasigen Fixierung kann diese Vorbehandlung unterbleiben. Zur Fixierung wird nur Alkali benötigt, das nach dem Ink-Jet-Druck vor dem Fixierprozess ohne Zwischentrocknung aufgebracht wird. Auf weitere Zusätze wie Harnstoff oder Verdickungsmittel kann verzichtet werden.

Im Anschluss an die Fixierung wird die Drucknachbehandlung durchgeführt, die die Voraussetzung für gute Echtheiten, hohe Brillanz und einen einwandfreien Weißfond ist.

Die erfindungsgemäßen Farbstoffmischungen zeichnen sich auf den Cellulosefasermaterialien bei Anwendung in den Färbe- und Druckverfahren durch eine hervorragende Farbstärke aus, die teilweise auch in Gegenwart keiner oder nur sehr geringer Alkali- oder Erdalkaliverbindungen erreicht werden kann. In diesen speziellen Fällen benötigt man beispielsweise für eine geringe Farbtiefe kein Elektrolytsalz, für eine mittlere Farbtiefe nicht mehr als 5 g/l an Elektrolytsalz und für große Farbtiefen nicht mehr als 10 g/l an Elektrolytsalz. Eine geringe Farbtiefe bezeichnet hierbei den Einsatz von 2 Gew.-% Farbstoff bezogen auf das zu färbende Substrat, eine mittlere Farbtiefe bezeichnet den Einsatz von 2 bis 4 Gew.-% Farbstoff bezogen auf das zu färbende Substrat und eine große Farbtiefe bezeichnet den Einsatz von 4 bis 10-Gew.-% Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des Weiteren können die erfindungsgemäßen Farbstoffmischungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Badeingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Dadie Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, marineblaue bis tiefschwarze Färbungen mit sehr guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen, insbesondere Tabellenbeispielen, genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

70 Teile eines elektrolythaltigen Farbstoffpulvers, das den marineblauen Disazofarbstoff der Formel (I-1) 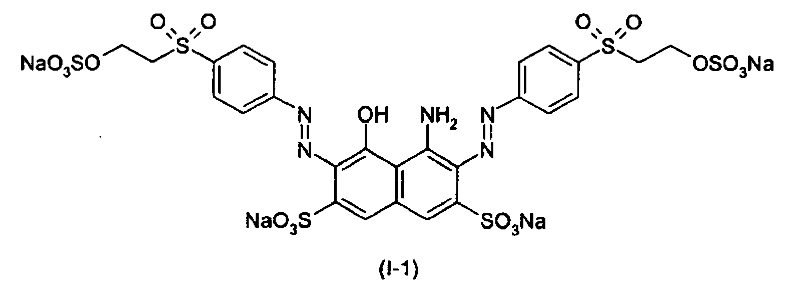 in 75%-igem Anteil enthält, 15 Teile eines elektrolythaltigen Farbstoffpulvers, das den gelben Azofarbstoff der Formel (II-1) 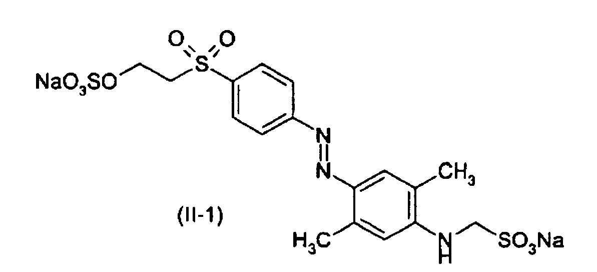 in 75%-igem Anteil enthält und 15 Teile eines elektrolythaltigen Farbstoffpulvers, das den orangegelben Azofarbstoff der Formel (II-7) 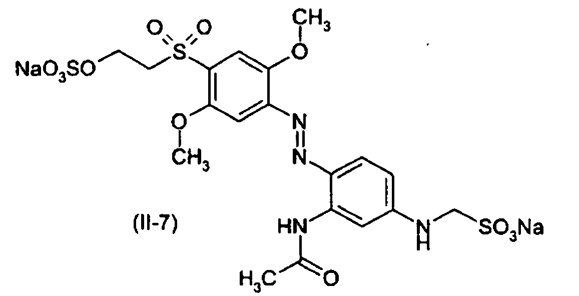 in 70%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, grünstichig-schwarze Färbungen und Drucke.

### Beispiel 2

70 Teile eines elektrolythaltigen Farbstoffpulvers, das den marineblauen Disazofarbstoff der Formel (I-1) in 75%-igem Anteil enthält und 30 Teile eines elektrolythaltigen Farbstoffpulvers, das den orangegelben Disazofarbstoff der Formel (II-10) 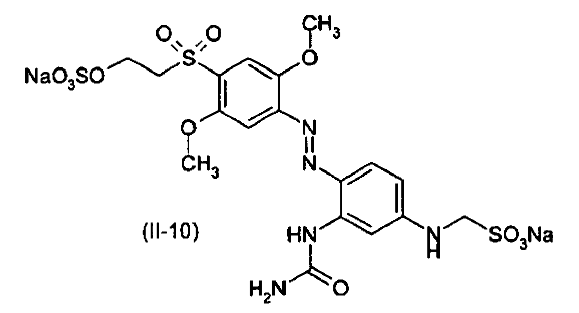 in 75%-igem Anteil enthält, werden in 500 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen grünstichig-schwarze Färbungen und Drucke liefert.

### Beispiel 3

70 Teile eines elektrolythaltigen Farbstoffpulvers, das den marineblauen Disazofarbstoff der Formel (I-1) in 75%-igem Anteil enthält, 13 Teile eines elektrolythaltigen Farbstoffpulvers, das den gelben Azofarbstoff der Formel (II-6) 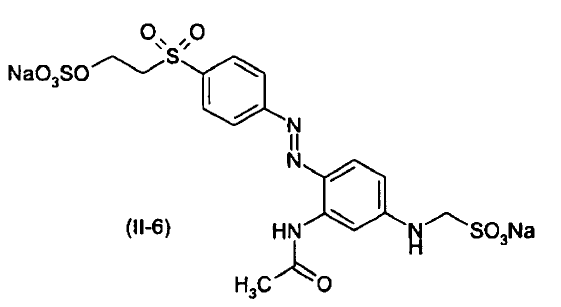 in 70%-igem Anteil enthält und 17 Teile eines elektrolythaltigen Farbstoffpulvers, das den scharlachroten Disazofarbstoff der Formel (III-1) 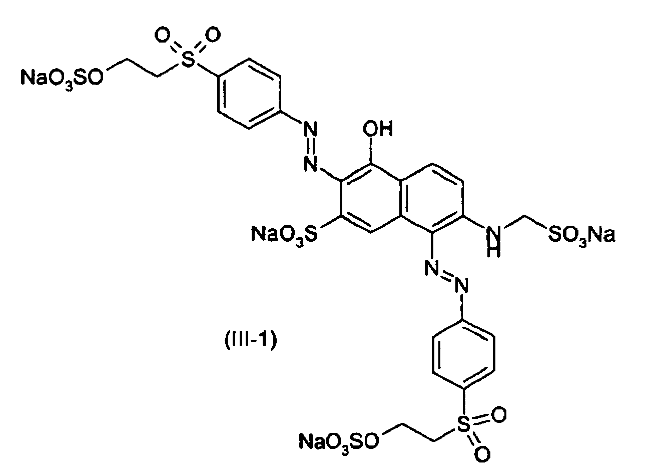 in 70%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 4

70 Teile eines elektrolythaltigen Farbstoffpulvers, das den marineblauen Disazofarbstoff der Formel (I-1) in 75%-igem Anteil enthält, 10 Teile eines elektrolythaltigen Farbstoffpulvers, das den gelben Azofarbstoff der Formel (II-4) 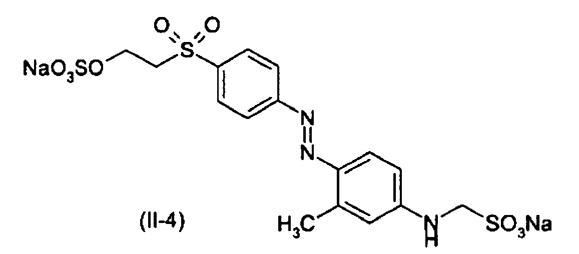 in 70%-igem Anteil enthält und 20 Teile eines elektrolythaltigen Farbstoffpulvers, das den orangefarbenen Azofarbstoff der Formel (IV-1) 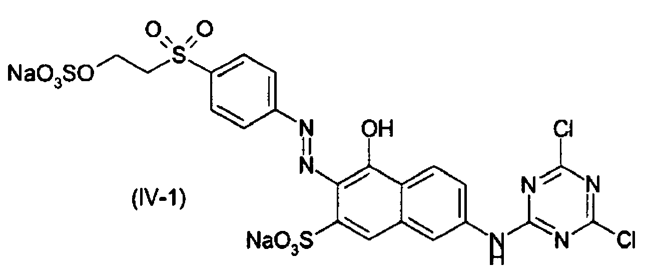 in 75%-igem Anteil enthält, werden in 500 Teilen Wasser gelöst und die erhaltene Farbstofflösung auf pH 5,5-6,5 eingestellt. Durch Eindampfen dieser Farbstofflösung erhält man eine Farbstoffmischung, die auf Baumwolle unter den für Reaktivfarbstoffe üblichen Färbebedingungen tiefschwarze Färbungen und Drucke liefert.

### Beispiel 5

67 Teile eines elektrolythaltigen Farbstoffpulvers, das den marineblauen Disazofarbstoff der Formel (I-1) in 75%-igem Anteil enthält, 10 Teile eines elektrolythaltigen Farbstoffpulvers, das den gelben Azofarbstoff der Formel (II-9) 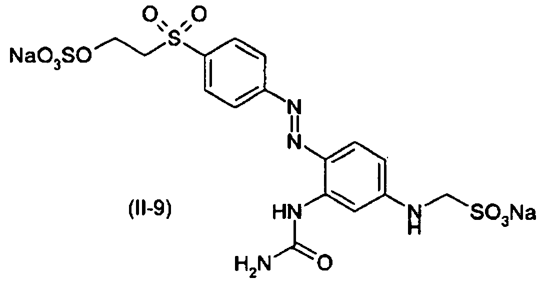 in 70%-igem Anteil enthält, 10 Teile eines elektrolythaltigen Farbstoffpulvers, das den scharlachroten Disazofarbstoff der Formel (III-2) 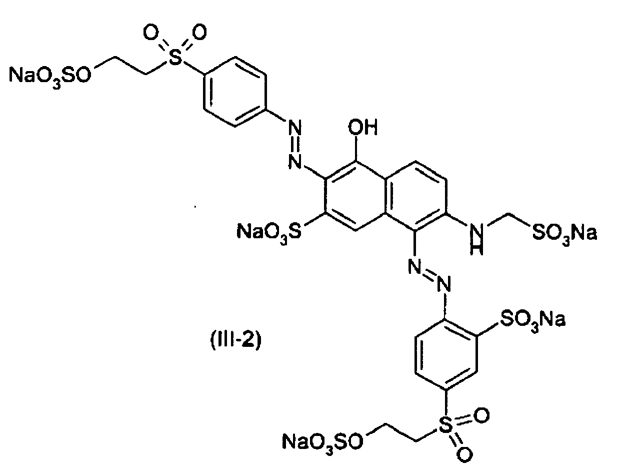 in 70%-igem Anteil enthält und 13 Teile eines elektrolythaltigen Farbstoffpulvers, das den orangefarbenen Azofarbstoff der Formel (IV-1) in 75%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 6

580 Teile 4-(ß-Sulfatoethylsulfonyl)-anilin werden in 1400 Teilen Eiswasser und 371 Teilen 30%-iger Salzsäure suspendiert und durch Zutropfen von 358 Teilen 40%-iger Natriumnitritlösung diazotiert. Nach Entfernung des Nitritüberschusses mit Amidosulfonsäure gibt man hierzu 210 Teile 1-Amino-8-hydroxy-naphthalin-3,6-disulfonsäure sowie eine Mischung aus 67 Teilen 4-Hydroxy-7-(sulfomethyl-amino)-naphthalin-2-sulfonsäure und 66 Teilen (3-Acetylamino-phenylamino)-methansulfonsäure, die durch Umsetzung von 48 Teilen 7-Amino-4-hydroxynaphthalin-2-sulfonsäure und 40,5 Teilen N-(3-Aminophenyl)-acetamid mit 69 Teilen Formaldehydnatriumbisulfit in wässrigem Medium bei pH 5,5 - 6 und 40°C hergestellt wurde, und kuppelt zunächst in erster Stufe bei pH 1 bis 1,5 unterhalb 20°C zu einer Mischung von zwei Monoazofarbstoffen gemäß den Formeln (15-1) und (17-1). Der angegebene pH-Bereich wird dabei durch Zusatz von festem Natriumhydrogencarbonat eingestellt und während der Kupplungsreaktion gehalten.

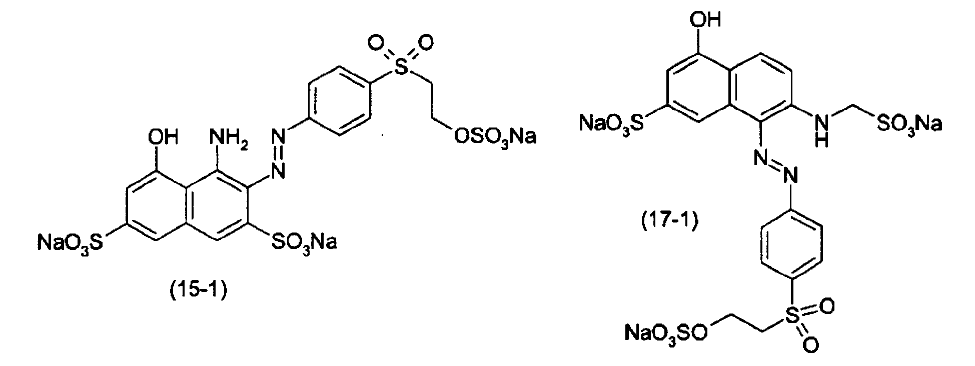

Nach beendeter erster Kupplung stellt man unterhalb 25°C mit Natriumcarborat pH 5,5 - 6,5 ein. Die na ch beendeter zweiter Kupplungsreaktion hierbei entstandene 64,5 : 15,5 : 20 - Mischung der drei Azofarbstoffe (I-1), (II-6) und (III-1) wird durch Sprühtrocknung isoliert.

Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden.

Die erhaltene, erfindungsgemäße Farbstoffmischung färbt Baumwolle in schwarzen Tönen.

### Beispiel 7

515 Teile 4-(β-Sulfatoethylsulfonyl)-anilin werden in 1200 Teilen Eiswasser und 330 Teilen 30%-iger Salzsäure suspendiert und durch Zutropfen von 318 Teilen 40%-iger Natriumnitritlösung diazotiert. Nach Entfernung des Nitritüberschusses mit Amidosulfonsäure gibt man hierzu 210 Teile 1-Amino-8-hydroxy-naphthalin-3,6-disulfonsäure und kuppelt in erster Stufe bei pH 1 bis 1,5 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.

Nach beendeter erster Kupplung setzt man dem Reaktionsgemisch 58,5 Teile (2,5-Dimethyl-phenylamino)-methansulfonsäure, die durch Umsetzung von 33 Teilen 2,5-Dimethylanilin mit 40 Teilen Formaldehydnatriumbisulfit in wässrigem Medium bei pH 5,5 - 6 und 40°C hergestelt wurden, sowie eine wässrige Lösung von 143 Teilen des scharlachroten Monoazofarbstoffs der Formel (17-2), 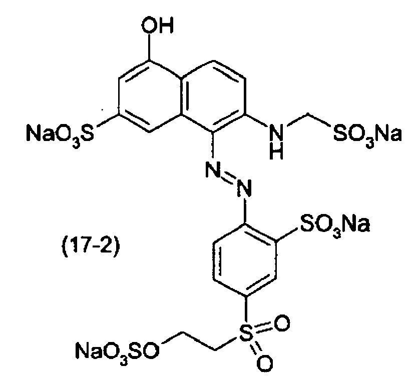 die durch Diazotierung von 65 Teilen 2-Amino-5-(β-sulfatoethylsulfonyl)-benzolsulfonsäure mit 31,5 Teilen 40%-iger Natriumnitritlösung in saurem Medium und anschließender Kupplung auf 60 Teile 4-Hydroxy-7-(sulfomethyl-amino)-naphthalin-2-sulfonsäure bei pH 1 - 2 erhalten wurd e, hinzu. Anschließend wird unterhalb 25°C mit NatriumcarbonatpH 5,5 - 6,5 eingestellt und die so nach beendeter Kupplungsreaktion entstandene 65 : 15 : 20 - Mischung der drei Farbstoffe (l-1), (ll-1) und (III-2) durch Eindampfen im Vakuum bzw. durch Sprühtrocknung isoliert.

Die erhaltene, erfindungsgemäße Farbstoffmischung färbt Baumwolle in schwarzen Tönen.

### Beispiel 8

515 Teile 4-(β-Sulfatoethylsulfonyl)-anilin werden in 1200 Teilen Eiswasser und 330 Teilen 30%-iger Salzsäure suspendiert und durch Zutropfen von 318 Teilen 40%-iger Natriumnitritlösung diazotiert. Nach Entfernung des Nitritüberschusses mit Amidosulfonsäure gibt man hierzu 210 Teile 1-Amino-8-hydroxy-naphthafin-3,6-disulfonsäure und kuppelt in erster Stufe bei pH 1 bis 1,5 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.

Nach beendeter erster Kupplung setzt man dem Reaktionsgemisch 44,5 Teile (3-Ureido-phenylamino)-methansulfonsäure, die durch Umsetzung von 27,5 Teilen (3-Aminophenyl)-harnstoff mit 27 Teilen Formaldehydnatriumbisulfit in wässrigem Medium bei pH 5,5 - 6 und 40°C hergestellt wurden, sowie 76 Teile 7-Acetylamino-4-hydroxy-naphthatin-2-sulfonsäure hinzu.

Anschließend wird unterhalb 25°C mit NatriumcarbonatpH 5,5 - 6,5 eingestellt und die nach beendeter Kupplungsreaktion entstandene 70,5 : 11,5 : 18 - Mischung der drei Farbstoffe (I-1), (II-9) und (lV-2) durch Eindampfen im Vakuum bzw. durch Sprühtrocknung isoliert.

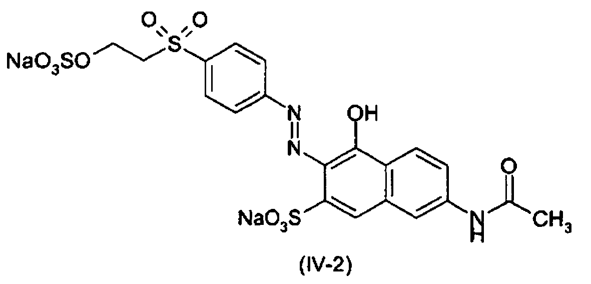

Die erhaltene, erfindungsgemäße Farbstoffmischung färbt Baumwolle in schwarzen Tönen.

### Beispiel 9

515 Teile 4-(β-Sulfatoethylsulfonyl)-anilin werden in 1200 Teilen Eiswasser und 330 Teilen 30%-iger Salzsäure suspendiert und durch Zutropfen von 318 Teilen 40%-iger Natriumnitritlösung diazotiert. Nach Entfernung des Nitritüberschusses mit Amidosulfonsäure gibt man hierzu 210 Teile 1-Amino-8-hydroxy-naphthalin-3,6-disulfonsäure und kuppelt in erster Stufe bei pH 1 bis 1,5 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.

Nach beendeter erster Kupplung wird unterhalb 25°C mit NatriumcarbonatpH 5,5 - 6,5 eingestellt und man setzt dem Reaktionsgemisch 99,5 Teile m-Tolylamino-methansulfonsäure, die durch Umsetzung von 53 Teilen m-Toluidin mit 73 Teilen Formaldehydnatriumbisulfit in wässrigem Medium bei pH 5,5 - 6 und 40°C hergestellt wurden, hinzu.

Anschließend wird die nach beendeter Kupplungsreaktion entstandene 71 : 29 - Mischung der zwei Farbstoffe (I-1) und (II-4) durch Eindampfen im Vakuum bzw. durch Sprühtrocknung isoliert.

Die erhaltene, erfindungsgemäße Farbstoffmischung färbt Baumwolle in grünstichig schwarzen Tönen.

### Beispiel 10

395 Teile 4-(β-Sulfatoethylsulfonyl)-anilin werden in 900 Teilen Eiswasser und 254 Teilen 30%-iger Salzsäure suspendiert und durch Zutropfen von 245 Teilen 40%-iger Natriumnitritlösung diazotiert. Nach Entfernung des Nitritüberschusses mit Amidosulfonsäure gibt man hierzu 160 Teile 1-Amino-8-hydroxy-naphthalin-3,6-disulfonsäure und kuppelt in erster Stufe bei pH 1 bis 1,5 unterhalb 20°C zu einem roten Monoazofarbstoff der Formel (15-1). Der angegebene pH-Bereich wird dabei durch Zusatz von festem Natriumhydrogencarbonat eingestellt und während der Kupplungsreaktion gehalten.

Nach beendeter erster Kupplung wird unterhalb 25 °C mit NatriumcarbonatpH 5,5 - 6,5 eingestellt und man setzt dem Reaktionsgemisch eine wässrige Lösung, die 42,5 Teile (2,5-Dimethyl-phenylamino)-methansulfonsäure sowie 48,5 Teile (3-Ureido-phenylamino)-methansulfonsäure enthält, die durch Umsetzung einer Mischung von 24 Teilen 2,5-Dimethyl-phenylamin und 30 Teilen 3-Aminophenylharnstoff mit 59 Teilen Formaldehydnatriumbisulfit in wässrigem Medium bei pH 5,5 - 6 und 40°C hergestellt wurden, hinzu. Anschließend wird die nach beendeter Kupplungsreaktion entstandene 69 : 15 : 16 - Mischung der drei Farbstoffe (I-1), (II-1) und (II-9) durch Eindampfen im Vakuum bzw. durch Sprühtrocknung isoliert.

Die erhaltene, erfindungsgemäße Farbstoffmischung färbt Baumwolle in schwarzen Tönen.

### Beispiel 11

55,5 Teile 2-Methoxy-5-(β-sulfatoethylsulfonyl)-anilin werden in 170 Teilen Eiswasser und 32 Teilen 30%-iger Salzsäure suspendiert und durch Zutropfen von 31,5 Teilen 40%-iger Natriumnitritlösung diazotiert. Anschließend wird der Nitritüberschuß mit Amidosulfonsäurelösung entfernt und die erhaltene Diazo-Suspension zu einer wässrigen Lösung, enthaltend eine Mischung aus 67,5 Teilen des roten MonoazoFarbstoffs der Formel (15-1) und 15 Teilen (2,5-Dimethyl-phenylamino)-methansulfonsäure, die durch Umsetzung von 8,5 Teilen 2,5-Dimethyl-phenylamin mit 10,5 Teilen Formaldehydnatriumbisulft in wässrigem Medium bei pH 5,5 - 6 und 40°C hergestellt wurden, gepumpt. Hierbei wird gleichzeitig unterhalb 25°C mit Natriumcarbonat pH 5,5 - 6,5 eingestellt und bis zur beendeten Kupplung gehalten. Die nach beendeter Kupplungsreaktion entstandene 71,5 : 28,5 - Mischung der zwei Farbstoffe (I-2) und (II-3) wird durch Eindampfen im Vakuum bzw. durch Sprühtrocknung isoliert.

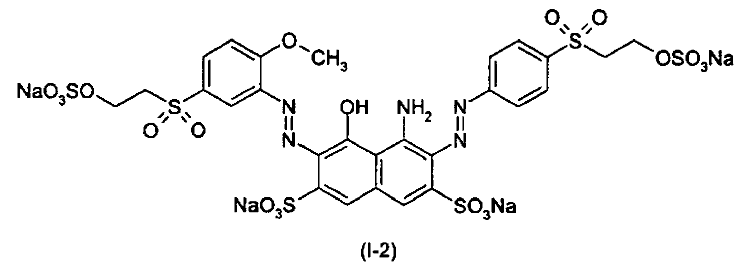

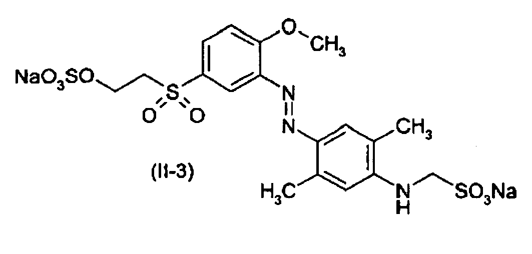

Die erhaltene, erfindungsgemäße Farbstoffmischung färbt Baumwolle in grünstichig schwarzen Tönen.

### Beispiel 12

Eine Mischung aus 39,5 Teilen 4-(β-Sulfatoethylsulfonyl)-anilin und 31,5 Teilen 2-Methoxy-5-(β-sulfatoethylsulfonyl)-anilin wird in 190 Teilen Eiswasser und 44 Teilen 30%-iger Salzsäure suspendiert und durch Zutropfen von 42,5 Teilen 40%-iger Natriumnitritlösung diazotiert. Nach Entfernung des Nitritüberschusses mit Amidosulfonsäure setzt man dem Reaktionsgemisch 52 Teile (2,5-Dimethyl-phenylamino)-methansulfonsäure, die durch Umsetzung von 29,3 Teilen 2,5-Dimethyl-phenylamin mit 35,7 Teilen Formaldehydnatriumbisulfit in wässrigem Medium bei pH 5,5 - 6 und 40°C hergestelt wurden, hinzu und stellt unterhalb 25°C mit Natriumcarbonat pH 5,5 - 6,5 ei n. Die nach beendeter Kupplung entstandene Mischung der beiden Monoazofarbstoffe (II-1) und (II-3) wird anschließend mit 300 Teilen des Disazofarbstoffs der Formel (I-1) versetzt und die so erhaltene 69 : 18 : 13 - Mischung der drei Farbstoffe (I-1), (II-1) und (II-3) durch Eindampfen im Vakuum bzw. durch Sprühtrocknung isoliert.

Die erhaltene, erfindungsgemäße Farbstoffmischung färbt Baumwolle in grünstichig schwarzen Tönen.

### Beispiel 13

a) 230 Teile 4-(β-sulfatoethylsulfonyl)-anilin werden in 550 Teilen Eiswasser und 148 Teilen 30%-iger Salzsäure suspendiert und durch Zutropfen von 142 Teilen 40%-iger Natriumnitritlösung diazotiert. Nach Entfernung des Nitritüberschusses mit Amidosulfonsäure gibt man hierzu 187 Teile 1-Amino-8-hydroxy-naphthalin-3,6-disulfonsäure und 46 Teile 7-Amino-4-hydroxy-naphthalin-2-sulfonsäure und kuppelt in erster Stufe bei pH 1 unterhalb 20°C zu einer Mischung der zwei Monoazofarbstoffe gemäß den Formeln (15-1) und (17-3). Der angegebene pH-Bereich wird dabei durch Zusatz von festem Natriumhydrogencarbonat eingestellt und während der Kupplungsreaktion gehalten.

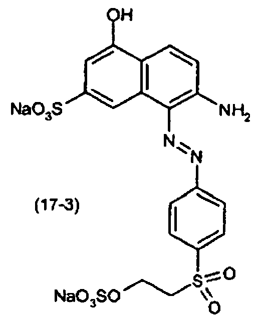

Nach beendeter erster Kupplungsreaktion setzt man dieser Mischung 60 Teile m-Tolylamino-methansulfonsäure, die durch Umsetzung von 32 Teilen m-Toluidin mit 44 Teilen Formaldehydnatriumbisulfit in wässrigem Medium bei pH 5,5 - 6 und 40°C hergestellt wurden, hinzu.

b) In einem zweiten, separaten Reaktionsgefäß werden 375 Teile 2,5-Dimethoxy-4-(ß-sulfatoethylsulfonyl)-anilin in 1100 Teilen Eiswasser und 200 Teilen 30%- iger Salzsäure suspendiert und durch Zutropfen von 192 Teilen 40%-iger Natriumnitritlösung diazotiert. Anschließend wird der Nitritüberschuß mit Amidosulfonsäurelösung entfernt und die erhaltene Diazo-Suspension nach beendeter erster Kupplung zur Reaktionsmischung aus a) gepumpt.

Dann wird unterhalb 25°C mit Natriumcarbonat pH 5,5 - 6,5 eingestellt und die nach beendeter zweiter Kupplungsreaktion entstandene 63 : 18 : 19 - Mischung der drei Farbstoffe (I-3), (II-5) und (III-43) durch Eindampfen im Vakuum bzw. durch Sprühtrocknung isoliert.

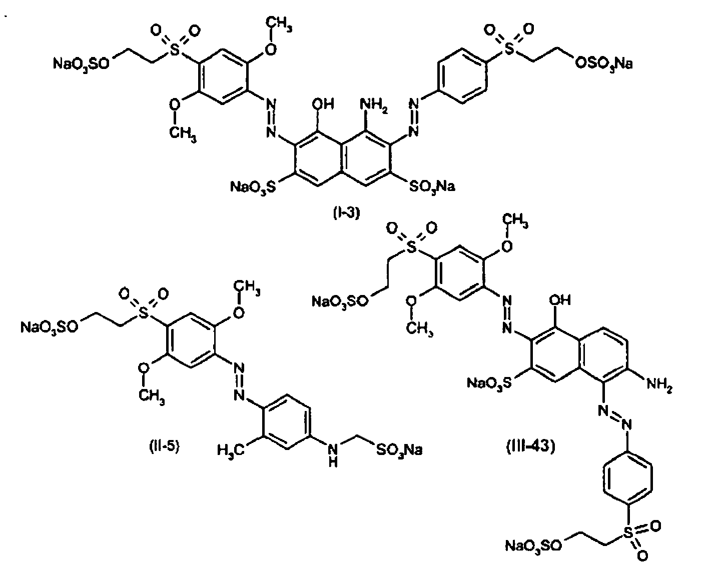

Die so erhaltene, erfindungsgemäße Farbstoffmischung färbt Baumwolle in schwarzen Tönen.

### Beispiel 14

50 Teile eines elektrolythaltigen Farbstoffpulvers, das den grünstichig marineblauen Disazofarbstoff der Formel (I-4) 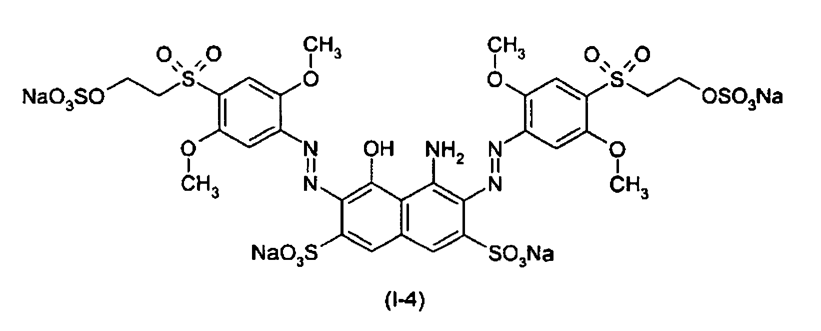 in 70%-igem Anteil enthält, 25 Teile eines elektrolythaltigen Farbstoffpulvers, das den marineblauen Disazofarbstoff der Formel (I-1) in 75%-igem Anteil enthält, 10 Teile eines elektrolylhaltigen Farbstoffpulvers, das den gelben Azofarbstoff der Formel (II-9) in ebenfalls 75%-iger Anteil enthält und 15 Teile eines elektrolythaltigen Farbstoffpulvers, das den scharlachroten Disazofarbstoff der Formel (III-2) in 80%-igem Anteil enthält werden in 500 Teilen Wasser gelöst und die erhaltene Farbstofflösung auf pH 5,5-6,5 eingestellt und mit Phosphatpuffer gepuffert. Durch Eindampfen dieser Lösung erhält man eine Farbstoffmischung, die auf Baumwolle unter den für Reaktivfarbstoffe üblichen Färbebedingungen tiefschwarze Färbungen und Drucke liefert.

Alternativ kann die erhaltene Farbstofflösung durch weitere Verdünnung bzw. Konzentration als Flüssigmarke bestimmter Stärke eingestellt werden.

### Beispiel 15

281 Teile 4-(β-Sulfatoethylsulfonyl)-anilin werden in 650 Teilen Eiswasser und 181 Teilen 30%-iger Salzsäure suspendiert und durch Zutropfen von 175 Teilen 40%-iger Natriumnitritlösung diazotiert. Nach Entfernung des Nitritüberschusses mit Amidosulfonsäure gibt man hierzu 79 Teile 7-Amino-4-hydroxy-naphthalin-2-sulfonsäure und kuppelt in erster Stufe bei pH 1 bis 1,5 unterhalb 20°C zu einem scharlachroten Monoazofarbstoff der Formel (17-3). Der angegebene pH-Bereich wird dabei durch Zusatz von festem Natriumhydrogencarbonat eingestellt und während der Kupplungsreaktion gehalten.

Nach beendeter erster Kupplung wird unterhalb 25°C mit NatriumcarbonatpH 5,5 - 6,5 eingestellt und gehalten und dem Reaktionsgemisch eine wässrige Lösung, die 71 Teile (2,5-Dimethyl-phenylamino)-methansulfonsäure enthält, die durch Umsetzung von 40 Teilen 2,5-Dimethyl-phenylamin mit 49 Teilen Formaldehydnatriumbisulfit in wässrigem Medium bei pH 5,5 - 6 und 40°C hergestellt wurden, hinzugesetzt.

In der nach beendeter Kupplungsreaktion entstandenen wässrigen Mischung der beiden Farbstoffe (II-1) und (III-7) 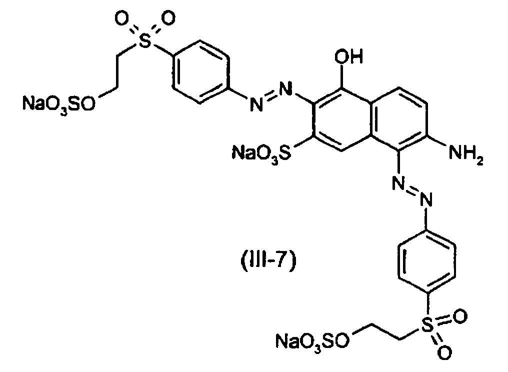 werden 970 Teile des marineblauen Disazofarbstoff der Formel (I-6) 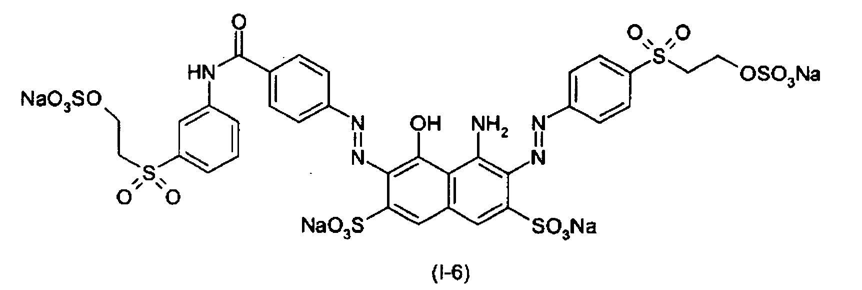 zusätzlich gelöst bzw. suspendiert und die so erhaltene 67 : 12,5 : 20,5 - Mischung der drei Farbstoffe (I-6), (II-1) und (III-7) durch Eindampfen im Vakuum bzw. durch Sprühtrocknung isoliert.

Die resultierende, erfindungsgemäße Farbstoffmischung liefert unter den für Reaktivfarbstoffe üblichen Färbebedingungen sowie mit gegenüber dem Standardverfahren reduzierter Salzmenge, beispielsweise auf Baumwolle, tiefschwarze Färbungen.

### Beispiel 16

28 Teile 4-(β-Sulfatoethylsulfonyl)-anilin werden in 65 Teilen Eiswasser und 18 Teilen 30%-iger Salzsäure suspendiert und durch Zutropfen von 17,5 Teilen 40%- iger Natriumnitritlösung diazotiert. Nach Entfernung des Nitritüberschusses mit Amidosulfonsäure tropft man diese Diazosuspension bei pH 5 - 6 unterh alb 20°C zu einer wässrigen Lösung, die 11 Teile 1-Aminonaphthalin-4-sulfonsäure sowie 12 Teile (2,5-Diethyl-phenylamino)-methansulfonsäure, die durch Umsetzung von 7,5 Teilen 2,5-Diethyl-phenylamin mit 7,5 Teilen Formaldehydnatriumbisulfit in wässrigem Medium bei pH 5,5 - 6 und 40°C hergestellt wurden, enthält und kuppelt zu einer Mischung zweier gelb bis orangefarbenen Monoazofarbstoffe der Formeln (II-22) und (IV-15). Der angegebene pH-Bereich wird dabei durch Zusatz von Natriumcarbonat eingestellt und während der Kupplungsreaktion gehalten.

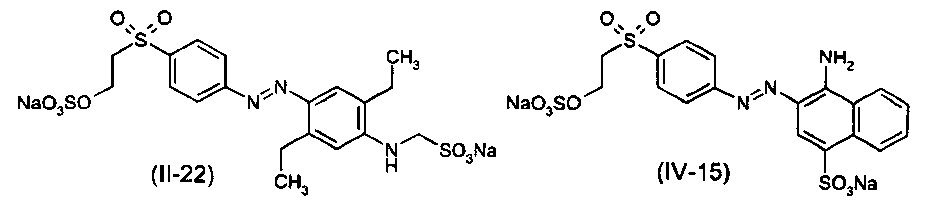

Nach beendeter Kupplung wird dem Reaktionsgemisch eine wässrige Lösung, die 115 Teile des marineblauen Disazofarbstoffs der Formel (1-9) enthält, 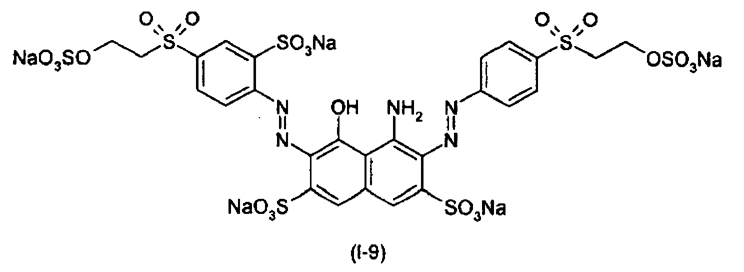 hinzugesetzt und die so erhaltene 67 : 17 : 16 - Mischung der drei Farbstoffe (I-9), (11-22) und (IV-15) durch Eindampfen im Vakuum bzw. durch Sprühtrocknung isoliert.

Die resultierende, erfindungsgemäße Farbstoffmischung liefert unter den für Reaktivfarbstoffe üblichen Färbebedingungen, beispielsweise auf Baumwolle, schwarze Färbungen.

### Beispiele 17 bis 768

Die nachfolgenden Tabellenbeispiele beschreiben weitere erfindungsgemäße Mischungen der Farbstoffe der allgemeinen Formeln (I)- (IV), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, blaugraue bis tiefschwarze Färbungen.

Farbstoff-Mischungen gemäß Beispiel 1 oder 2

| Beispiel | Farbstoff nach allg. Formel (I) | Farbstoff nach allg. Formel (II-x) | Farbstoff nach allg. Formel (II-y) | Verhältnis (I) : (II-x) : (II-y) |
|---|---|---|---|---|
| 17 | (I-1) | 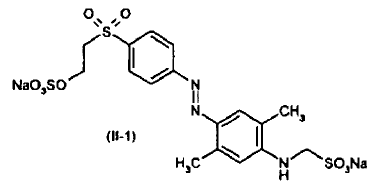 | 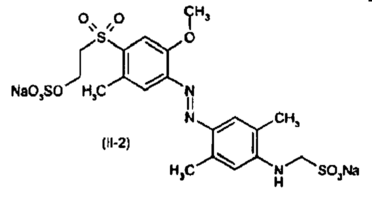 | 68 : 17 : 15 |
| 18 | (I-1) | (II-2) | --- | 70 : 30 |
| 19 | (I-1) | 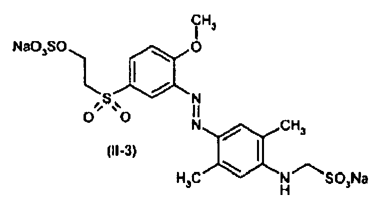 | --- | 62 : 38 |
| 20 | (I-1) | 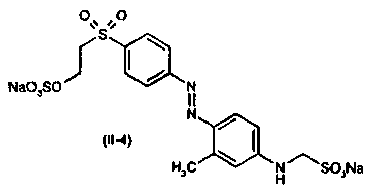 | 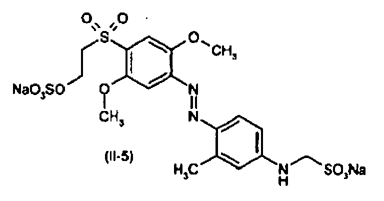 | 64 : 20 : 16 |
| 21 | (I-1) | (II-5) | --- | 72 : 28 |
| 22 | (I-1) | 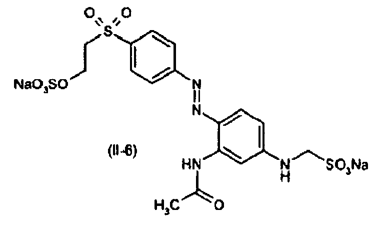 | 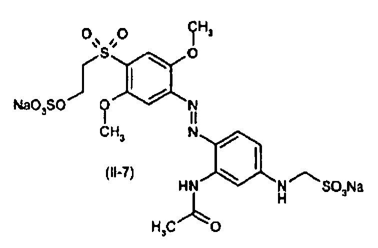 | 65 : 20 : 15 |
| 23 | (I-1) | (II-7) | --- | 70 : 30 |
| 24 | (I-1) | 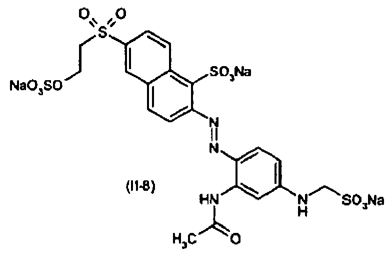 | --- | 70 : 30 |
| 25 | (I-1) | 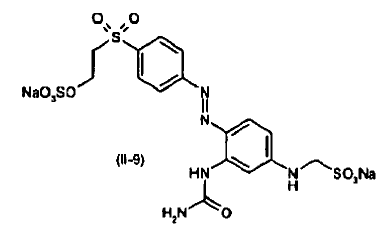 | 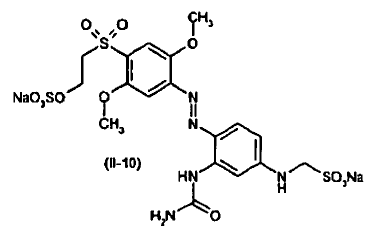 | 66 : 22 : 12 |
| 26 | (I-1) | (II-2) | 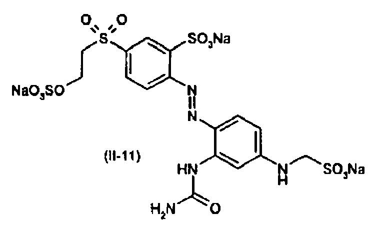 | 62 : 19 : 19 |
| 27 | (I-1) | (II-5) | 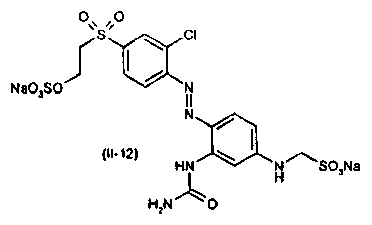 | 65 : 20 : 15 |
| 28 | (I-1) | 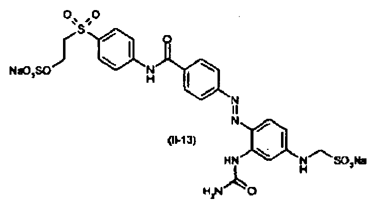 | --- | 70 : 30 |
| 29 | (I-1) | (II-3) | 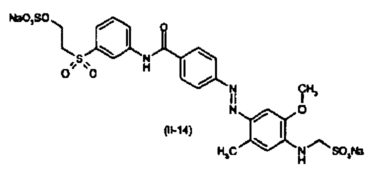 | 63 : 20 : 17 |
| 30 | (I-1) | (II-9) | 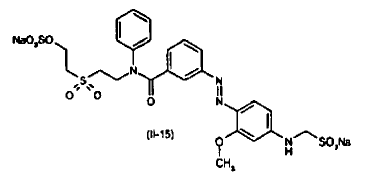 | 65 : 20 : 15 |
| 31 | (I-1) | (II-7) | 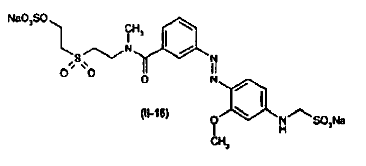 | 65 : 18 : 17 |
| 32 | (I-7) | (II-6) | 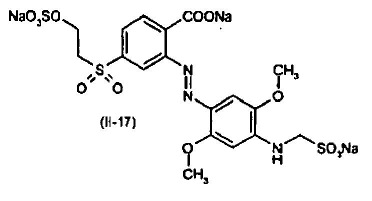 | 60 : 20 : 20 |
| 33 | (I-1) | 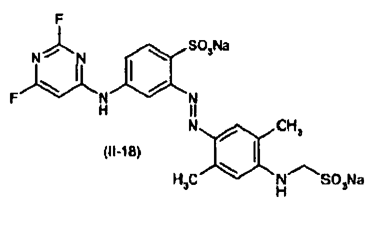 | 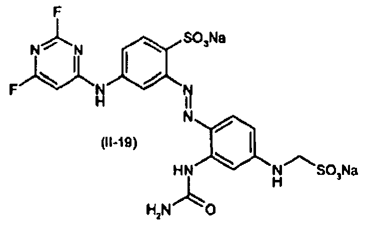 | 67 : 18 : 15 |
| 34 | (I-1) | 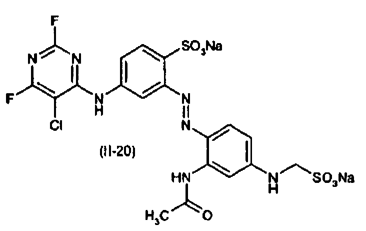 | --- | 67 : 33 |
| 35 | (I-1) | (II-2) | 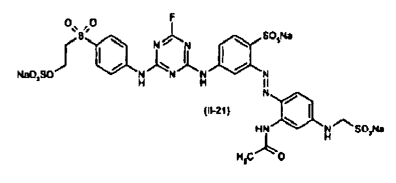 | 65 : 15 : 20 |
| 36 | (I-1) | 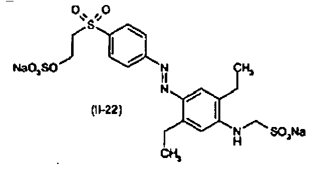 | 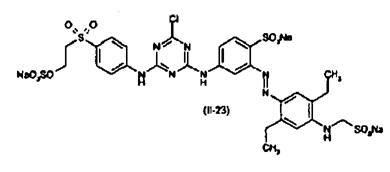 | 63 : 22 : 15 |
| 37 | (I-1) | 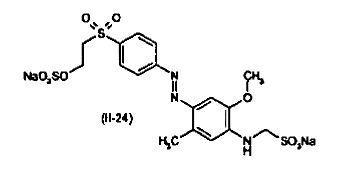 | 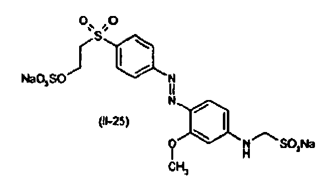 | 80 : 20 : 20 |
| 38 | (I-1) | 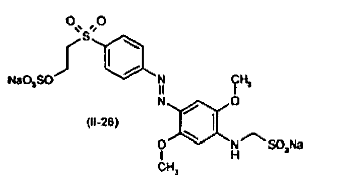 | --- | 65 : 35 |
| 39 | (I-1) | (II-1) | (II-4) | 67 : 16 : 17 |
| 40 | (I-1) | (II-1) | (II-6) | 67 : 14 : 19 |
| 41 | (I-1) | (II-1) | (II-9) | 64 : 18 : 18 |
| 42 | (I-1) | (II-1) | (II-25) | 65 : 15 : 20 |
| 43 | (I-1) | (II-4) | (II-6) | 66 : 17 : 17 |
| 44 | (I-1) | (II-4) | (II-9) | 67 : 13 : 20 |
| 45 | (I-1) | (II-4) | (II-25) | 65 : 17 : 18 |
| 46 | (I-1) | (II-6) | (II-9) | 68 : 15 : 17 |
| 47 | (I-1) | (II-6) | (II-25) | 65 : 18 : 17 |
| 48 | (I-1) | (II-9) | (II-22) | 67 : 18 : 15 |
| 49 | 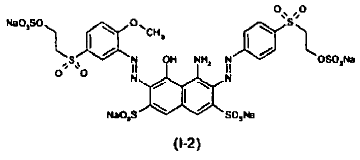 | (II-1) | (II-2) | 70 : 15 : 15 |
| 50 | (I-2) | (II-4) | (II-5) | 66 : 19 : 15 |
| 51 | (I-2) | (II-6) | (II-7) | 67 : 18 : 15 |
| 52 | (I-2) | (II-9) | (II-22) | 68 : 20 : 12 |
| 53 | (1-2) | (II-10) | --- | 67 : 33 |
| 54 | (I-2) | (II-25) | --- | 72 : 28 |
| 55 | 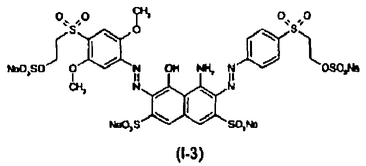 | (11-4) | (II-5) | 67 : 14 : 19 |
| 56 | (I-3) | (II-6) | (II-7) | 65 : 18 : 17 |
| 57 | (I-3) | (II-9) | (II-10) | 69 : 11 : 20 |
| 58 | (I-3) | (II-1) | (II-22) | 68 : 20 : 12 |
| 59 | (I-3) | (II-10) | --- | 70 : 30 |
| 60 | (I-3) | (II-25) | --- | 65 : 35 |
| 61 | 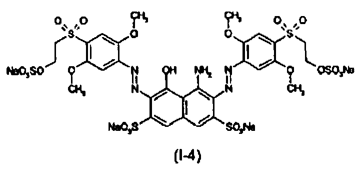 | (I-1) | (I-3) | 65 : 10 : 25 |
| 62 | (I-4) | (II-4) | (II-5) | 62 : 15 : 23 |
| 63 | (I-4) | (II-6) | (II-7) | 68 : 12 : 20 |
| 64 | (I-4) | (II-1) | (II-22) | 60 : 20 : 20 |
| 65 | (I-4) | (II-8) | --- | 72 : 28 |
| 66 | (I-4) | (II-10) | --- | 67 : 33 |
| 67 | 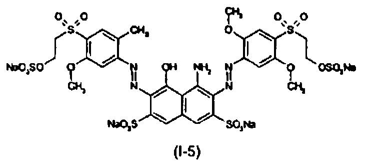 | (II-1) | (II-2) | 63 : 15 : 22 |
| 68 | (I-5) | (II-4) | (II-5) | 66 : 15 : 19 |
| 69 | (I-5) | (II-6) | (II-7) | 68 : 16 : 16 |
| 70 | (I-5) | (II-8) | --- | 75 : 25 |
| 71 | (I-5) | (II-10) | --- | 70 : 30 |
| 72 | 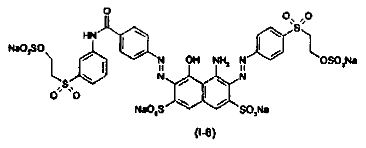 | (II-1) | (II-2) | 68 : 19 : 13 |
| 73 | (I-6) | (II-4) | (II-5) | 68 : 20 : 12 |
| 74 | (I-6) | (II-6) | (II-7) | 65 : 25 : 10 |
| 75 | (I-6) | (II-9) | (II-10) | 70 : 20 : 10 |
| 76 | (I-6) | (II-14) | --- | 73 : 27 |
| 77 | (I-6) | (II-22) | (II-5) | 67 : 21 : 12 |
| 78 | 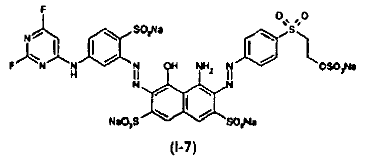 | (II-1) | (II-2) | 66 : 20 : 14 |
| 79 | (I-7) | (II-4) | (II-5) | 65 : 20 : 15 |
| 80 | (I-7) | (II-6) | (II-7) | 66 : 22 : 12 |
| 81 | (I-7) | (II-9) | (II-10) | 65 : 25 : 10 |
| 82 | (I-7) | (II-18) | (II-19) | 68 : 18 : 14 |
| 83 | (I-7) | (II-20) | --- | 70 : 30 |
| 84 | (I-7) | (II-21) | (II-10) | 67 : 23 : 10 |
| 85 | (I-7) | (II-22) | (II-5) | 65 : 22 : 13 |
| 86 | 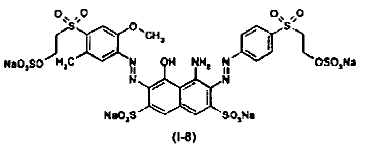 | (II-1) | (II-2) | 66 : 16 : 18 |
| 87 | (I-8) | (II-4) | (II-5) | 68 : 14 : 18 |
| 88 | (I-8) | (II-6) | (II-7) | 65 : 17 : 18 |
| 89 | (I-8) | (II-9) | (II-10) | 68 : 13 : 19 |
| 90 | (I-8) | (II-2) | --- | 70 : 30 |
| 91 | (I-8) | (II-25) | --- | 67 : 33 |
| 92 | 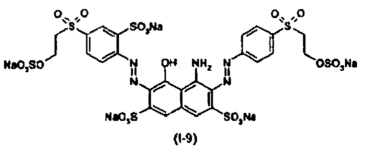 | (II-1) | (II-2) | 66 : 19 : 15 |
| 93 | (I-9) | (II-4) | (II-5) | 67 : 18 : 15 |
| 94 | (I-9) | (II-6) | (II-7) | 70 : 15 : 15 |
| 95 | (I-9) | (II-9) | (II-22) | 68 : 18 : 14 |
| 96 | (I-9) | (II-10) | --- | 72 : 28 |
| 97 | (I-9) | (II-25) | --- | 69 : 31 |
| 98 | 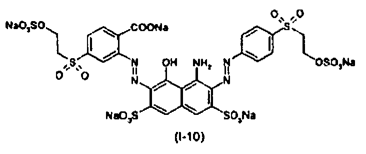 | (II-1) | (II-2) | 68 : 20 : 12 |
| 99 | (I-10) | (II-4) | (II-5) | 66 : 20 : 14 |
| 100 | (I-10) | (II-6) | (II-7) | 65 : 25 : 10 |
| 101 | (I-10) | (II-9) | (II-10) | 70 : 18 : 12 |
| 102 | (I-10) | (II-17) | --- | 70 : 30 |
| 103 | (I-10) | (II-22) | (II-5) | 70 : 20 : 10 |
| 704 | 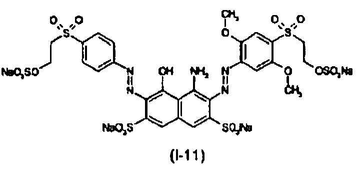 | (II-4) | (II-5) | 67 : 13 : 20 |
| 105 | (I-11) | (II-6) | (II-7) | 65 : 16 : 19 |
| 106 | (I-11) | (II-9) | (II-10) | 70 : 13 : 17 |
| 107 | (I-11) | (II-1) | (II-22) | 68 : 16 : 16 |
| 108 | (I-11) | (II-10) | --- | 72 : 28 |
| 109 | (I-11) | (II-26) | --- | 67 : 33 |
| 110 | 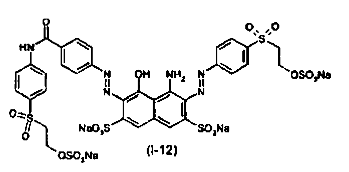 | (II-1) | (II-2) | 68 : 19 : 13 |
| 111 | (I-12) | (II-4) | (II-5) | 68 : 20 : 12 |
| 112 | (I-12) | (II-6) | (II-7) | 65 : 25 : 10 |
| 113 | (I-12) | (II-9) | (II-10) | 70 : 20 : 10 |
| 114 | (I-12) | (II-13) | | 73 : 27 |
| 115 | (I-12) | (II-14) | | 70 : 30 |
| 116 | (I-12) | (II-22) | (II-5) | 67 : 20 : 13 |
| 117 | 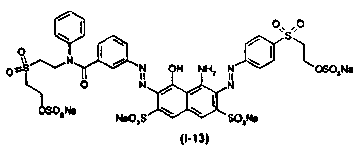 | (II-1) | (II-2) | 70 : 18 : 12 |
| 118 | (I-13) | (II-4) | (II-5) | 67 : 20 : 13 |
| 119 | (I-13) | (II-6) | (II-7) | 70 : 20 : 10 |
| 120 | (I-13) | (II-9) | (II-10) | 72 : 18 : 10 |
| 121 | (I-13) | (II-15) | | 68 : 32 |
| 122 | (I-13) | (II-22) | (II-5) | 72 : 18 : 10 |
| 123 | 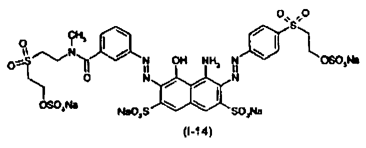 | (II-1) | (II-2) | 70 : 18 : 12 |
| 124 | (I-14) | (II-4) | (II-5) | 70 : 20 : 10 |
| 125 | (I-14) | (II-6) | (II-7) | 72 : 18 : 10 |
| 126 | (I-14) | (II-9) | (II-10) | 75 : 16 : 9 |
| 127 | (I-14) | (II-16) | --- | 65 : 35 |
| 128 | (I-14) | (II-22) | (II-5) | 73 : 18 : 9 |
| 129 | 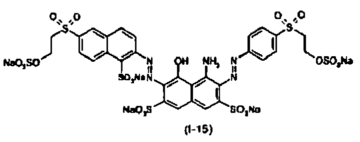 | (II-1) | (II-2) | 66 : 22 : 12 |
| 130 | (I-15) | (II-3) | --- | 66 : 34 |
| 131 | (I-15) | (II-4) | (II-5) | 67 : 22 : 11 |
| 132 | (I-15) | (II-6) | (II-7) | 68 : 22 : 10 |
| 133 | (I-15) | (II-8) | --- | 65 : 35 |
| 134 | (I-15) | (II-9) | (II-10) | 70 : 20 : 10 |
| 135 | (I-15) | (II-22) | (II-5) | 70 : 17 : 13 |
| 136 | 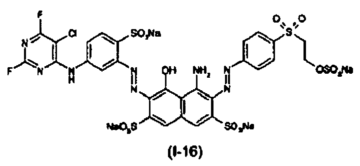 | (II-1) | (II-2) | 66 : 20 : 14 |
| 137 | (I-16) | (II-4) | (II-5) | 65 : 20 : 15 |
| 138 | (I-16) | (II-6) | (II-7) | 66 : 22 : 12 |
| 139 | (I-16) | (II-9) | (II-10) | 70 : 20 : 10 |
| 140 | (I-16) | (II-18) | (II-19) | 68 : 18 : 4 |
| 141 | (I-16) | (II-20) | --- | 70 : 30 |
| 142 | (I-16) | (II-23) | (II-10) | 67 : 23 : 10 |
| 143 | (I-16) | (II-22) | (II-5) | 68 : 20 : 12 |
| 144 | 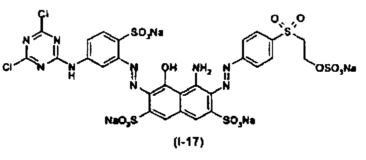 | (II-1) | (II-2) | 65 : 20 : 15 |
| 145 | (I-17) | (II-4) | (II-5) | 65 : 20 : 15 |
| 146 | (I-17) | (II-6) | (II-7) | 66 : 24 : 10 |
| 147 | (I-17) | (II-9) | (II-10) | 68 : 21 : 11 |
| 148 | (I-17) | (II-18) | (II-19) | 68 : 16 : 16 |
| 149 | (I-17) | (II-20) | --- | 67 : 33 |
| 150 | (I-17) | (II-21) | (II-10) | 65 : 22 : 13 |
| 151 | 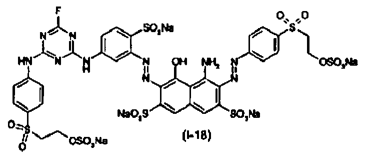 | (II-1) | (II-2) | 68 : 20 : 12 |
| 152 | (I-18) | (II-4) | (II-5) | 68 : 17 : 15 |
| 153 | (I-18) | (II-6) | (II-7) | 67 : 20 : 13 |
| 154 | (I-18) | (II-9) | (II-10) | 72 : 18 : 10 |
| 155 | (I-18) | (II-18) | (II-19) | 68 : 16 : 16 |
| 156 | (I-18) | (II-20) | --- | 72 : 28 |
| 157 | (I-18) | (II-21) | (II-10) | 66 : 24 : 10 |
| 158 | (I-18) | (II-21) | (II-23) | 65 : 17 : 18 |
| 159 | (I-18) | (II-22) | (II-5) | 70 : 18 : 12 |
| 160 | 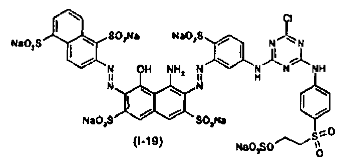 | (II-1) | (II-2) | 67 : 23 : 10 |
| 161 | (I-19) | (II-4) | (II-5) | 66 : 20 : 14 |
| 162 | (I-19) | (II-6) | (II-7) | 66 : 24 : 10 |
| 163 | (I-19) | (II-9) | (II-10) | 70 : 20 : 10 |
| 164 | (I-19) | (II-18) | (II-19) | 67 : 17 : 16 |
| 165 | (I-19) | (II-20) | --- | 71 : 29 |
| 166 | (I-19) | (II-22) | (II-5) | 68 : 20 : 12 |
| 167 | (I-19) | (II-23) | (II-10) | 65 : 25 : 10 |
| 168 | 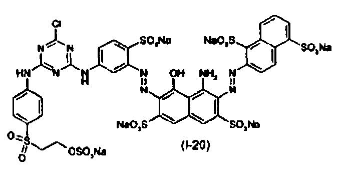 | (II-1) | (II-2) | 68 : 22 : 10 |
| 169 | (I-20) | (II-4) | (II-5) | 67 : 20 : 13 |
| 170 | (I-20) | (II-7) | --- | 70 : 30 |
| 171 | (I-20) | (II-9) | (II-10) | 70 : 20 : 10 |
| 172 | (I-20) | (II-18) | (II-19) | 69 : 16 : 15 |
| 173 | (I-20) | (II-20) | --- | 68 : 32 |
| 174 | (I-20) | (II-22) | (II-5) | 68 : 20 : 12 |
| 175 | (I-20) | (II-23) | (II-10) | 67 : 23 : 10 |
| 176 | (I-20) | (II-26) | --- | 63 : 37 |
| 177 | 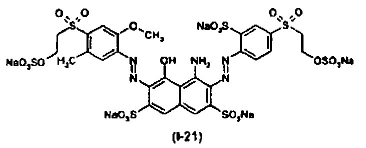 | (II-1) | (II-2) | 66 : 16 : 18 |
| 178 | (I-21) | (II-4) | (I-5) | 68 : 14 : 18 |
| 179 | (I-21) | (II-6) | (II-7) | 65 : 17 : 18 |
| 180 | (I-21) | (II-9) | (II-10) | 68 : 13 : 19 |
| 181 | (I-21) | (II-10) | (II-11) | 6 : 24 : 10 |
| 182 | (I-21) | (II-2) | --- | 70 : 30 |
| 183 | (I-21) | (II-3) | --- | 60 : 40 |
| 184 | (I-21) | (II-25) | --- | 65 : 35 |

Farbstoff-Mischungen gemäß Beispiel 3

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 185 | (I-1) | (I-1) | 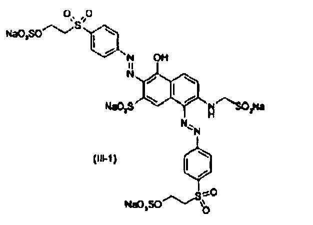 | 67 : 15 : 18 |
| 186 | (I-1) | (II-4) | 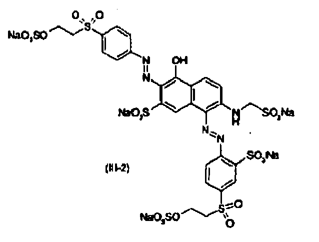 | 68 : 16 : 16 |
| 187 | (I-1) | (II-6) | 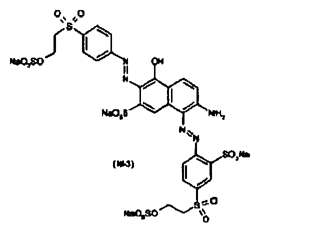 | 66 : 20 : 14 |
| 188 | (I-1) | (II-9) | 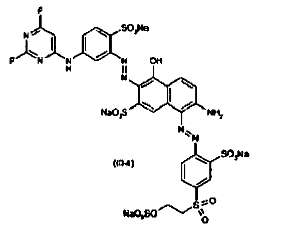 | 70 : 18 : 12 |
| 189 | (I-1) | (II-1) | 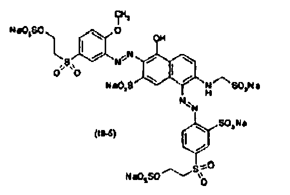 | 67 : 18 : 15 |
| 190 | (I-1) | (II-6) | 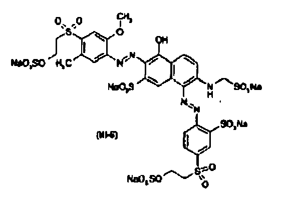 | 72 : 18 : 10 |
| 191 | (I-1) | (II-4) | 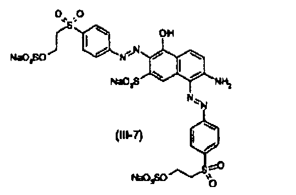 | 67 : 20 : 13 |
| 192 | (I-1) | (II-10) | 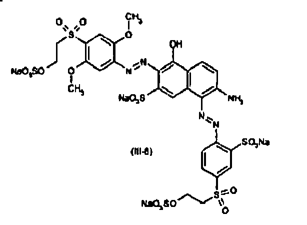 | 73 : 17 : 10 |
| 193 | (I-1) | (II-1) | 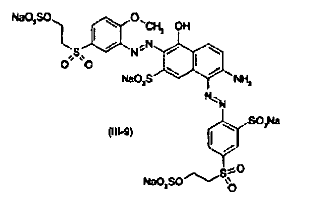 | 70 : 20 : 10 |
| 194 | (I-1) | (II-22) | 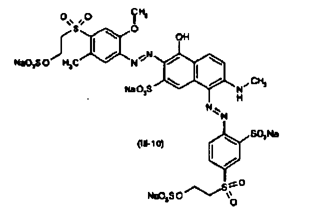 | 75 : 17 : 8 |
| 195 | (I-1) | (II-25) | 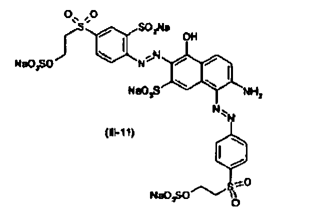 | 65 : 20 : 15 |
| 196 | (I-1) | (II-26) | 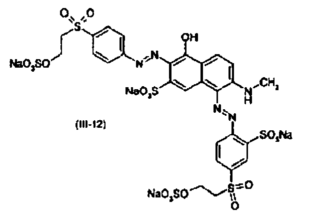 | 72 : 20 : 8 |
| 197 | (I-1) | (II-4) | 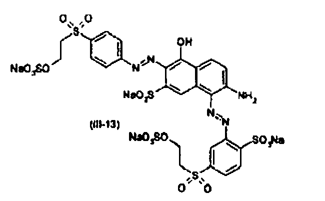 | 67 : 23 : 10 |
| 198 | (I-1) | (II-3) | 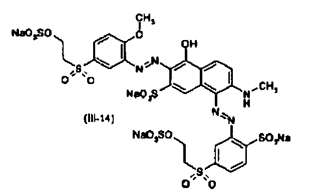 | 72 : 18 : 10 |
| 199 | (I-1) | (II-6) | 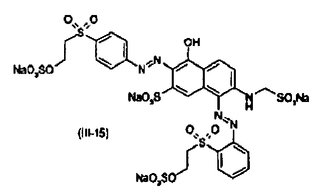 | 68 : 20 : 12 |
| 200 | (I-1) | (II-9) | 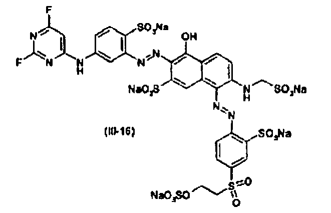 | 70 : 15 : 15 |
| 201 | (I-1) | (II-1) | 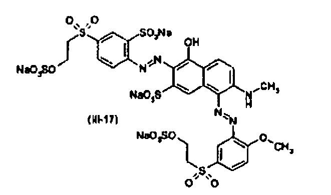 | 70 : 20 : 10 |
| 202 | (I-1) | (II-10) | 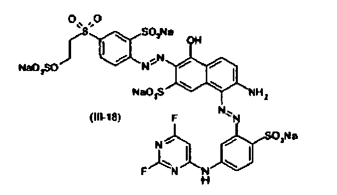 | 68 : 20 : 12 |
| 203 | (I-1) | (II-4) | 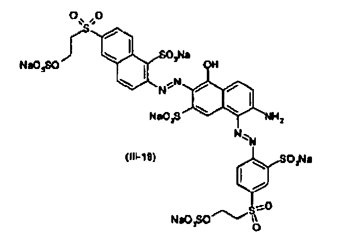 | 75 : 17 : 8 |
| 204 | (I-1) | (II-19) | 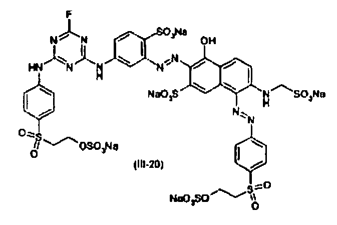 | 66 : 22 : 12 |
| 205 | (I-1) | (II-10) | 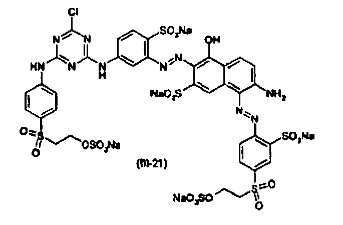 | 68 : 20 : 12 |
| 206 | (I-1) | (II-13) | 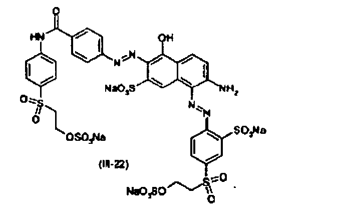 | 70 : 20 : 10 |
| 207 | (I-1) | (II-4) | 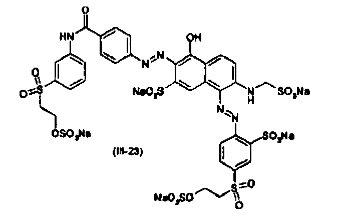 | 67 : 20 : 13 |
| 208 | (I-1) | (II-9) | 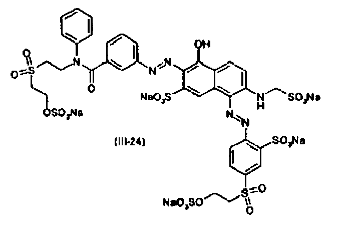 | 68 : 16 : 16 |
| 209 | (I-1) | (II-1) | 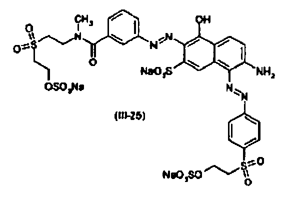 | 68 : 15 : 17 |
| 210 | (I-1) | (II-4) | 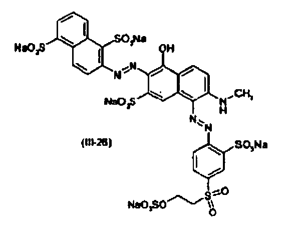 | 75 : 15 : 10 |
| 211 | (I-1) | (II-6) | 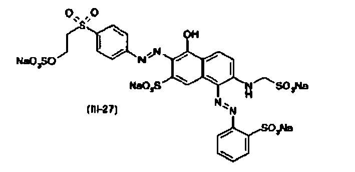 | 65 : 20 : 15 |
| 212 | (I-1) | (II-20) | 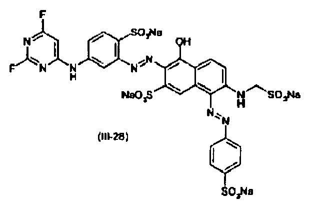 | 70 : 15 : 15 |
| 213 | (I-1) | (II-9) | 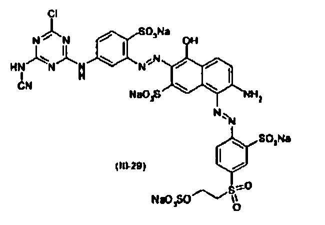 | 67 : 18 : 15 |
| 214 | (I-1) | (II-1) | 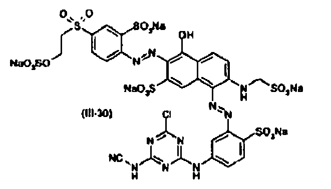 | 68 : 20 : 12 |
| 215 | (I-1) | (II-6) | 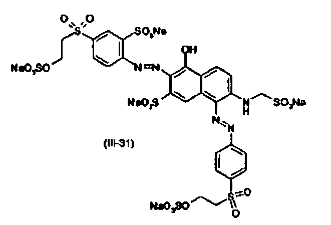 | 68 : 16 : 16 |
| 216 | (I-1) | (II-22) | 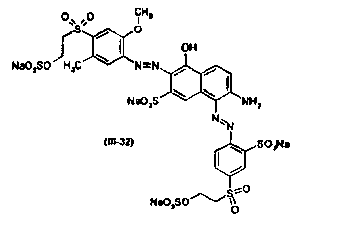 | 73 : 17 : 10 |
| 217 | (I-1) | (II-9) | 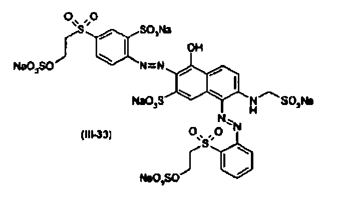 | 70 : 14 : 16 |
| 218 | (I-1) | (II-2) | 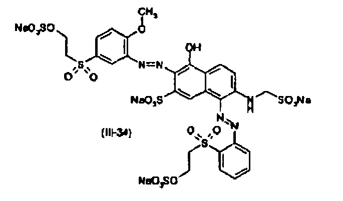 | 70 : 13 : 17 |
| 219 | (I-1) | (II-1) | 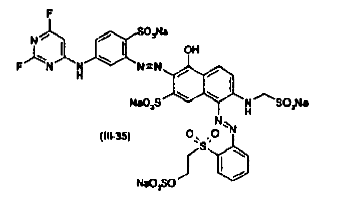 | 67 : 20 : 13 |
| 220 | (I-1) | (II-10) | 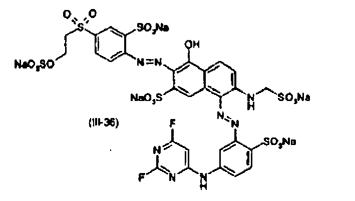 | 70 : 15 : 15 |
| 221 | (I-1) | (II-3) | 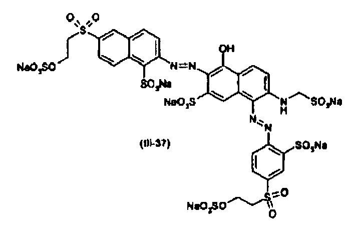 | 68 : 18 : 14 |
| 222 | (I-1) | (II-22) | 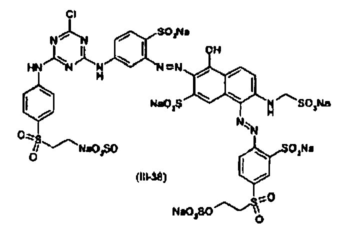 | 67 : 20 : 13 |
| 223 | (I-1) | (II-1) | 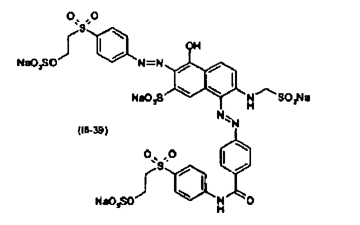 | 70 : 20 : 10 |
| 224 | (I-1) | (II-9) | 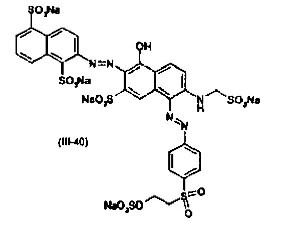 | 66 : 16 : 18 |
| 225 | (I-1) | (II-6) | 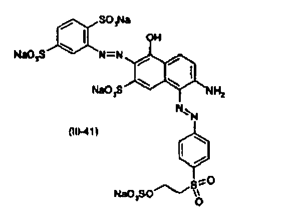 | 67 : 20 : 13 |
| 226 | (I-1) | (II-1) | 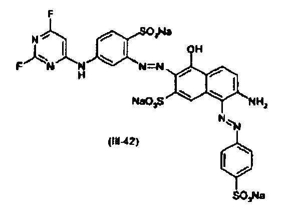 | 68 : 20 : 12 |
| 227 | (I-1) | (II-2) | 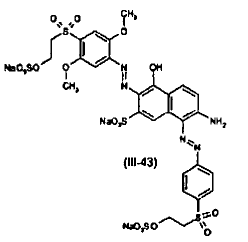 | 70 : 15 : 15 |
| 228 | (I-1) | (II-4) | (III-1) | 67 : 13 : 20 |
| 229 | (I-1) | (II-6) | (III-1) | 68 : 12 : 20 |
| 230 | (I-1) | (II-9) | (III-1) | 68 : 10 : 22 |
| 231 | (I-1) | (II-10) | (III-1) | 68 : 14 : 18 |
| 232 | (I-1) | (II-22) | (III-1) | 65 : 15 : 20 |
| 233 | (I-1) | (II-24) | (III-1) | 66 : 14 : 20 |
| 234 | (I-1) | (II-25) | (III-1) | 67 : 12 : 21 |
| 235 | (I-1) | (II-26) | (III-1) | 68 : 10 : 22 |
| 236 | (I-1) | (II-1) | (III-2) | 67 : 13 : 20 |
| 237 | (I-1) | (II-6) | (III-2) | 68 : 12 : 20 |
| 238 | (I-1 | (II-9) | (III-2) | 70 : 10 : 20 |
| 239 | (I-1) | (II-10) | (III-2) | 66 : 14 : 20 |
| 240 | (I-1) | (II-22) | (III-2) | 65 : 15 : 20 |
| 241 | (I-1) | (II-24) | (III-2) | 67 : 14 : 19 |
| 242 | (I-1) | (II-25) | (III-2) | 67 : 12 : 21 |
| 243 | (I-1) | (II-26) | (III-2) | 68 : 10 : 22 |
| 244 | (I-2) | (II-1) | (III-1) | 67 : 13 : 20 |
| 245 | (I-2) | (II-4) | (III-2) | 65 : 17 : 18 |
| 246 | (I-2) | (II-6) | (III-3) | 68 : 16 : 16 |
| 247 | (I-2) | (II-9) | (III-5) | 70 : 12 : 18 |
| 248 | (I-2) | (II-10) | (III-9) | 68 : 20 : 12 |
| 249 | (I-2) | (II-22) | (III-32) | 70 : 20 : 10 |
| 250 | (I-2) | (II-1) | (III-12) | 75 : 15 : 10 |
| 251 | (I-2) | (II-6) | (III-16) | 70 : 12 : 18 |
| 252 | (I-2) | (II-9) | (III-37) | 73 : 15 : 12 |
| 253 | (I-2) | (II-4) | (III-41) | 67 : 16 : 17 |
| 254 | (I-3) | (II-1) | (III-2) | 67 : 15 : 18 |
| 255 | (I-3) | (II-4) | (III-1) | 67 : 13 : 20 |
| 256 | (I-3) | (II-6) | (III-9) | 70 : 14 : 16 |
| 257 | (I-3) | (II-9) | (III-6) | 70 : 12 : 18 |
| 258 | (I-3) | (II-10) | (III-5) | 68 : 10 : 22 |
| 259 | (I-3) | (II-22) | (III-3) | 70 : 10 : 20 |
| 260 | (I-3) | (II-6) | (III-12) | 73 : 12 : 15 |
| 261 | (I-3) | (II-1) | (III-16) | 68 : 12 : 20 |
| 262 | (I-3) | (II-4) | (III-37) | 72 : 10 : 18 |
| 263 | (I-3) | (II-9) | (III-41) | 67 : 13 : 20 |
| 264 | (I-4) | (II-1) | (III-1) | 70 : 8 : 22 |
| 265 | (I-4) | (II-4) | (III-6) | 73 : 7 : 20 |
| 266 | (I-4) | (II-5) | (III-3) | 68 : 12 : 20 |
| 267 | (I-4) | (II-6) | (III-2) | 70 : 10 : 20 |
| 268 | (I-4) | (II-7) | (III-5) | 72 : 8 : 20 |
| 269 | (I-4) | (II-9) | (III-32) | 70 : 14 : 16 |
| 270 | (I-4) | (II-10) | (III-12) | 73 : 10 : 17 |
| 271 | (I-4) | (II-22) | (III-41) | 68 : 10 : 22 |
| 272 | (I-4) | (II-9) | (III-16) | 70 : 15 : 15 |
| 273 | (I-4) | (II-6) | (III-37) | 70 : 12 : 18 |
| 274 | (I-5) | (II-1) | (III-1) | 67 : 10 : 23 |
| 275 | (I-5) | (II-4) | (III-3) | 70 : 10 : 20 |
| 276 | (I-5) | (II-6) | (III-6) | 72 : 13 : 15 |
| 277 | (I-5) | (II-7) | (III-5) | 73 : 8 : 19 |
| 278 | (I-5) | (II-9) | (III-2) | 68 : 14 : 18 |
| 279 | (I-5) | (II-10) | (III-41) | 68 : 10 : 22 |
| 280 | (I-6) | (II-1) | (III-7) | 69 : 12 : 19 |
| 281 | (I-6) | (II-4) | (III-1) | 67 : 11 : 22 |
| 282 | (I-6) | (II-6) | (III-9) | 70 : 10 : 20 |
| 283 | (I-6) | (II-9) | (III-32) | 70 : 15 : 15 |
| 284 | (I-6) | (II-13) | (III-22) | 68 : 12 : 20 |
| 285 | (I-6) | (II-14) | (III-23) | 67 : 10 : 23 |
| 286 | (I-7) | (II-1) | (III-5) | 70 : 12 : 18 |
| 287 | (I-7) | (11-4) | (III-2) | 68 : 12 : 20 |
| 288 | (I-7) | (II-6) | (III-1) | 72 : 11 : 17 |
| 289 | (I-7) | (II-9) | (III-32) | 75 : 10 : 15 |
| 290 | (I-7) | (II-18) | (III-4) | 72 : 12 : 16 |
| 291 | (I-7) | (II-19) | (III-16) | 67 : 13 : 20 |
| 292 | (I-7) | (II-20) | (III-3) | 67 : 10 : 23 |
| 293 | (I-7) | (II-21) | (III-41) | 60 : 18 : 22 |
| 294 | (I-8) | (II-1) | (III-2) | 72 : 8 : 20 |
| 295 | (I-8) | (II-2) | (III-32) | 75 : 8 : 17 |
| 296 | (I-8) | (II-4) | (III-1) | 70 : 5 : 25 |
| 297 | (I-8) | (II-6) | (III-9) | 67 : 8 : 25 |
| 298 | (I-8) | (II-9) | (III-41) | 66 : 9 : 25 |
| 299 | (I-8) | (II-10) | (III-5) | 70 : 10 : 20 |
| 300 | (I-9) | (II-1) | (III-9) | 72 : 10 : 18 |
| 301 | (I-9) | (II-4) | (II-6) | 74 : 11 : 15 |
| 302 | (I-9) | (II-6) | (III-1) | 68 : 10 : 22 |
| 303 | (I-9) | (II-9) | (III-2) | 70 : 10 : 20 |
| 304 | (I-9) | (II-10) | (III-5) | 67 : 13 : 20 |
| 305 | (I-9) | (II-11) | (III-41) | 60 : 20 : 20 |
| 306 | (I-10) | (II-1) | (III-2) | 70 : 12 : 18 |
| 307 | (I-10) | (II-4) | (III-41) | 65 : 12 : 23 |
| 308 | (I-10) | (II-6) | (III-1) | 70 : 10 : 20 |
| 309 | (I-10) | (II-9) | (III-5) | 67 : 13 : 20 |
| 310 | (I-10) | (II-17) | (III-6) | 67 : 17 : 16 |
| 311 | (I-11) | (II-1) | (III-5) | 68 : 15 : 17 |
| 312 | (I-11) | (II-4) | (III-1) | 66 : 14 : 20 |
| 313 | (I-11) | (II-6) | (III-6) | 70 : 14 : 16 |
| 314 | (I-11) | (II-9) | (III-2) | 67 : 13 : 20 |
| 315 | (I-11) | (II-10) | (III-41) | 65 : 15 : 20 |
| 316 | (I-12) | (II-1) | (III-1) | 66 : 14 : 20 |
| 317 | (I-12) | (II-4) | (III-3) | 67 : 13 : 20 |
| 318 | (I-12) | (II-6) | (III-32) | 70 : 15 : 15 |
| 319 | (I-12) | (II-9) | (III-9) | 66 : 12 : 22 |
| 320 | (I-12) | (II-13) | (III-7) | 70 : 14 : 16 |
| 321 | (I-12) | (II-14) | (III-22) | 72 : 13 : 15 |
| 322 | (I-13) | (II-6) | (III-2) | 72 : 15 : 13 |
| 323 | (I-13) | (II-1) | (III-5) | 70 : 18 : 12 |
| 324 | (I-13) | (II-9) | (III-6) | 75 : 15 : 10 |
| 325 | (I-13) | (II-4) | (III-1) | 68 : 17 : 15 |
| 326 | (I-13) | (II-15) | (III-3) | 70 : 20 : 10 |
| 327 | (I-13) | (II-22) | (III-24) | 68 : 17 : 15 |
| 328 | (I-14) | (II-1) | (III-32) | 74 : 18 : 8 |
| 329 | (I-14) | (II-9) | (III-1) | 70 : 15 : 15 |
| 330 | (I-14) | (II-6) | (III-5) | 72 : 18 : 10 |
| 331 | (I-14) | (II-4) | (III-2) | 70 : 17 : 13 |
| 332 | (I-14) | (II-16) | (III-3) | 68 : 20 : 12 |
| 333 | (I-14) | (II-10) | (III-25) | 67 : 18 : 15 |
| 334 | (I-15) | (II-1) | (III-1) | 67 : 13 : 20 |
| 335 | (I-15) | (II-4) | (III-2) | 69 : 14 : 17 |
| 336 | (I-15) | (II-6) | (III-5) | 70 : 15 : 15 |
| 337 | (I-15) | (II-8) | (III-32) | 75 : 13 : 12 |
| 338 | (I-15) | (II-9) | (III-41) | 70 : 10 : 20 |
| 339 | (I-15) | (II-10) | (III-37) | 75 : 15 : 10 |
| 340 | (I-16) | (II-1) | (III-5) | 70 : 12 : 18 |
| 341 | (I-16) | (II-4) | (III-2) | 68 : 12 : 20 |
| 342 | (I-16) | (II-6) | (III-1) | 72 : 12 : 16 |
| 343 | (I-16) | (II-9) | (III-32) | 75 : 12 : 13 |
| 344 | (I-16) | (II-10) | (III-41) | 65 : 13 : 22 |
| 345 | (I-16) | (II-18) | (III-4) | 72 : 12 : 16 |
| 346 | (I-16) | (II-19) | (III-16) | 67 : 13 : 20 |
| 347 | (I-16) | (II-20) | (III-3) | 68 : 14 : 18 |
| 348 | (I-17) | (II-1) | (III-1) | 70 : 15 : 15 |
| 349 | (I-17) | (11-4) | (III-2) | 67 : 17 : 16 |
| 350 | (I-17) | (II-6) | (III-3) | 68 : 15 : 17 |
| 351 | (I-17) | (II-9) | (III-5) | 70 : 18 : 12 |
| 352 | (I-18) | (II-1) | (III-5) | 68 : 18 : 14 |
| 353 | (I-18) | (II-4) | (III-2) | 70 : 15 : 15 |
| 354 | (I-18) | (II-6) | (III-1) | 70 : 12 : 18 |
| 355 | (I-18) | (II-9) | (III-6) | 72 : 18 : 10 |
| 356 | (I-18) | (II-20) | (III-16) | 67 : 13 : 20 |
| 357 | (I-18) | (II-21) | (III-20) | 67 : 15 : 18 |
| 358 | (I-18) | (II-23) | (III-21) | 68 : 16 : 16 |
| 359 | (I-19) | (II-1) | (III-2) | 67 : 16 : 17 |
| 360 | (I-19) | (II-4) | (III-3) | 68 : 16 : 16 |
| 361 | (I-19) | (II-6) | (III-32) | 70 : 17 : 13 |
| 362 | (I-19) | (II-9) | (III-5) | 72 : 14 : 14 |
| 363 | (I-19) | (II-18) | (III-16) | 70 : 13 : 17 |
| 364 | (I-19) | (II-23) | (III-21) | 66 : 15 : 19 |
| 365 | (I-20) | (II-1) | (III-6) | 69 : 18 : 13 |
| 366 | (I-20) | (II-4) | (III-2) | 67 : 16 : 17 |
| 367 | (I-20) | (II-6) | (III-5) | 72 : 14 : 14 |
| 368 | (I-20) | (II-9) | (III-1) | 66 : 14 : 20 |
| 369 | (I-20) | (II-19) | (III-16) | 70 : 14 : 16 |
| 370 | (I-20) | (II-23) | (III-21) | 65 : 15 : 20 |
| 371 | (I-21) | (II-1) | (III-2) | 72 : 8 : 20 |
| 372 | (I-21) | (II-2) | (III-6) | 75 : 9 : 16 |
| 373 | (I-21) | (II-4) | (III-1) | 70 : 7 : 23 |
| 374 | (I-21) | (II-6) | (III-9) | 67 : 10 : 23 |
| 375 | (I-21) | (II-9) | (III-41) | 66 : 9 : 25 |
| 376 | (I-21) | (II-10) | (III-5) | 70 : 10 : 20 |

**Farbstoff-Mischungen gemäß Beispiel 4**

| | | | | |
|---|---|---|---|---|
| Beispiel | Farbstoff nach allg. Formel (I) | Farbstoff nach allg. Formel (11) | Farbstoff nach allg. Formel (IV) | Verhältnis (I):(II):(IV) |
| 377 | (I-1) | (II-6) | 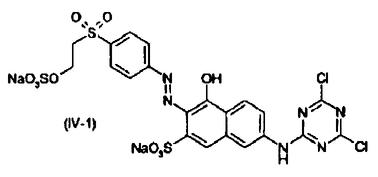 | 70 : 10 : 20 |
| 378 | (I-1) | (II-1) | 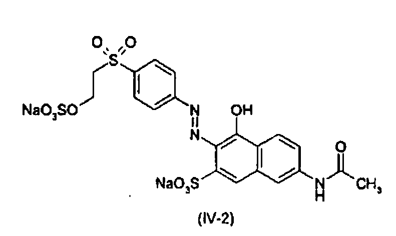 | 66 : 12 : 22 |
| 379 | (I-1) | (II-4) | 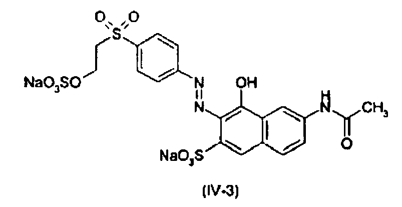 | 65 : 10 : 25 |
| 380 | (I-1) | (II-10) | 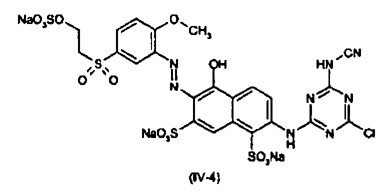 | 67 : 16 : 17 |
| 381 | (I-1) | (II-22) | 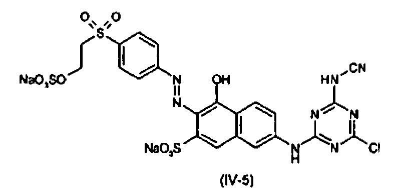 | 70 : 13 : 17 |
| 382 | (I-1) | (II-1) | 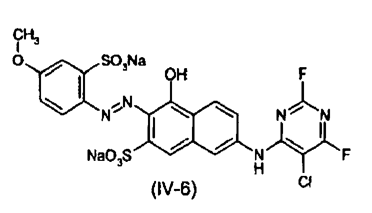 | 70 : 12 : 18 |
| 383 | (I-1) | (II-9) | 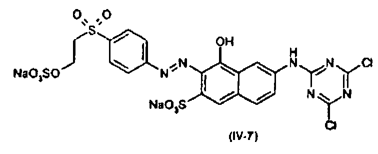 | 70 : 10 : 20 |
| 384 | (I-1) | (II-4) | 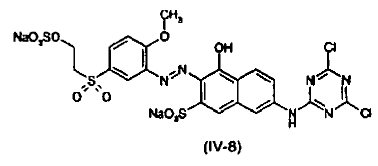 | 70 : 15 : 15 |
| 385 | (I-1) | (II-3) | 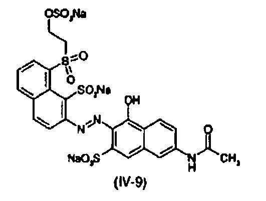 | 66 : 17 : 17 |
| 386 | (I-1) | (II-6) | 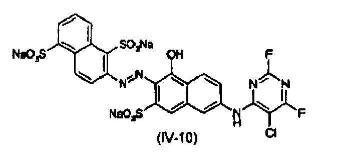 | 70 : 14 : 16 |
| 387 | (I-1) | (II-10) | 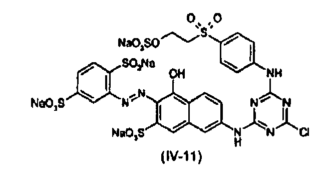 | 67 : 12 : 21 |
| 388 | (I-1) | (II-19) | 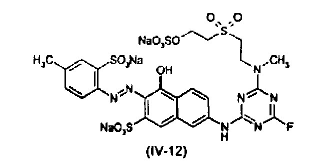 | 65 : 12 : 23 |
| 389 | (I-1) | (II-6) | 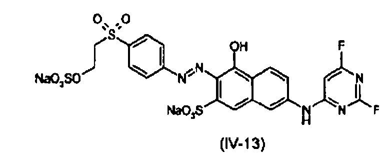 | 70 : 10 : 20 |
| 390 | (I-1) | (II-9) | 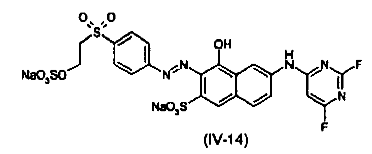 | 72 : 10 : 18 |
| 391 | (I-1) | (II-6) | 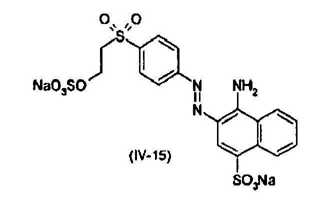 | 66 : 12 : 22 |
| 392 | (I-1) | (II-1) | 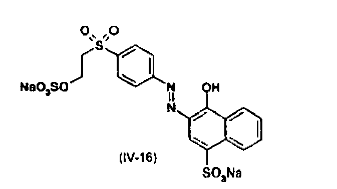 | 65 : 10 : 25 |
| 393 | (I-1) | (II-4) | 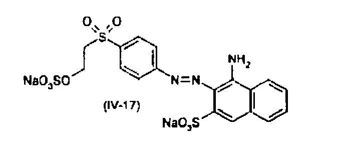 | 65 : 18 : 17 |
| 394 | (I-1) | (II-20) | 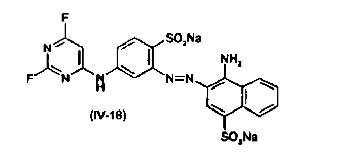 | 68 : 14 : 18 |
| 395 | (1-1) | (II-8) | 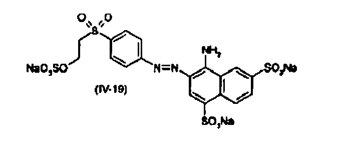 | 65 : 15 : 20 |
| 396 | (1-1) | (II-10) | 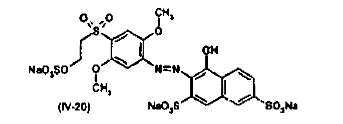 | 68 : 16 : 16 |
| 397 | (1-1) | (II-5) | 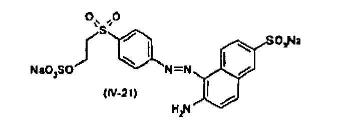 | 67 : 16 : 17 |
| 398 | (I-1) | (II-3) | 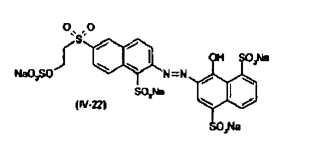 | 68 : 16 : 16 |
| 399 | (I-1) | (II-1) | 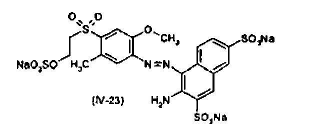 | 70 : 14 : 16 |
| 400 | (I-1) | (II-6) | 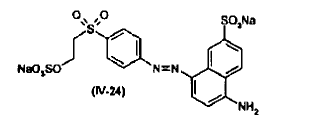 | 67 : 15 : 18 |
| 401 | (I-1) | (II-7) | 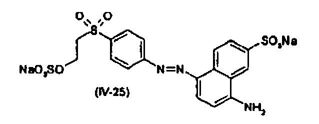 | 68 : 14 : 18 |
| 402 | (I-1) | (II-12) | 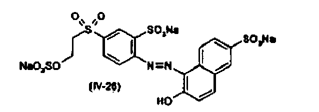 | 66 : 12 : 22 |
| 403 | (I-1) | (II-22) | 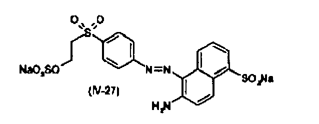 | 67 : 13 : 20 |
| 404 | (I-1) | (II-5) | 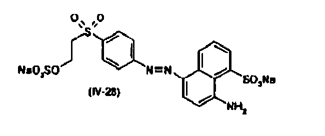 | 65 : 18 : 17 |
| 405 | (I-1) | (I-10) | 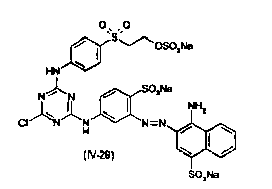 | 67 : 20 : 13 |
| 406 | (I-1) | (II-1) | (IV-1) | 72 : 10 : 18 |
| 407 | (I-1) | (II-4) | (IV-1) | 70 : 10 : 20 |
| 408 | (I-1) | (II-9) | (IV-1) | 74 : 10 : 16 |
| 409 | (I-1) | (II-4) | (IV-2) | 65 : 13 : 22 |
| 410 | (I-1) | (II-6) | (IV-2) | 67 : 10 : 23 |
| 411 | (I-1) | (II-9) | (IV-2) | 70 : 10 : 20 |
| 412 | (I-2) | (II-1) | (IV-1) | 67 : 13 : 20 |
| 413 | (I-2) | (II-3) | (IV-3) | 65 : 13 : 22 |
| 414 | (I-2) | (II-4) | (IV-2) | 65 : 17 : 18 |
| 415 | (I-2) | (II-6) | (IV-13) | 70 : 16 : 14 |
| 416 | (I-2) | (II-9) | (IV-15) | 70 : 12 : 18 |
| 417 | (I-2) | (II-10) | (IV-27) | 68 : 20 : 12 |
| 418 | (I-2) | (II-6) | (IV-4) | 68 : 16 : 16 |
| 419 | (I-2) | (II-9) | (IV-8) | 70 : 13 : 17 |
| 420 | (I-2) | (II-22) | (IV-7) | 67 : 10 : 23 |
| 421 | (I-3) | (II-1) | (IV-2) | 67 : 13 : 20 |
| 422 | (I-3) | (II-4) | (IV-1) | 67 : 15 : 18 |
| 423 | (I-3) | (II-6) | (IV-15) | 68 : 14 : 18 |
| 424 | (I-3) | (II-7) | (IV-13) | 70 : 15 : 15 |
| 425 | (I-3) | (II-9) | (IV-27) | 70 : 12 : 18 |
| 426 | (I-3) | (II-10) | (IV-3) | 68 : 10 : 22 |
| 427 | (I-4) | (II-1) | (IV-15) | 65 : 10 : 25 |
| 428 | (I-4) | (II-4) | (IV-3) | 68 : 10 : 22 |
| 429 | (I-4) | (II-5) | (IV-13) | 70 : 15 : 15 |
| 430 | (I-4) | (II-6) | (IV-2) | 68 : 12 : 20 |
| 431 | (I-4) | (II-7) | (IV-21) | 67 : 15 : 18 |
| 432 | (I-4) | (II-9) | (IV-1) | 70 : 12 : 18 |
| 433 | (I-4) | (II-10) | (IV-27) | 68 : 10 : 22 |
| 434 | (I-4) | (II-6) | (IV-7) | 65 : 12 : 23 |
| 435 | (I-4) | (II-22) | (IV-20) | 65 : 10 : 25 |
| 436 | (I-5) | (II-1) | (IV-3) | 66 : 10 : 24 |
| 437 | (I-5) | (II-2) | (IV-15) | 68 : 15 : 17 |
| 438 | (I-5) | (II-4) | (IV-2) | 70 : 10 : 20 |
| 439 | (I-5) | (II-6) | (IV-1) | 68 : 12 : 20 |
| 440 | (I-5) | (II-9) | (IV-21) | 65 : 10 : 25 |
| 441 | (I-5) | (II-10) | (IV-27) | 67 : 11 : 22 |
| 442 | (I-5) | (II-22) | (IV-23) | 65 : 15 : 20 |
| 443 | (I-6) | (II-1) | (IV-21) | 68 : 10 : 22 |
| 444 | (I-6) | (II-4) | (IV-2) | 68 : 12 : 20 |
| 445 | (I-6) | (II-6) | (IV-15) | 66 : 12 : 22 |
| 446 | (I-6) | (II-9) | (IV-1) | 70 : 14 : 16 |
| 447 | (I-6) | (II-10) | (IV-27) | 67 : 10 : 23 |
| 448 | (I-6) | (II-13) | (IV-13) | 67 : 15 : 18 |
| 449 | (I-6) | (II-14) | (IV-7) | 68 : 14 : 18 |
| 450 | (I-7) | (II-1) | (IV-1) | 67 : 13 : 20 |
| 451 | (I-7) | (II-4) | (IV-2) | 70 : 10 : 20 |
| 452 | (I-7) | (II-6) | (IV-15) | 68 : 12 : 20 |
| 453 | (I-7) | (II-9) | (IV-27) | 65 : 10 : 25 |
| 454 | (I-7) | (II-10) | (IV-1) | 67 : 18 : 15 |
| 455 | (I-7) | (II-18) | (IV-18) | 67 : 15 : 18 |
| 456 | (I-7) | (II-20) | (IV-29) | 65 : 15 : 20 |
| 457 | (I-8) | (II-1) | (IV-3) | 67 : 13 : 20 |
| 458 | (I-8) | (II-2) | (IV-13) | 70 : 15 : 15 |
| 459 | (I-8) | (II-4) | (IV-15) | 66 : 14 : 20 |
| 460 | (I-8) | (II-6) | (IV-1) | 70 : 13 : 17 |
| 461 | (I-8) | (II-9) | (IV-27) | 65 : 13 : 22 |
| 462 | (I-8) | (II-10) | (IV-2) | 68 : 12 : 20 |
| 463 | (I-9) | (II-1) | (IV-2) | 68 : 11 : 21 |
| 464 | (I-9) | (II-4) | (IV-15) | 70 : 10 : 20 |
| 465 | (I-9) | (II-6) | (IV-27) | 68 : 12 : 20 |
| 466 | (I-9) | (II-9) | (IV-1) | 70 : 12 : 18 |
| 467 | (I-9) | (II-10) | (IV-3) | 67 : 11 : 22 |
| 468 | (1-9) | (II-111) | (IV-13) | 67 : 18 : 15 |
| 469 | (I-10) | (II-1) | (IV-15) | 66 : 12 : 22 |
| 470 | (I-10) | (II-4) | (IV-27) | 68 : 12 : 20 |
| 471 | (I-10) | (II-6) | (IV-1) | 68 : 15 : 17 |
| 472 | (I-10) | (II-9) | (IV-2) | 70 : 12 : 18 |
| 473 | (I-10) | (II-17) | (IV-7) | 66 : 18 : 16 |
| 474 | (I-11) | (II-1) | (IV-21) | 68 : 12 : 20 |
| 475 | (I-11) | (II-4) | (IV-3) | 67 : 14 : 19 |
| 476 | (I-11) | (II-5) | (IV-13) | 70 : 15 : 15 |
| 477 | (I-11) | (II-6) | (IV-1) | 70 : 13 : 17 |
| 478 | (I-11) | (II-7) | (IV-27) | 67 : 15 : 18 |
| 479 | (I-11) | (II-9) | (IV-15) | 68 : 12 : 20 |
| 480 | (I-11) | (II-10) | (IV-2) | 70 : 10 : 20 |
| 481 | (I-12) | (II-1) | (IV-27) | 68 : 10 : 22 |
| 482 | (I-12) | (II-4) | (IV-3) | 66 : 12 : 22 |
| 483 | (I-12) | (II-6) | (IV-1) | 68 : 12 : 20 |
| 484 | (I-12) | (II-9) | (IV-15) | 68 : 14 : 18 |
| 485 | (I-12) | (II-10) | (IV-21) | 67 : 10 : 23 |
| 486 | (I-12) | (II-13) | (IV-7) | 67 : 15 : 18 |
| 487 | (I-12) | (II-14) | (IV-13) | 68 : 14 : 18 |
| 488 | (I-13) | (II-1) | (IV-2) | 68 : 12 : 20 |
| 489 | (I-13) | (II-4) | (IV-1) | 70 : 16 : 14 |
| 490 | (I-13) | (II-6) | (IV-27) | 68 : 12 : 20 |
| 491 | (I-13) | (II-9) | (IV-7) | 67 : 14 : 19 |
| 492 | (I-13) | (II-10) | (IV-15) | 68 : 10 : 22 |
| 493 | (I-13) | (II-15) | (IV-29) | 67 : 16 : 17 |
| 494 | (I-14) | (II-1) | (IV-27) | 70 : 10 : 20 |
| 495 | (I-14) | (II-4) | (IV-2) | 70 : 15 : 15 |
| 496 | (I-14) | (II-6) | (IV-7) | 72 : 12 : 16 |
| 497 | (I-14) | (II-9) | (IV-15) | 66 : 14 : 20 |
| 498 | (I-14) | (II-10) | (IV-1) | 73 : 12 : 15 |
| 499 | (I-14) | (II-16) | (IV-3) | 68 : 14 : 18 |
| 500 | (I-15) | (II-1) | (IV-7) | 68 : 14 : 18 |
| 501 | (I-15) | (II-4) | (IV-15) | 68 : 10 : 22 |
| 502 | (I-15) | (II-6) | (IV-2) | 68 : 12 : 20 |
| 503 | (I-15) | (II-8) | (IV-9) | 72 : 14 : 14 |
| 504 | (I-15) | (II-9) | (IV-1) | 70 : 16 : 14 |
| 505 | (I-15) | (II-10) | (IV-27) | 70 : 10 : 20 |
| 506 | (I-16) | (II-1) | (IV-1) | 71 : 14 : 15 |
| 507 | (I-16) | (II-4) | (IV-2) | 70 : 10 : 20 |
| 508 | (I-16) | (II-6) | (IV-15) | 68 : 12 : 20 |
| 509 | (I-16) | (II-9) | (IV-27) | 67 : 10 : 23 |
| 510 | (I-16) | (II-10) | (IV-7) | 68 : 17 : 15 |
| 511 | (I-16) | (II-19) | (IV-18) | 67 : 15 : 18 |
| 512 | (I-16) | (II-20) | (IV-13) | 70 : 15 : 15 |
| 513 | (I-17) | (II-1) | (IV-1) | 70 : 13 : 17 |
| 514 | (I-17) | (II-4) | (IV-2) | 68 : 12 : 20 |
| 515 | (I-17) | (II-6) | (IV-15) | 66 : 12 : 22 |
| 516 | (I-17) | (II-9) | (IV-8) | 72 : 11 : 17 |
| 517 | (I-17) | (II-10) | (IV-7) | 70 : 12 : 18 |
| 518 | (I-17) | (II-19) | (IV-13) | 69 : 15 : 16 |
| 519 | (I-17) | (II-20) | (IV-14) | 67 : 14 : 19 |
| 520 | (I-18) | (II-1) | (IV-2) | 67 : 13 20 |
| 521 | (I-18) | (II-4) | (IV-1) | 72 : 12 : 16 |
| 522 | (I-18) | (II-6) | (IV-27) | 68 : 12 : 20 |
| 523 | (I-18) | (II-9) | (IV-15) | 68 : 10 : 22 |
| 524 | (I-18) | (II-10) | (IV-7) | 68 : 13 : 19 |
| 525 | (I-18) | (II-20) | (IV-18) | 67 : 15 : 18 |
| 526 | (I-18) | (II-21) | (IV-13) | 69 : 17 : 14 |
| 527 | (I-19) | (II-1) | (IV-15) | 68 : 14 : 18 |
| 528 | (I-19) | (II-4) | (IV-2) | 70 : 10 : 20 |
| 529 | (I-19) | (II-6) | (IV-1) | 70 : 14 : 16 |
| 530 | (I-19) | (II-9) | (IV-27) | 67 : 11 : 22 |
| 531 | (I-19) | (II-10) | (IV-21) | 65 : 16 : 19 |
| 532 | (I-19) | (II-23) | (IV-7) | 67 : 18 : 15 |
| 533 | (I-20) | (II-1) | (IV-21) | 66 : 13 : 21 |
| 534 | (I-20) | (II-4) | (IV-1) | 75 : 10 : 15 |
| 535 | (I-20) | (II-6) | (IV-15) | 67 : 14 : 19 |
| 536 | (I-20) | (II-9) | (IV-2) | 69 : 11 : 20 |
| 537 | (I-20) | (II-10) | (IV-7) | 68 : 16 : 16 |
| 538 | (I-20) | (II-23) | (IV-27) | 65 : 17 : 18 |
| 539 | (I-21) | (II-1) | (IV-2) | 67 : 13 : 20 |
| 540 | (I-21) | (II-2) | (IV-1) | 71 : 14 : 15 |
| 541 | (I-21) | (II-4) | (IV-15) | 67 : 13 : 20 |
| 542 | (I-21) | (II-6) | (IV-7) | 68 : 14 : 18 |
| 543 | (I-21) | (II-9) | (IV-27) | 68 : 12 : 20 |
| 544 | (I-21) | (II-10) | (IV-3) | 70 : 10 : 20 |

Farbstoff-Mischungen gemäß Beispiel 5

| Bespiel | Farbstoff nach allg. Formel (I) | Farbstoff nach allg. Formel (II) | Farbstoff nach allg. Formel (III) | Farbstoff nach Formel (IV) | Verhältnis (I) : (II) : (III) : (IV) |
|---|---|---|---|---|---|
| 545 | (I-1) | (II-6) | (III-6) | (IV-1) | 68 : 10 : 12 : 10 |
| 546 | (I-1) | (II-9) | (III-2) | (IV-2) | 65 : 10 : 13 : 12 |
| 547 | (I-1) | (II-4) | (III-3) | (IV-3) | 66 : 11 : 12 : 11 |
| 548 | (I-1) | (II-1) | (III-5) | (IV-15) | 64 : 11 : 12 : 13 |
| 549 | (I-1) | (II-10) | (III-7) | (IV-4) | 68 : 15 : 12 : 5 |
| 550 | (I-1) | (II-9) | (III-1) | (IV-7) | 66 : 11 : 13 : 10 |
| 551 | (I-1) | (II-22) | (III-9) | (IV-8) | 67 : 12 : 13 : 8 |
| 552 | (I-1) | (II-1) | (III-12) | (IV-13) | 67 : 11 : 10 : 12 |
| 553 | (I-1) | (II-6) | (III-16) | (IV-5) | 65 : 10 : 13 : 12 |
| 554 | (I-1) | (II-4) | (III-32) | (IV-27) | 66 : 10 : 12 : 12 |
| 555 | (I-1) | (II-6) | (III-37) | (IV-16) | 66 : 11 : 13 : 10 |
| 556 | (I-1) | (II-9) | (III-41) | (IV-21) | 62 : 8 : 15 : 15 |
| 557 | (I-2) | (II-6) | (III-2) | (IV-1) | 67 : 10 : 15 : 8 |
| 558 | (I-3) | (II-1) | (III-5) | (IV-2) | 66 : 10 : 14 : 10 |
| 559 | (I-4) | (II-9) | (III-9) | (IV-1) | 67 : 10 : 14 : 9 |
| 560 | (I-8) | (II-2) | (III-32) | (IV-15) | 68 : 10 : 12 : 10 |
| 561 | (I-9) | (II-4) | (III-2) | (IV-1) | 67 : 10 : 15 : 8 |
| 562 | (I-21) | (II-9) | (III-3) | (IV-2) | 65 : 10 : 14 : 11 |

Farbstoff-Mischungen gemäß Beispiel 6

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 563 | (I-1) | (II-1) | (III-1) | 69 : 13 : 18 |
| 564 | (I-1) | (II-4) | (III-1) | 65 : 15 : 20 |
| 565 | (I-1) | (II-9) | (III-1) | 70 : 12 : 18 |
| 566 | (I-1) | (II-22) | (III-1) | 64 : 18 : 18 |
| 567 | (I-1) | (II-24) | (III-1) | 69 : 14 : 17 |
| 568 | (I-1) | (II-25) | (III-1) | 65 : 16 : 19 |
| 569 | (I-1) | (II-26) | (III-1) | 66 : 14 : 20 |

Farbstoff-Mischungen gemäß Beispiel 7

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 570 | (I-1) | (II-4) | (III-2) | 67 : 15 : 8 |
| 571 | (I-1) | (11-6) | (III-2) | 66 : 14 : 20 |
| 572 | (I-1) | (II-9) | (III-2) | 68 : 12 : 20 |
| 573 | (I-1) | (II-1) | (III-3) | 66 : 15 : 19 |
| 574 | (I-1) | (II-4) | (III-3) | 65 : 15 : 20 |
| 575 | (I-1) | (II-6) | (III-3) | 68 : 12 : 20 |
| 576 | (I-1) | (II-9) | (III-3) | 67 : 15 : 18 |
| 577 | (I-1) | (II-1) | (III-12) | 70 : 15 : 15 |
| 578 | (I-1) | (II-4) | (III-13) | 67 : 13 : 20 |
| 579 | (I-1) | (II-6) | (III-15) | 68 : 14 : 18 |
| 580 | (I-1) | (II-9) | (III-27) | 66 : 17 : 17 |
| 581 | (I-1) | (II-22) | (III-39) | 66 : 16 : 18 |
| 582 | (I-1) | (II-24) | (III-15) | 65 : 15 : 20 |
| 583 | (I-1) | (II-25) | (III-2) | 67 : 14 : 19 |
| 584 | (I-1) | (II-26) | (III-3) | 68 : 15 : 17 |
| 585 | (I-4) | (II-5) | (III-8) | 72 : 11 : 17 |
| 586 | (I-4) | (II-7) | (III-8) | 70 : 12 : 18 |
| 587 | (I-4) | (II-10) | (III-8) | 73 : 12 : 15 |
| 588 | (I-4) | (II-5) | (III-43) | 72 : 12 : 16 |
| 589 | (I-4) | (II-7) | (III-43) | 71 : 12 : 17 |
| 590 | (I-4) | (II-10) | (III-43) | 72 : 13 : 15 |

Farbstoff-Mischungen gemäß Beispiel 8

| Beispiel | Farbstoff nach allg. Formel (I) | Farbstoff nach allg. Formel (II) | Farbstoff nach Formel (IV) | verhältnis (I):(II):(IV) |
|---|---|---|---|---|
| 591 | (I-1) | (II-1) | (IV-7) | 66 : 16 : 18 |
| 592 | (I-1) | (II-4) | (IV-15) | 66 : 12 : 22 |
| 593 | (I-1) | (II-6) | (IV-2) | 67 : 13 : 20 |
| 594 | (I-1) | (II-9) | (IV-1) | 72 : 13 : 15 |
| 595 | (I-1) | (II-22) | (IV-13) | 71 : 15 : 14 |
| 596 | (I-1) | (II-24) | (IV-27) | 66 : 14 : 20 |
| 597 | (I-1) | (II-25) | (IV-3) | 67 : 12 : 21 |
| 598 | (I-1) | (II-26) | (IV-14) | 70 : 15 : 15 |
| 599 | (I-1) | (II-1) | (IV-5) | 71 : 14 : 15 |
| 600 | (I-1) | (II-4) | (IV-16) | 65 : 15 : 20 |
| 601 | (I-1) | (II-6) | (IV-17) | 67 : 11 : 22 |
| 602 | (I-1) | (II-9) | (IV-21) | 67 : 13 : 20 |
| 603 | (I-1) | (II-22) | (IV-19) | 66 : 16 : 18 |
| 604 | (I-1) | (II-24) | (IV-24) | 66 : 12 : 22 |
| 605 | (I-1) | (II-25) | (IV-25) | 67 : 13 : 20 |
| 606 | (I-1) | (II-26) | (IV-28) | 65 : 15 : 20 |
| 607 | (I-1) | (II-1) | (IV-1) | 67 : 15 : 18 |
| 608 | (I-1) | (II-6) | (IV-1) | 70 : 13 : 17 |
| 609 | (I-1) | (II-9) | (IV-1) | 71 : 11 : 18 |
| 610 | (I-1) | (II-4) | (IV-2) | 65 : 15 : 20 |
| 611 | (I-1) | (II-6) | (IV-2) | 66 : 12 : 22 |
| 612 | (I-1) | (II-1) | (IV-15) | 65 : 13 : 22 |
| 613 | (I-1) | (II-6) | (IV-15) | 66 : 14 : 20 |
| 614 | (I-1) | (II-9) | (IV-15) | 68 : 13 : 19 |
| 615 | (I-4) | (II-5) | (IV-20) | 68 : 13 : 19 |
| 616 | (1-4) | (II-7) | (IV-20) | 70 : 12 : 18 |
| 617 | (I-4) | (II-10) | (IV-20) | 70 : 15 : 15 |

Farbstoff-Mischungen gemäß Beispiel 9

| Beispiel | Farbstoff nach allg. Formel (I) | Farbstoff nach allg. Formel (II) | Verhältnis (I): (II) |
|---|---|---|---|
| 618 | (I-1) | (II-1) | 68 : 32 |
| 619 | (I-1) | (II-6) | 70 : 30 |
| 620 | (I-1) | (II-9) | 73 : 27 |
| 621 | (I-1) | (II-22) | 67 : 33 |
| 622 | (I-1) | (II-24) | 69 : 31 |
| 623 | (I-1) | (II-25) | 65 : 35 |
| 624 | (I-1) | (II-26) | 66 : 34 |
| 625 | (I-4) | (II-5) | 69 : 31 |
| 626 | (I-4) | (II-7) | 67 : 33 |
| 627 | (I-4) | (II-10) | 70 : 30 |

Farbstoff-Mischungen gemäß Beispiel 10

| Beispiel | Farbstoff nach allg. Formel (I) | Farbstoff nach allg. Formel (II-x) | Farbstoff nach Formel (II-y) | Verhältnis (I):(II-x):(II-y) |
|---|---|---|---|---|
| 628 | (I-1) | (II-1) | (II-4) | 66 : 18 : 16 |
| 629 | (I-1) | (II-1) | (II-6) | 68 : 15 : 17 |
| 630 | (I-1) | (II-1) | (II-22) | 65 : 20 : 15 |
| 631 | (I-1) | (II-1) | (II-26) | 66 : 17 : 17 |
| 632 | (I-1) | (II-4) | (II-6) | 67 : 14 : 19 |
| 633 | (I-1) | (II-4) | (II-9) | 68 : 12 : 20 |
| 634 | (I-1) | (II-4) | (II-22) | 65 : 19 : 16 |
| 635 | (I-1) | (II-4) | (II-24) | 66 : 24 : 10 |
| 636 | (I-1) | (II-6) | (II-9) | 70 : 15 : 15 |
| 637 | (I-1) | (II-6) | (II-22) | 66 : 20 : 14 |
| 638 | (I-1) | (II-6) | (II-25) | 68 : 18 : 14 |
| 639 | (I-1) | (II-9) | (II-22) | 68 : 20 : 12 |
| 640 | (I-1) | (II-9) | (II-26) | 67 : 18 : 15 |
| 641 | (I-1) | (II-22) | (II-25) | 66 : 17 : 17 |
| 642 | (I-1) | (II-25) | (II-26) | 65 : 15 : 20 |
| 643 | (I-4) | (II-5) | (II-7) | 68 : 16 : 16 |
| 644 | (I-4) | (II-5) | (II-10) | 66 : 14 : 20 |
| 645 | (I-4) | (II-7) | (II-10) | 68 : 14 : 18 |

Farbstoff-Mischungen gemäß Beispiel 11

| Beispiel | Farbstoff nach allg. Formel (I) | Farbstoff nach allg. Formel (II) | Verhältnis (I) : (II) |
|---|---|---|---|
| 646 | (I-3) | (II-5) | 68 : 32 |
| 647 | (I-3) | (II-7) | 70 : 30 |
| 648 | (I-3) | (II-10) | 73 : 27 |
| 649 | (I-6) | (II-14) | 67 : 33 |
| 650 | (I-7) | (II-18) | 68 : 32 |
| 651 | (I-7) | (II-19) | 70 : 30 |
| 652 | (I-8) | (II-2) | 66 : 34 |
| 653 | (1-9) | (II-11) | 65 : 35 |
| 654 | (I-10) | (II-17) | 63 : 37 |
| 655 | (I-12) | (II-13) | 67 : 33 |
| 656 | (I-13) | (II-15) | 68 : 32 |
| 657 | (I-14) | (II-16) | 62 : 38 |
| 658 | (I-15) | (II-8) | 69 : 31 |
| 659 | (I-16) | (II-20) | 66 : 34 |
| 660 | (I-18) | (II-21) | 65 : 35 |

Farbstoff-Mischungen gemäß Beispiel 12

| Beispiel | Farbstoff nach allg. Formel (I) | Farbstoff nach allg. Formel (II-x) | Farbstoff nach Formel (II-y) | Verhältnis (I):(II-x):(II-y) |
|---|---|---|---|---|
| 661 | (I-1) | (II-1) | (II-2) | 66 : 18 : 16 |
| 662 | (I-1) | (II-1) | (II-18) | 66 : 22 : 12 |
| 663 | (I-1) | (II-2) | (II-3) | 70 : 20 : 10 |
| 664 | (I-1) | (II-4) | (II-5) | 66 : 17 : 17 |
| 665 | (I-1) | (II-6) | (II-7) | 68 : 15 : 17 |
| 666 | (I-1) | (II-6) | (II-8) | 68 : 17 : 15 |
| 667 | (I-1) | (II-6) | (II-20) | 67 : 20 : 13 |
| 668 | (I-1) | (II-6) | (II-21) | 66 : 19 : 15 |
| 669 | (I-1) | (II-7) | (II-8) | 68 : 16 : 16 |
| 670 | (I-1) | (II-7) | (II-20) | 67 : 18 : 15 |
| 671 | (I-1) | (II-9) | (II-10) | 68 : 14 : 18 |
| 672 | (I-1) | (II-9) | (II-11) | 68 : 20 : 12 |
| 673 | (I-1) | (II-9) | (II-12) | 67 : 20 : 13 |
| 674 | (I-1) | (II-9) | (II-19) | 68 : 22 : 10 |
| 675 | (I-1) | (II-10) | (11-11) | 68 : 17 : 15 |
| 676 | (I-1) | (II-10) | (II-12) | 66 : 20 : 14 |
| 677 | (I-1) | (II-10) | (II-19) | 67 : 19 : 14 |
| 678 | (I-1) | (II-11) | (II-12) | 68 : 16 : 16 |
| 679 | (I-1) | (II-13) | (II-9) | 66 : 17 : 17 |
| 680 | (I-1) | (II-13) | (II-10) | 70 : 16 : 14 |
| 681 | (I-1) | (II-13) | (II-12) | 72 : 16 : 12 |
| 682 | (I-1) | (II-13) | (II-19) | 70 : 20 : 10 |
| 683 | (I-1) | (II-14) | (II-24) | 68 : 12 : 20 |
| 684 | (I-1) | (II-15) | (II-16) | 64 : 22 : 14 |
| 685 | (I-1) | (II-15) | (II-25) | 67 : 13 : 20 |
| 686 | (I-1) | (II-16) | (II-25) | 68 : 12 : 20 |
| 687 | (I-1) | (II-17) | (II-26) | 66 : 14 : 20 |
| 688 | (I-1) | (II-22) | (II-23) | 60 : 20 : 20 |

Farbstoff-Mischungen gemäß Beispiel 13

| Beispiel | Farbstoff nach allg. Formel (I) | Farbstoff nach allg. Formel (II) | Farbstoff nach Formel (III) | Verhältnis (I):(II):(III) |
|---|---|---|---|---|
| 689 | (I-3) | (II-7) | (III-43) | 70 : 15 : 15 |
| 690 | (I-3) | (II-10) | (III-43) | 70 : 18 : 12 |
| 691 | (I-9) | (II-11) | (III-11) | 68 : 12 : 20 |
| 692 | (I-9) | (II-11) | (III-31) | 67 : 15 : 18 |
| 693 | (I-14) | (II-16) | (III-25) | 68 : 15 : 17 |
| 694 | (I-18) | (II-21) | (III-20) | 70 : 12 : 18 |
| 695 | (I-21) | (II-2) | (III-6) | 68 : 15 : 17 |
| 696 | (I-21) | (II-2) | (III-10) | 73 : 15 : 12 |
| 697 | (I-21) | (II-2) | (III-32) | 70 : 15 : 15 |

Farbstoff-Mischungen gemäß Beispiel 14

| Beispiel | Farbstoff nach allg. Formel (I-x) | Farbstoff nach allg. Formel (I-y) | Farbstoff nach allg. Formel (II) | Farbstoff nach Formel (III) | Verhältnis (I-x):(I-y):(II):(III) |
|---|---|---|---|---|---|
| 698 | (I-1) | (I-2) | (II-9) | (III-2) | 45 : 25 : 12 : 18 |
| 699 | (I-1) | (I-3) | (II-4) | (III-5) | 50 : 20 : 14 : 16 |
| 700 | (I-1) | (I-4) | (II-6) | (III-6) | 47 : 24 : 14 : 15 |
| 701 | (I-1) | (I-5) | (II-1) | (III-1) | 50 : 15 : 15 : 20 |
| 702 | (I-1) | (I-6) | (II-14) | (III-7) | 25 : 45 : 13 : 17 |
| 703 | (I-1) | (I-7) | (II-4) | (III-16) | 40 : 27 : 16 : 17 |
| 704 | (I-1) | (I-8) | (II-9) | (III-3) | 42 : 28 : 12 : 18 |
| 705 | (I-1) | (I-9) | (II-6) | (III-2) | 44 : 24 : 12 : 20 |
| 706 | (I-1) | (I-10) | (II-22) | (III-41) | 44 : 20 : 14 : 22 |
| 707 | (I-1) | (I-11) | (II-10) | (III-9) | 45 : 25 : 12 : 18 |
| 708 | (I-1) | (I-12) | (II-13) | (III-1) | 23 : 45 : 12 : 20 |
| 709 | (I-1) | (I-13) | (II-1) | (III-3) | 45 : 22 : 15 : 18 |
| 710 | (I-1) | (I-14) | (II-4) | (III-5) | 45 : 25 : 14 : 16 |
| 711 | (I-1) | (I-15) | (II-9) | (III-32) | 50 : 20 : 15 : 15 |
| 712 | (I-1) | (I-16) | (II-20) | (III-2) | 43 : 25 : 14 : 18 |
| 713 | (I-1) | (I-17) | (II-18) | (III-4) | 55 : 12 : 13 : 20 |
| 714 | (I-1) | (I-18) | (II-7) | (III-9) | 48 : 20 : 12 : 20 |
| 715 | (I-1) | (I-19) | (II-22) | (III-41) | 35 : 30 : 15 : 20 |
| 716 | (I-1) | (I-20) | (II-9) | (III-2) | 31 : 36 : 14 : 19 |
| 717 | (I-1) | (I-21) | (II-6) | (III-6) | 35 : 35 : 15 : 15 |
| 718 | (I-2) | (I-3) | (II-1) | (III-5) | 45 : 25 : 10 : 20 |
| 719 | (I-2) | (I-4) | (II-9) | (III-2) | 50 : 20 : 10 : 20 |
| 720 | (I-3) | (I-4) | (II-10) | (III-32) | 45 : 27 : 10 : 18 |
| 721 | (I-3) | (I-11) | (II-4) | (III-9) | 50 : 20 : 11 : 19 |
| 722 | (I-4) | (I-11) | (II-7) | (III-3) | 46 : 22 : 12 : 20 |

Farbstoff-Mischungen gemäß Beispiel 15

| Beispiel | Farbstoff nach alig. Formel (I) | Farbstoff nach allg. Formel (II) | Farbstoff nach Formel (III) | Verhältnis (I):(II):(III) |
|---|---|---|---|---|
| 723 | (I-2) | (II-1) | (III-1) | 67 : 15 : 18 |
| 724 | (I-3) | (II-4) | (III-1) | 68 : 16 : 16 |
| 725 | (I-4) | (II-6) | (III-1) | 70 : 13 : 17 |
| 726 | (I-9) | (II-9) | (III-1) | 68 : 14 : 18 |
| 727 | (I-8) | (II-22) | (III-1) | 67 : 15 : 18 |
| 728 | (I-7) | (II-24) | (III-1) | 68 : 15 : 17 |
| 729 | (I-5) | (II-25) | (III-1) | 70 : 12 : 18 |
| 730 | (I-11) | (II-26) | (III-1) | 68 : 15 : 17 |
| 731 | (I-6) | (II-4) | (III-7) | 67 : 13 : 20 |
| 732 | (I-12) | (II-6) | (III-7) | 68 : 12 : 20 |
| 733 | (I-16) | (II-9) | (III-7) | 66 : 14 : 20 |
| 734 | (I-13) | (II-22) | (III-7) | 67 : 18 : 15 |
| 735 | (I-14) | (II-24) | (III-7) | 68 : 17 : 15 |
| 736 | (I-15) | (II-25) | (III-7) | 70 : 15 : 15 |
| 737 | (I-10) | (II-26) | (III-7) | 68 : 15 : 17 |
| 738 | (I-17) | (II-1) | (III-1) | 70 : 14 : 16 |
| 739 | (I-18) | (II-4) | (III-1) | 66 : 18 : 16 |
| 740 | (I-19) | (II-6) | (III-1) | 70 : 13 : 17 |
| 741 | (I-20) | (II-9) | (III-1) | 68 : 16 : 16 |
| 742 | (I-21) | (II-6) | (III-1) | 70 : 12 : 18 |

Farbstoff-Mischungen gemäß Beispiel 16

| Beispiel | Farbstoff nach allg. Formel (I) | Farbstoff nach allg. Formel (II) | Farbstoff nach Formel (IV) | Verhältnis (I):(II):(IV) |
|---|---|---|---|---|
| 743 | (1-2) | (II-6) | (IV-1) | 68 : 15 : 17 |
| 744 | (I-3) | (II-9) | (IV-2) | 67 : 13 : 20 |
| 745 | (I-4) | (II-1) | (IV-3) | 70 : 10 : 20 |
| 746 | (I-5) | (II-3) | (IV-4) | 68 : 14 : 18 |
| 747 | (I-6) | (II-22) | (IV-5) | 69 : 13 : 18 |
| 748 | (I-8) | (II-4) | (IV-7) | 70 : 12 : 18 |
| 749 | (I-16) | (II-3) | (IV-8) | 67 : 15 : 18 |
| 750 | (I-21) | (11-6) | (IV-13) | 72 : 15 : 13 |
| 751 | (I-11) | (II-1) | (IV-14) | 70 : 15 : 15 |
| 752 | (I-2) | (II-9) | (IV-15) | 65 : 15 : 20 |
| 753 | (I-10) | (II-24) | (IV-16) | 70 : 16 : 14 |
| 754 | (I-14) | (II-25) | (IV-17) | 68 : 12 : 20 |
| 755 | (I-7) | (II-18) | (IV-18) | 67 : 15 : 18 |
| 756 | (I-18) | (II-26) | (IV-19) | 68 : 15 : 17 |
| 757 | (I-3) | (II-5) | (IV-20) | 70 : 12 : 18 |
| 758 | (I-4) | (II-7) | (IV-20) | 70 : 12 : 18 |
| 759 | (I-2) | (II-10) | (IV-20) | 67 : 14 : 19 |
| 760 | (I-4) | (II-6) | (IV-21) | 66 : 14 : 20 |
| 761 | (I-15) | (II-8) | (IV-22) | 70 : 12 : 18 |
| 762 | (I-2) | (II-2) | (IV-23) | 70 : 15 : 15 |
| 763 | (I-12) | (II-1) | (IV-24) | 66 : 14 : 20 |
| 764 | (I-19) | (II-4) | (IV-25) | 67 : 16 : 17 |
| 765 | (I-13) | (II-11) | (IV-26) | 70 : 12 : 18 |
| 766 | (I-9) | (11-9) | (IV-27) | 67 : 15 : 18 |
| 767 | (I-17) | (II-22) | (IV-28) | 66 : 15 : 19 |
| 768 | (I-20) | (II-23) | (IV-29) | 70 : 12 : 18 |

### Anwendungsbeispiel 1

2 Teile einer gemäß Beispiel 1 - 16 erhaltenen Farbstoffmischung und 50 Teile Natriumchlorid werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-80°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Mit E-Wasser wird bei 70°C nachgespült und dann 15 Minuten mit einem Waschmittel kochend geseift, nochmals gespült und getrocknet. Man erhält eine farbstarke marineblaue bis graue Färbung mit sehr guten Echtheitseigenschaften.

### Anwendungsbeispiel 2

6 Teile einer gemäß Beispiel 1 - 16 erhaltenen Farbstoffmischung und 50 Teile Natriumchlorid werden in 998 Teilen Wasser gelöst und 7 Teile Natriumcarbonat, 2 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

### Anwendungsbeispiel 3

2 Teile einer gemäß Beispiel 15, 76, 114, 115, 284, 285, 320, 321, 448, 449, 486, 487, 649, 655, 731, 732 oder 747 erhaltenen Farbstoffmischung werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue bis graue Färbung mit sehr guten Echtheitseigenschaften.

### Anwendungsbeispiel 4

4 Teile einer gemäß Beispiel 15, 76, 114, 115, 284, 285, 320, 321, 448, 449, 486, 487, 649, 655, 731, 732 oder 747 erhaltenen Farbstoffmischung und 5 Teile Natriumchlorid werden in 999 Teilen Wasser gelöst, 7 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke graublaue bis schwarze Färbung mit sehr guten Echtheitseigenschaften.

### Anwendungsbeispiel 5

8 Teile einer gemäß Beispiel 15, 76, 114, 115, 284, 285, 320, 321, 448, 449, 486, 487, 649, 655, 731, 732 oder 747 erhaltenen Farbstoffmischung und 10 Teile Natriumchlorid werden in 997 Teilen Wasser gelöst, 10 Teile Natriumcarbonat, 1,3 Teile Natriumhydroxyd (in Form einer 32,5%-eigen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

### Anwendungsbeispiel 6

Ein textiles Flächengebilde, bestehend aus mercerisierter Baumwolle wird mit einer Flotte, enthaltend 35 g/l Natriumcarbonat kalz, 100 g/l Harnstoff und 150 g/l einer niedrigviskosen Na-Alginatlösung (6%) foulardiert und dann getrocknet. Die Flottenaufnahme beträgt 70%.
Auf das so vorbehandelte Textil wird eine wässrige Tinte, enthaltend
2% des Farbstoffes gemäß einem der Beispiele 1 bis 16
20% Sulfolan
0,01 % Mergal K9N und
77,99% Wasser
mit einem Drop-on-Demand (Bubble-Jet) Ink-Jet Druckkopf aufgedruckt. Der Druck wird vollständig getrocknet. Die Fixierung erfolgt mittels Sattdampf bei 102 ° C während 8 Mnuten. Anschliessend wird der Druck warm gespült, mit heissem Wasser bei 95 ° C einer Echtheitswäsche unterzogen, warm gespült und dann getrocknet. Man erhält einen grauen Druck mit hervorragenden Gebrauchsechtheiten.

### Anwendungsbeispiel 7

Ein textiles Flächengebilde, bestehend aus mercerisierter Baumwolle wird mit einer Flotte, enthaltend 35 g/l Natriumcarbonat kalz, 50 g/l Harnstoff und 150 g/l einer niedrigviskosen Na-Alginatlösung (6%) foulardiert und dann getrocknet. Die Flottenaufnahme beträgt 70%. Auf das so vorbehandelte Textil wird eine wässrige Tinte, enthaltend
8% Farbstoff gemäß einem der Beispiele 1 bis 16
20% 1,2-Propandiol
0,01 % Mergal K9N und
71,99 % Wasser
mit einem Drop-on-Demand (Bubble-Jet) Inkjet Druckkopf aufgedruckt. Der Druck wird vollständig getrocknet. Die Fixierung erfolgt mittels Sattdampf bei 102 ° C während 8 Minuten.

Anschliessend wird der Druck warm gespült, mit heissem Wasser bei 95 ° C einer Echtheitswäsche unterzogen, warm gespült und dann getrocknet. Man erhält einen schwarzen Druck mit hervorragenden Gebrauchsechtheiten.

### Anwendungsbeispiel 8

Ein textiles Flächengebilde, bestehend aus mercerisierter Baumwolle wird mit einer Flotte, enthaltend 35 g/l Natriumcarbonat kalz, 100 g/l Harnstoff und 150 g/l einer niedrigviskosen Na-Alginatlösung (6%) foulardiert und dann getrocknet. Die Flottenaufnahme beträgt 70%. Auf das so vorbehandelte Textil wird eine wässrige Tinte, enthaltend
8 % Farbstoff gemäß einem der Beispiele 1 bis 16
15 % N-Methyl-pyrrolidon
0,01 Mergal K9N und 76,99 % Wasser
mit einem Drop-on-Demand (Bubble-Jet) Inkjet Druckkopf aufgedruckt. Der Druck wird vollständig getrocknet. Die Fixierung erfolgt mittels Sattdampf bei 102 ° C während 8 Minuten. Anschliessend wird der Druck warm gespült, mit heissem Wasser bei 95 ° C einer Echtheitswäsche unterzogen, warm gespült und dann getrocknet. Man erhält einen schwarzen Druck mit hervorragenden Gebrauchsechtheiten.

## Patentansprüche

1. Farbstoffmischungen, die einen oder mehrere, wie zwei oder drei, bevorzugt 1 oder 2, Farbstoffe der nachstehend angegebenen und definierten allgemeinen Formel (1), 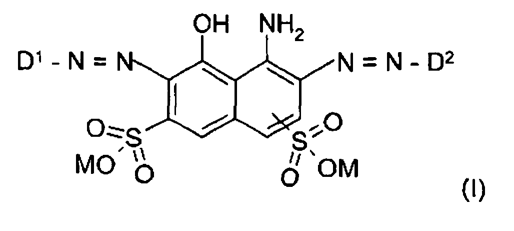 einen oder mehrere, wie zwei oder drei, bevorzugt 1 oder 2, Farbstoffe der nachstehend angegebenen und definierten allgemeinen Formel (II) 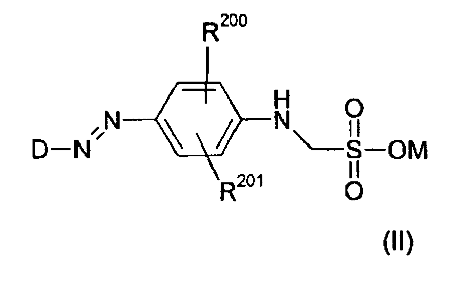 und optional einen oder mehrere, wie zwei oder drei, bevorzugt 1 oder 2, Farbstoffe der nachstehend angegebenen und definierten allgemeinen Formel (III) 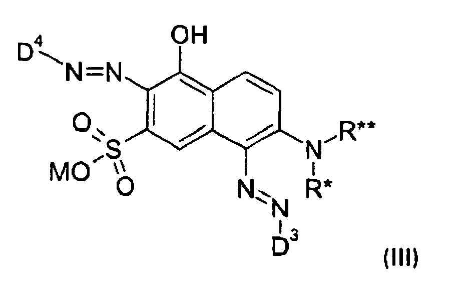 und optional einen oder mehrere, wie zwei oder drei, bevorzugt einen oder
zwei Farbstoffe der nachstehend angegebenen und definierten allgemeinen Formel (IV) 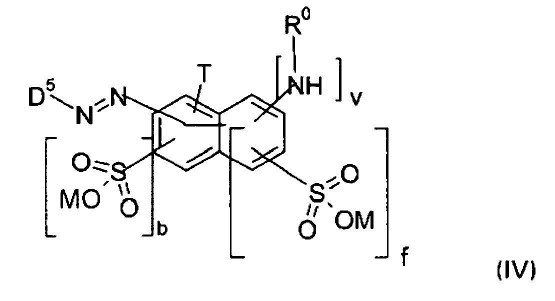 enthalten, in welchen bedeuten:
D, D¹, D², D³, D⁴ und D⁵ sind unabhängig voneinander eine Gruppe der allgemeinen Formel (1) 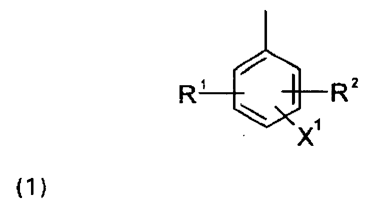 worin
R¹ und R² unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
X¹ für Wasserstoff oder eine Gruppe der Formel -SO₂-Z steht, wobei
Z -CH = CH₂, -CH₂CH₂Z¹ oder Hydroxy bedeutet, worin
Z¹ Hydroxy oder eine unter Alkaliwirkung abspaltbare Gruppe ist oder
D, D¹, D², D³, D⁴ und D⁵ bedeuten unabhängig voneinander eine Naphthylgruppe der allgemeinen Formel (2) 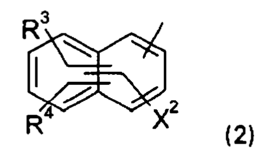 worin
R³ und R⁴ unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
X² eine der Bedeutungen von X¹ hat; oder
D, D¹, D², D³, D⁴ und D⁵ sind unabhängig voneinander eine Gruppe der allgemeinen Formel (3) 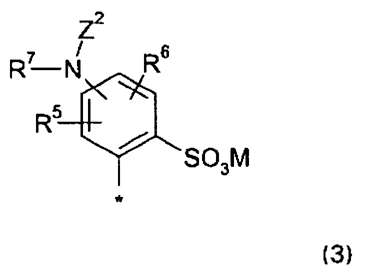 worin
R⁵ und R⁶ unabhängig voneinander eine der Bedeutungen von R¹ und R² haben;
R⁷ ist Wasserstoff, (C₁-C₄)-Alkyl, unsubstituiertes oder durch (C₁-C₄)- Alkyl, (C₁-C₄)-Alkoxy, Sulfo, Halogen oder Carboxy substituiertes Phenyl; und
Z² ist eine Gruppe der allgemeinen Formel (4) oder (5) oder (6) 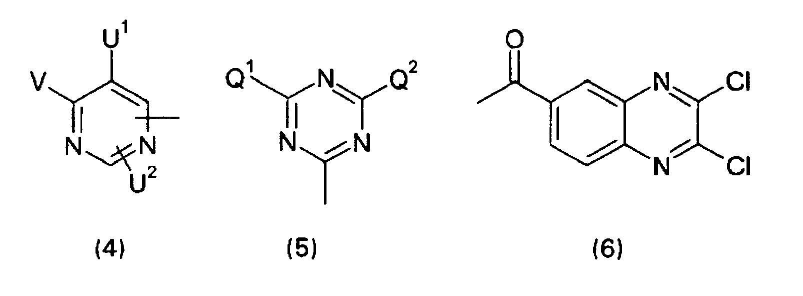
worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)- Alkylmercapto, Pyridino, Carboxypyridino, Carbamoylpyridino oder eine Gruppe der allgemeinen Formel (7) oder (8) bedeuten worin
R⁸ Wasserstoff oder (C₁-C₆)-Alkyl, Sulfo-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R⁹ und R¹⁰ haben unabhängig voneinander eine der Bedeutungen von R⁸, oder bilden ein cyclisches Ringsystem der Formel -(CH₂)ⱼ- wobei j 4 oder 5 bedeutet, oder alternativ -(CH₂)₂-E-(CH₂)₂-, wobei E Sauerstoff, Schwefel, Sulfonyl, -NR¹¹ mit R¹¹ = (C₁- C₆)-Alkyl ist;
W ist Phenylen, das unsubstituiert oder substituiert ist durch 1 oder 2 Substituenten, wie (C₁-C₄)-Alkyl, (C₁- C₄)-Alkoxy, Carboxy, Sulfo, Chlor, Brom, oder ist (C₁- C₄)-Alkylen-Arylen oder (C₂-C₆)-Alkylen, das unterbrochen sein kann durch Sauerstoff, Schwefel, Sulfonyl, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist,
Z oder ist Naphthylen, das unsubstituiert oder durch eine oder zwei Sulfogruppen substituiert ist; und die obengenannte Bedeutung hat; oder 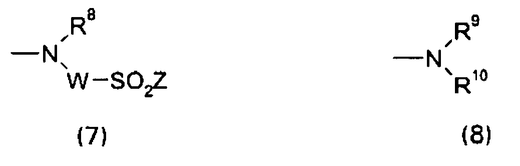
D, D¹, D², D³, D⁴ und D⁵ stehen unabhängig voneinander für eine Gruppe der allgemeinen Formel (9) 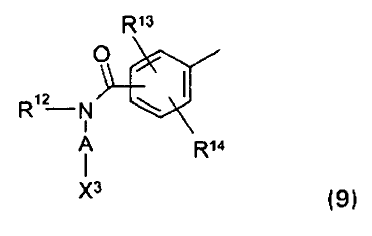 worin
R¹² Wasserstoff, (C₁-C₄)-Alkyl, Aryl oder ein substituierter Arylrest ist;
R¹³ und R¹⁴ unabhängig voneinander Wasserstoff, (C₁-C₄)-Alkyl, (C₁-C₄)- Alkoxy, Hydroxy, Sulfo, Carboxy, Cyano, Nitro, Amido, Ureido oder Halogen sind; und
A eine Phenylengruppe der allgemeinen Formel (10) ist worin
R¹⁵ und R¹⁶ unabhängig voneinander Wasserstoff, (C₁-C₄)-Alkyl, (C₁- C₄)-Alkoxy, Hydroxy, Sulfo, Carboxy, Cyano, Nitro, Amido, Ureido oder Halogen bedeuten; oder 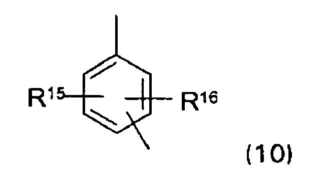
A ist eine Naphthylengruppe der allgemeinen Formel (11) 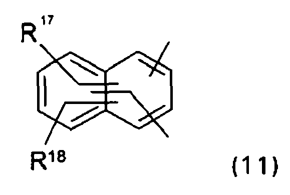
worin
R¹⁷ und R¹⁸ unabhängig voneinander Wasserstoff, (C₁-C₄)-Alkyl, (C₁-C₄)-Alkoxy, Hydroxy, Sulfo, Carboxy, Cyano, Nitro, Amido, Ureido oder Halogen bedeuten; oder
A ist eine Polymethylengruppe der allgemeinen Formel (12)
-(CR¹⁹R²⁰)ₖ- (12)
worin
k eine ganze Zahl größer 1 ist und
R¹⁹ und R²⁰ unabhängig voneinander Wasserstoff, (C₁-C₄)-Alkyl, (C₁-C₄)-Alkoxy, Hydroxy, Cyano, Amido, Halogen oder Aryl sind; und
X³ eine der Bedeutungen von X¹ hat; und
R⁰ für eine Gruppe der allgemeinen Formel (4) oder (5) steht oder eine Gruppe der allgemeinen Formel (13) 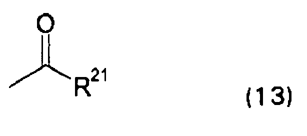
bedeutet, worin;
R²¹ (C₁-C₆)-Alkyl, Sulfo-(C₁-C₆)-Alkyl, Carboxy-(C₁-C₆)-Alkyl oder Phenyl ist, das unsubstituiert oder durch (C₁-C₄)-Alkyl, (C₁-C₄)-Alkoxy, Sulfo, Halogen, Carboxy, Acetamido, Ureido substituiert ist; und
R²⁰⁰ und R²⁰¹ unabhängig voneinander Wasserstoff, (C₁-C₄ )-Alkyl, (C₁-C₄)- Alkoxy, -NH-COR^{a}, -NH-CONH₂, -SO₃H, -COOH, -COOR^{b} bedeuten, wobei R^{a} und R^{b} für (C₁-C₄)-Alkyl oder gegebenenfalls substitutiertes Aryl stehen; und
R*, R** unabhängig voneinander Wasserstoff, (C₁-C₄)-Alkyl oder eine Gruppe der Formel (14)
-CH₂-SO₃M (14)
sind;
b, f und v unabhängig voneinander für 0 oder 1 stehen; und
T für Hydroxy oder NH₂ steht, wobei für T gleich NH₂ v für 0 steht; und
M Wasserstoff, ein Alkalimetall oder ein Äquivalent eines Erdalkalimetalls bedeutet,
wobei die Farbstoffe der allgemeinen Formeln (I) - (IV) mindestens eine faserreaktive Gruppe der Formel -SO₂-Z oder -Z² enthalten.

2. Reaktivfarbstoffmischungen gemäß Anspruch 1, die einen oder mehrere Farbstoffe der nachstehend angegebenen und definierten allgemeinen Formel (I), 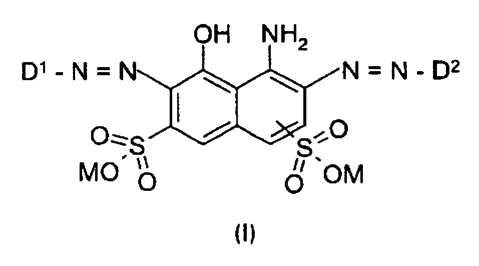 und einen oder mehrere Farbstoffe der nachstehend angegebenen und definierten allgemeinen Formel (II) enthalten, 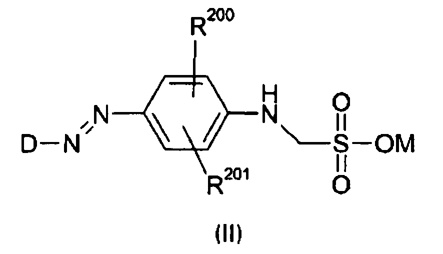 in welchen D, D¹, D², R²⁰⁰, R²⁰¹ und M die in Anspruch 1 genannten Bedeutungen haben.

3. Reaktivfarbstoffmischungen gemäß Anspruch 1, die einen oder mehrere Farbstoffe der nachstehend angegebenen und definierten allgemeinen Formel (I), 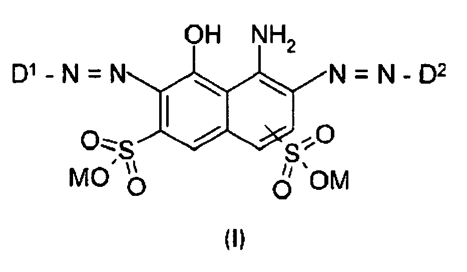 einen oder mehrere Farbstoffe der nachstehend angegebenen und definierten allgemeinen Formel (II) 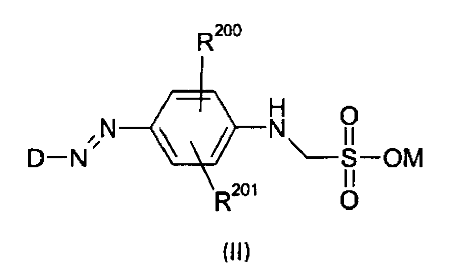 und einen oder mehrere Farbstoffe der nachstehend angegebenen und definierten allgemeinen Formel (III) 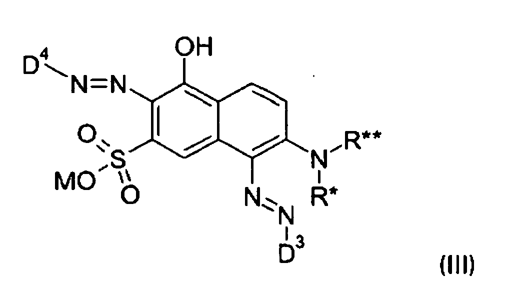 enthalten, in welchen D, D¹, D², D³, D⁴, R²⁰⁰, R²⁰, R*, R** und M die in Anspruch 1 genannten Bedeutungen haben.

4. Reaktivfarbstoffmischungen gemäß Anspruch 1, die einen oder mehrere Farbstoffe der nachstehend angegebenen und definierten allgemeinen Formel (I), 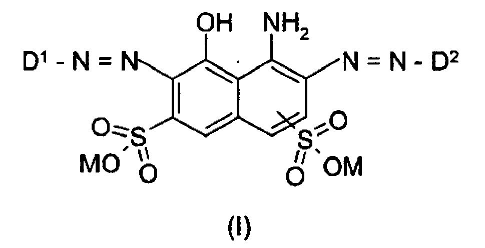 einen oder mehrere, wie zwei oder drei, bevorzugt 1 oder 2, Farbstoffe der nachstehend angegebenen und definierten allgemeinen Formel (II) 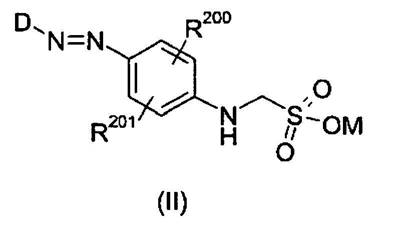 und einen oder mehrere Farbstoffe der nachstehend angegebenen und definierten allgemeinen Formel (IV), 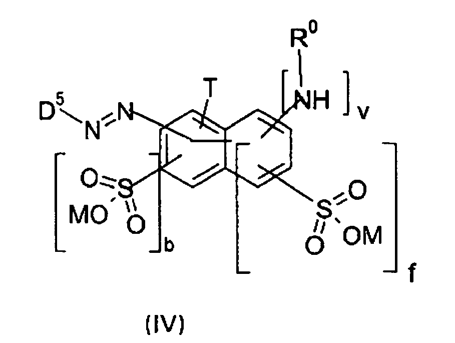 in welchen D¹, D², D⁵, D, R²⁰⁰, R²⁰¹, R⁰, T, b, f, v und M die oben genannten Bedeutungen haben.

5. Reaktivfarbstoffmischungen gemäß Anspruch 1, die einen oder mehrere Farbstoffe der nachstehend angegebenen und definierten allgemeinen Formel (I), 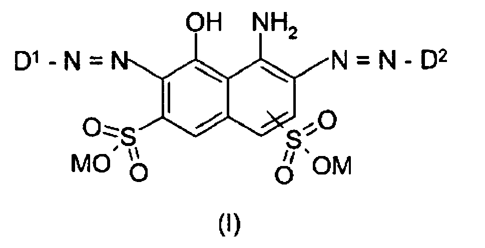 worin D¹, D² und M die oben genannten Bedeutungen haben,
einen oder mehrere, wie zwei oder drei, bevorzugt 1 oder 2, Farbstoffe der nachstehend angegebenen und definierten allgemeinen Formel (II) 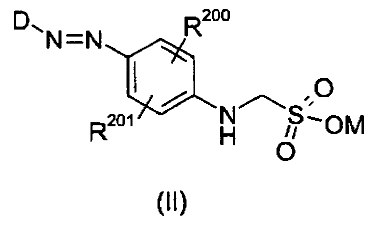 worin D, R²⁰⁰, R²⁰¹ und M die in Anspruch 1 genannten Bedeutungen haben, sowie einen oder mehrere Farbstoffe der allgemeinen Formel (III) 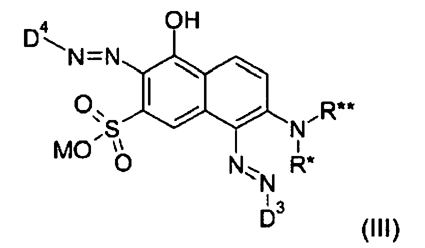 worin D³, D⁴, R*, R** und M die in Anspruch 1 genannten Bedeutungen haben, sowie
einen oder mehrere Farbstoffe der allgemeinen Formel (IV) 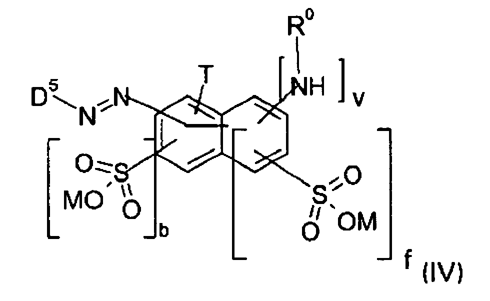 worin D⁵, R⁰, T, M, b, f, und v die in Anspruch 1 genannten Bedeutungen haben.

6. Reaktivfarbstoffmischungen gemäß Anspruch 1, die einen oder mehrere, Farbstoffe der nachstehend angegebenen und definierten allgemeinen Formel 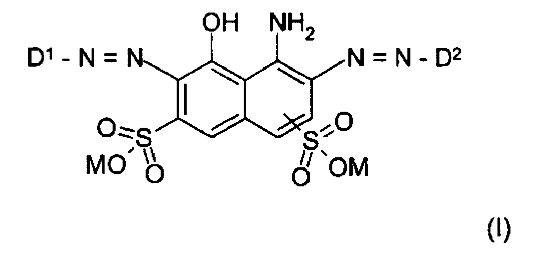 einen oder mehrere Farbstoffe der nachstehend angegebenen und definierten allgemeinen Formel (II) 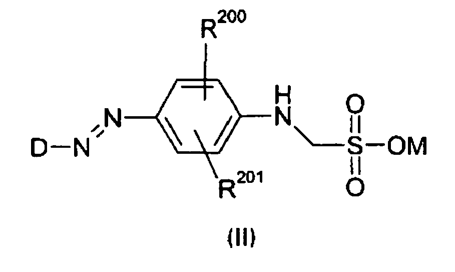 und einen oder mehrere, wie zwei oder drei, bevorzugt 1 oder 2, Farbstoffe der nachstehend angegebenen und definierten allgemeinen Formel (III-a) 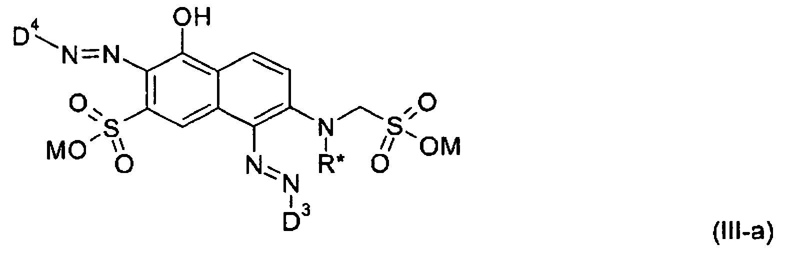 enthalten, worin
D, D¹, D², D³, D⁴, R²⁰⁰, R²⁰¹ und M die in Anspruch 1 genannten Bedeutungen haben.

7. Reaktivfarbstoffmischungen gemäß Anspruch 1, die einen oder mehrere Farbstoffe der nachstehend angegebenen und definierten allgemeinen Formel (I), 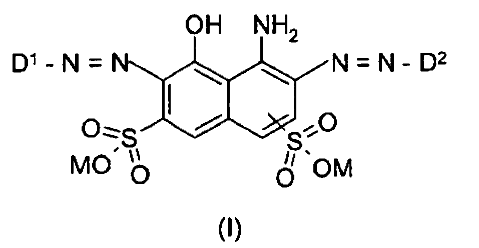 einen oder mehrere, wie zwei oder drei, bevorzugt 1 oder 2, Farbstoffe der nachstehend angegebenen und definierten allgemeinen Formel (II) 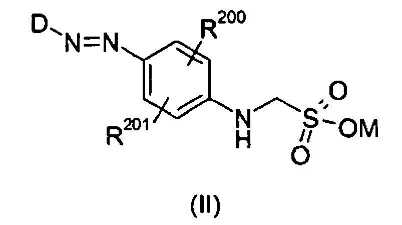 und einen oder mehrere Farbstoffe der nachstehend angegebenen und definierten allgemeinen Formel (IV-a), 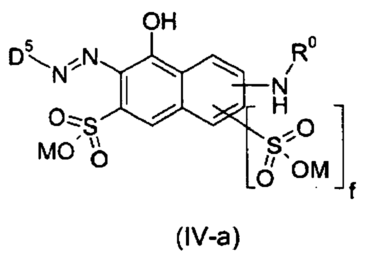 enthalten, in welchen D¹, D², D⁵, D, R²⁰⁰, R²⁰¹, R⁰, f und M die in Anspruch 1 genannten Bedeutungen haben.

8. Reaktivfarbstoffmischungen gemäß Anspruch 1, die einen oder mehrere, Farbstoffe der nachstehend angegebenen und definierten allgemeinen Formel (I-b) 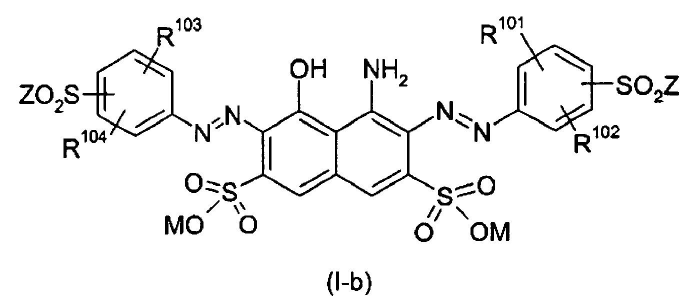 und mindestens einen Farbstoff der allgemeinen Formel (II-a) 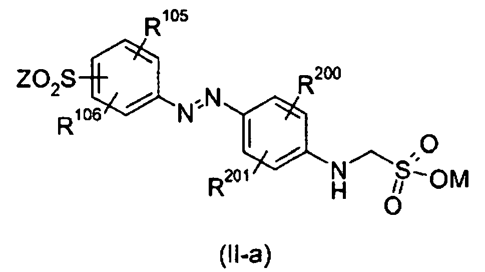 enthalten, wobei
R¹⁰¹ bis R¹⁰⁶ unabhängig voneinander für Wasserstoff, C₁-C₄-Alkyl, C₁-C₄- Alkoxy, Sulfo, Carboxy oder Halogen stehen,
R²⁰⁰ und R²⁰¹ unabhängig voneinander eine der in Anspruch 1 angegebenen Bedeutungen haben und
Z für Vinyl oder ß-Sulfatoethyl steht.

9. Reaktivfarbstoffmischungen gemäß Anspruch 1, die mindestens einen Farbstoff der allgemeinen Formel (I-b), 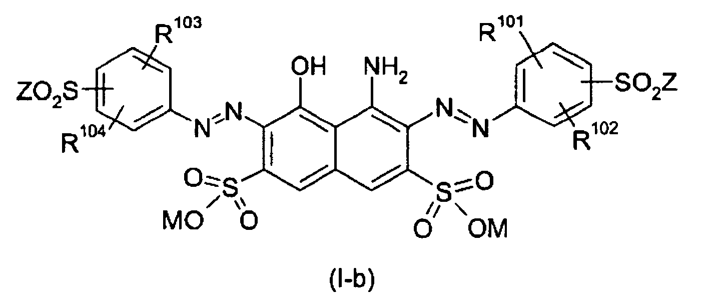 mindestens einen Farbstoff der allgemeinen Formel (II-a) 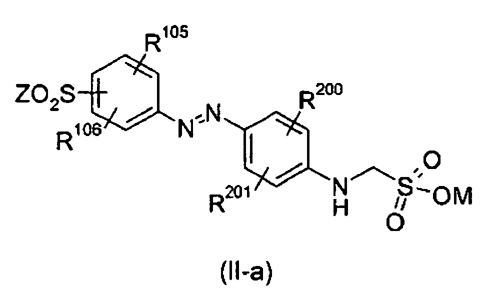 und mindestens einen Farbstoff der allgemeinen Formel (III-b) 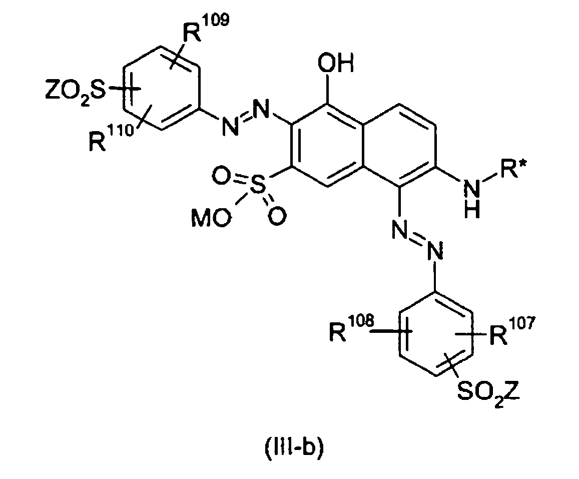 enthalten, worin M, Z, R²⁰⁰, R²⁰¹ und R* die in Anspruch 1 genannten Bedeutungen haben und R¹⁰¹ bis R¹¹⁰ unabhängig voneinander für Wasserstoff, Methyl, Methoxy oder Sulfo stehen.

10. Reaktivfarbstoffmischungen gemäß Anspruch 1, die mindestens einen Farbstoff der allgemeinen Formel (I-b), 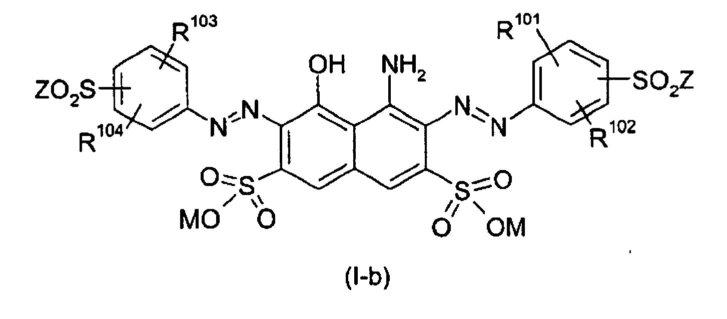 mindestens einen Farbstoff der allgemeinen Formel (II-a) 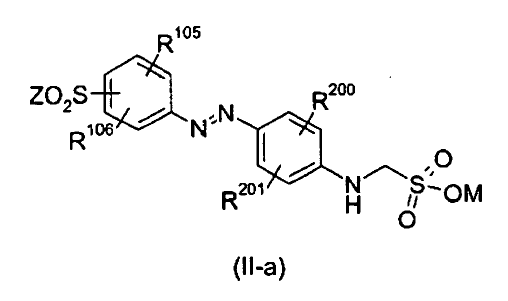 und einen oder mehrere Farbstoffe der allgemeinen Formel (III-c) 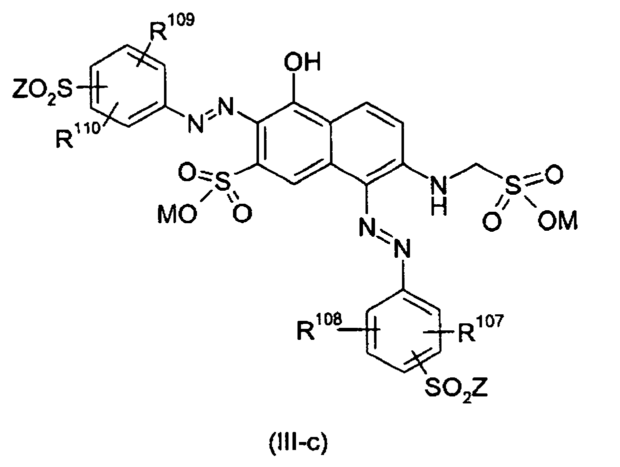 enthalten, worin
R²⁰⁰, R²⁰¹, M und Z die in Anspruch 1 angegebene Bedeutung haben und
R¹⁰¹ bis R¹¹⁰ unabhängig voneinander für Wasserstoff, C₁-C₄-Alkyl. C₁-C₄-Alkoxy, Sulfo, Carboxy oder Halogen und Z für Vinyl oder ß-Sulfatoethyl stehen.

11. Reaktivfarbstoffmischungen gemäß Anspruch 1, die mindestens einen Farbstoff
der allgemeinen Formel (I-b), 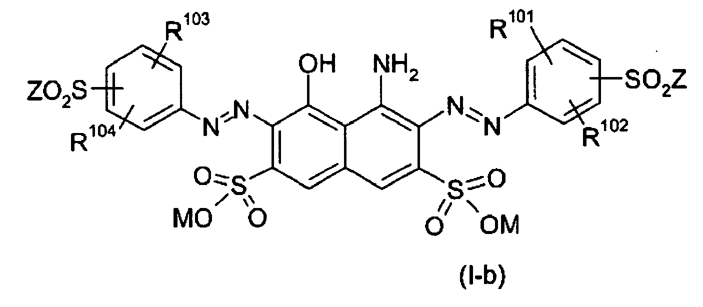 mindestens einen Farbstoff der allgemeinen Formel (II-a) 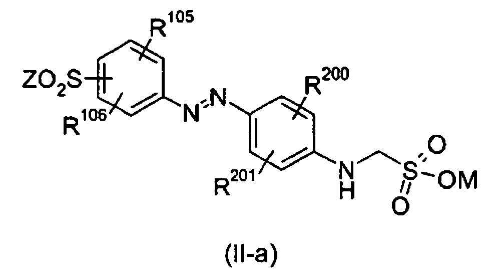 und mindestens einen Farbstoff der allgemeinen Formel (IV-b) 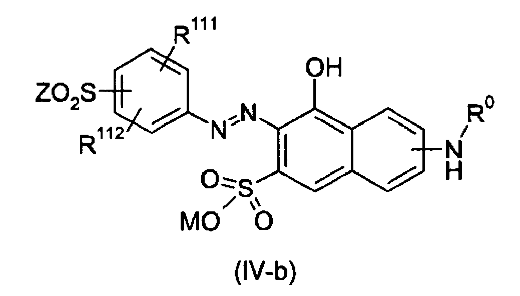 enthalten,
worin
M, Z, R²⁰⁰, R²⁰¹ und R⁰ die in Anspruch 1 genannten Bedeutungen haben und R¹⁰¹ bis R¹⁰⁶ und R¹¹¹ und R¹¹² unabhängig voneinander für Wasserstoff, Methyl, Methoxy oder Sulfo stehen.

12. Reaktivfarbstoffmischungen gemäß Anspruch 1, die mindestens einen Farbstoff der allgemeinen Formel (I-b), 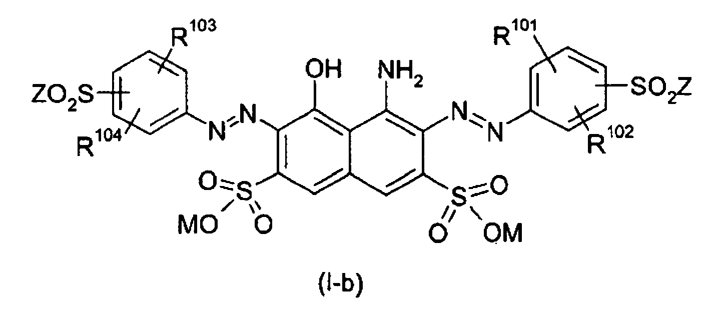 mindestens einen Farbstoff der allgemeinen Formel (II-a) 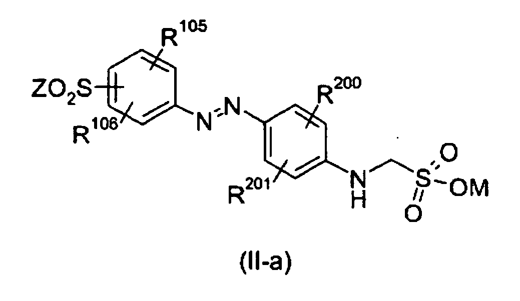 und mindestens einen Farbstoff der allgemeinen Formel (IV-c), 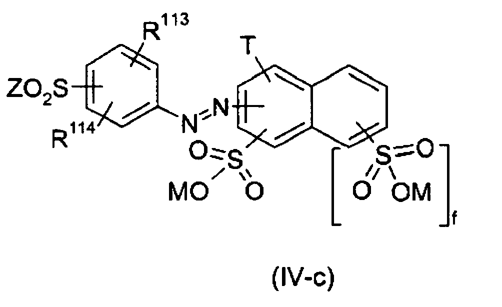 worin
M, Z, R²⁰⁰, R²⁰¹, T und f die in Anspruch 1 angegebene Bedeutung haben und
R¹⁰¹ bis R¹⁰⁶ und R¹¹³ und R¹¹⁴ unabhängig voneinander für Wasserstoff, Methyl, Methoxy oder Sulfo stehen.

13. Reaktivfarbstoffmischungen gemäß mindestens einem der Ansprüche 1 bis 12, enthaltend einen oder mehrere Monoazofarbstoffe der Formel (15) und/oder einen oder mehrere Monoazofarbstoffe der Formel (16) mit jeweils 0.5 bis 6 Gew.-%, 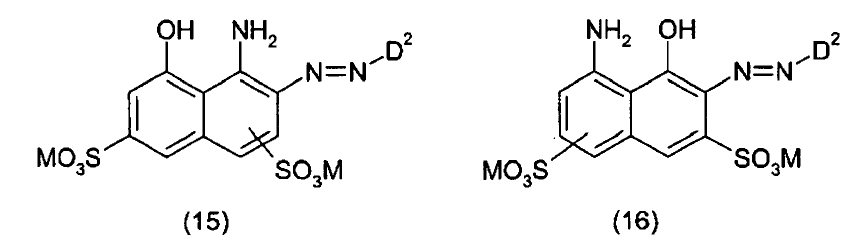 wobei D² und M die in Anspruch 1 angegebenen Bedeutungen besitzen.

14. Reaktivfarbstoffmischungen gemäß Anspruch 1, enthaltend einen oder mehrere Monoazofarbstoffe der allgemeinen Formeln (17) und/oder (18), jeweils in einer Menge von 0 - 10 Gew.-%, 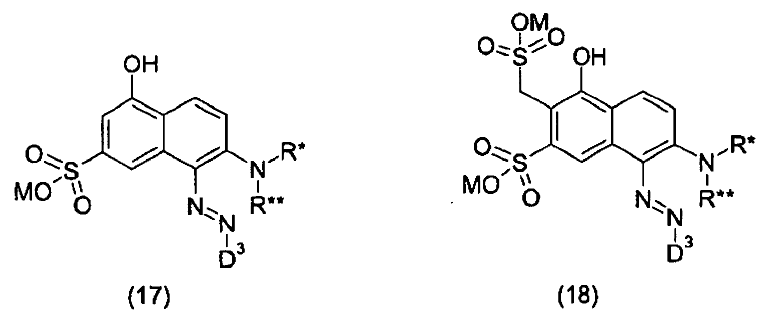 wobei M, R*, R** und D³ die in Anspruch 1 angegebenen Bedeutungen besitzen.

15. Reaktivfarbstoffmischungen gemäß Anspruch 1, enthaltend einen oder mehrere Farbstoffe der Formel (I) in einem Anteil von 25 bis 99 Gew.-% und einen oder mehrere Farbstoffe der Formel (II) in einem Anteil von 1 bis 75 Gew.-%.

16. Reaktivfarbstoffmischungen gemäß Anspruch 1, enthaltend einen oder mehrere Farbstoffe der Formel (I) in einem Anteil von 30 bis 95 Gew.-% und einen oder mehrere Farbstoffe der Formeln (II) und (III) und/oder (IV) unabhängig voneinander jeweils in einem Anteil von 1 bis 70 Gew.-%.

17. Reaktivfarbstoffmischungen gemäß Anspruch 1, enthaltend einen oder mehrere Farbstoffe der Formel (I) in einem Anteil von 50 bis 90 Gew.-% und einen oder mehrere Farbstoffe der Formeln (II) und (III) und/oder (IV) unabhängig voneinander jeweils in einem Anteil von 5 bis 50 Gew.-%.

18. Verfahren zur Herstellung von Farbstoffmischungen gemäß einem oder mehreren der Ansprüche 1 bis 17 **dadurch gekennzeichnet, dass** die Einzelfarbstoffe der Formeln (I), (II) und gegebenenfalls (III) und/oder (IV) im vorgegebenen Verhältnis entweder in fester Form mechanisch miteinander vermischt werden oder in Form der wässrigen Lösungen gemischt werden.

19. Verfahren zur Herstellung von Farbstoffmischungen gemäß einem oder mehreren der Ansprüche 1 bis 17 durch Diazotierung und Kupplung geeigneter Mischungen von Diazo- und Kupplungskomponenten in den gewünschten Mengenverhältnissen.

20. Verfahren zur Herstellung von Farbstoffmischungen gemäß einem oder mehreren der Ansprüche 1 bis 17 für Diazokomponenten mit den Gruppen D¹, D⁴, D⁵ und D gemäß den allgemeinen Formeln (I) und (II) sowie ggf. (III) und/oder (IV) gleicher Bedeutung, durch Diazotieren eines Amins der allgemeinen Formel (19)
D¹ - NH₂ (19),
worin D¹ wie in Anspruch 1 angegeben definiert ist, in üblicher Weise und anschließender Umsetzung der so erhaltenen Diazoniumverbindung mit einer wässrigen Lösung oder Suspension einer Mischung mit festgelegtem Verhältnis eines Monoazofarbstoffs gemäß der allgemeinen Formel (15), und einer Kupplungskomponente der allgemeinen Formel (24), 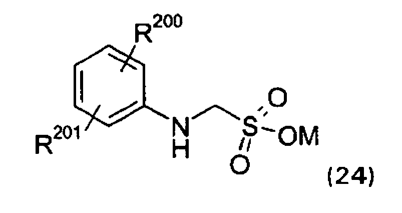 worin R²⁰⁰, R²⁰¹ und M wie in Anspruch 1 angegeben definiert sind, sowie ggf. einem Monoazofarbstoff gemäß der allgemeinen Formel (17) und/oder einer Kupplungskomponente der allgemeinen Formel (20), 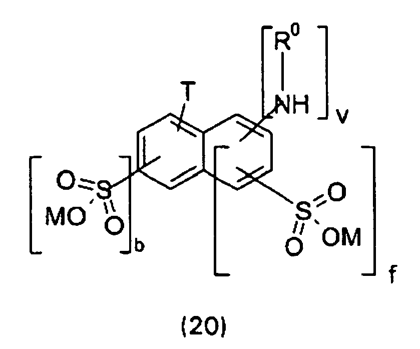 worin T, R⁰, M, b, f und v wie in Anspruch 1 angegeben definiert sind.

21. Verwendung von Reaktivfarbstoffmischungen gemäß einem oder mehreren der Ansprüche 1 bis 17 zum Färben oder Bedrucken von hydroxy- und/oder carbonamidgruppen-haltigem Fasermaterial.

22. Wässrige Flüssigpräparation, enthaltend eine Farbstoffmischung nach mindestens einem der Ansprüche 1 bis 17 mit einem Gesamtfarbstoffgehalt von 5 - 50 Gew.-% zum Färben oder Bedrucken von hydroxy- und/oder carbonamidgruppen-haltigem Fasermaterial.

23. Wässrige Flüssigpräparation, enthaltend eine Farbstoffmischung nach mindestens einem der Ansprüche 1 bis 17 mit einem Gesamtfarbstoffgehalt von 0,1 - 50 Gew.-% zum Bedrucken von hydroxy- und/oder carbonamidgruppen-haltigem Fasermaterial nach dem Ink-Jet Verfahren.

## Claims

1. Dye mixtures which comprise one or more, such as two or three, preferably 1 or 2, dyes of the hereinbelow indicated and defined formula (I), 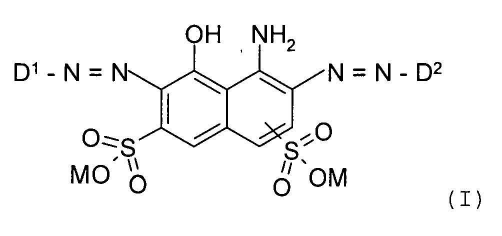 one or more, such as two or three, preferably 1 or 2, dyes of the hereinbelow indicated and defined formula (II) 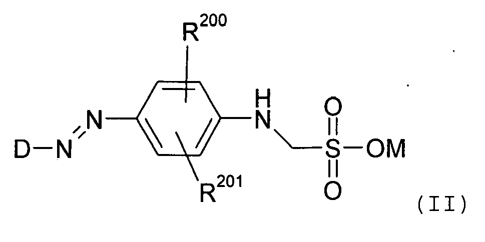 and optionally one or more, such as two or three, preferably 1 or 2, dyes of the hereinbelow indicated and defined formula (III) 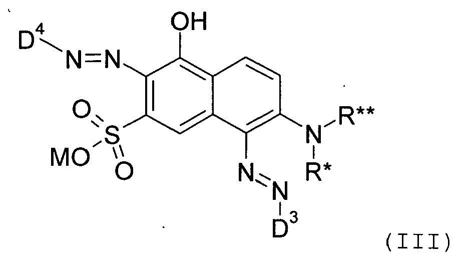 and optionally one or more, such as two or three, preferably one or two dyes of the hereinbelow indicated and defined formula (IV) 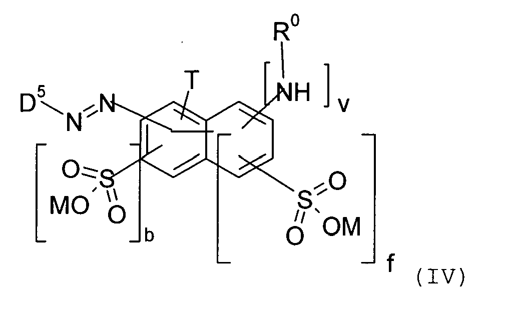 in which:
D, D¹, D², D³, D⁴ and D⁵ are independently of one another a group of the formula (1) 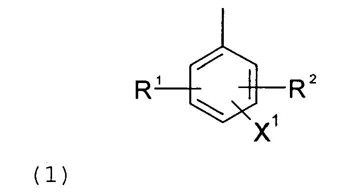 in which
R¹ and R² independently of one another are hydrogen, (C₁-C₄) -alkyl, (C₁-C₄)-alkoxy, hydroxyl, sulfo, carboxyl, cyano, nitro, amido, ureido or halogen; and
X¹ is hydrogen or a group of the formula -SO₂-Z, where
Z is -CH=CH₂, -CH₂CH₂Z¹ or hydroxyl,
in which
Z¹ is hydroxyl or a group which can be eliminated under the action of alkali, or D, D¹, D², D³, D⁴ and D⁵ are independently of one another a naphthyl group of the formula (2) 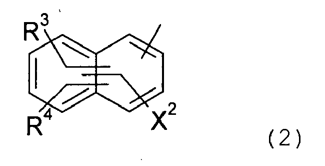
in which
R³ and R⁴ independently of one another are hydrogen, (C₁-C₄)-alkyl, (C₁-C₄)-alkoxy, hydroxyl, sulfo, carboxyl, cyano, nitro, amido, ureido or halogen; and
X² has one of the definitions of X¹; or
D, D¹, D², D³, D⁴ and D⁵ are independently of one another a group of the formula (3) 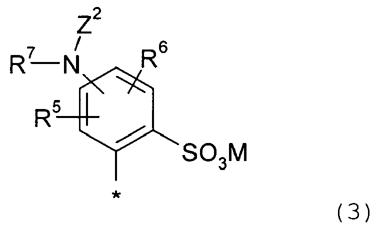 in which
R⁵ and R⁶ independently of one another have one of the definitions of R¹ and R²;
R⁷ is hydrogen, (C₁-C₄)-alkyl, or phenyl which is unsubstituted or substituted by (C₁-C₄)-alkyl, (C₁-C₄)-alkoxy, sulfo, halogen or carboxyl; and
Z² is a group of the formula (4) or (5) or (6) 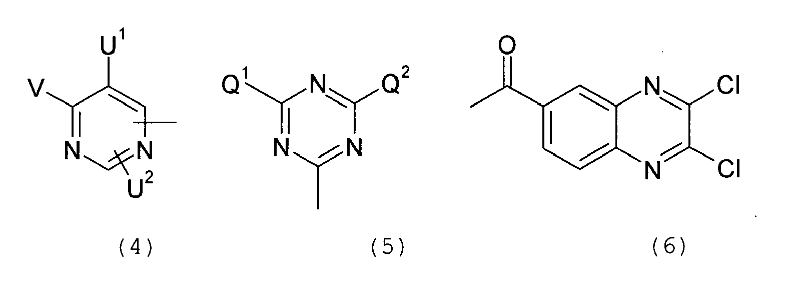 in which
V is fluorine or chlorine,
U¹ and U² independently of one another are fluorine, chlorine or hydrogen;
and
Q¹ and Q² independently of one another are chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the formula (7) or,(8) 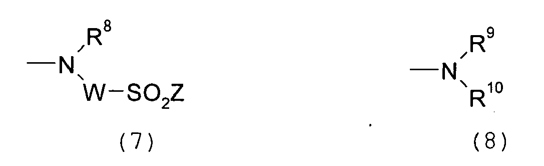
in which
R⁸ is hydrogen or (C₁-C₆)-alkyl, sulfo-(C₁-C₆)-alkyl or phenyl which is unsubstituted or substituted by (C₁-C₄)-alkyl, (C₁-C₄)-alkoxy, sulfo, halogen, carboxyl, acetamido or ureido;
R⁹ and R¹⁰ have independently of one another one of the definitions of R⁸, or form a cyclic ring system of the formula -(CH₂)ⱼ- where j is 4 or 5, or alternatively -(CH₂)₂-E-(CH₂)₂-, where E is oxygen, sulfur, sulfonyl or -NR¹¹ with R¹¹ = (C₁-C₆)-alkyl;
W is phenylene which is unsubstituted or substituted by 1 or 2 substituents, such as (C₁-C₄)-alkyl, (C₁-C₄)-alkoxy, carboxyl, sulfo, chlorine or bromine, or is (C₁-C₄) -alkylene-arylene or (C₂-C₆) - alkylene which may be interrupted by oxygen, sulfur, sulfonyl, amino, carbonyl or carboxamido, or is phenylene-CONH-phenylene which is unsubstituted or substituted by (C₁-C₄)-alkyl, (C₁-C₄)-alkoxy, hydroxyl, sulfo, carboxyl, amido, ureido or halogen, or is naphthylene which is unsubstituted or substituted by one or two sulfo groups; and
Z is as defined above; or
D, D¹, D², D³, D⁴ and D⁵ are independently of one another a group of the formula (9) 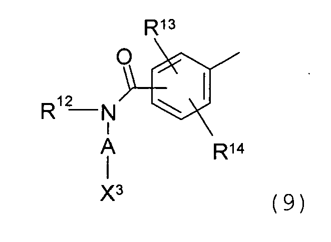
in which
R¹² is hydrogen, (C₁-C₄) -alkyl, aryl or a substituted aryl radical;
R¹³ and R¹⁴ independently of one another are hydrogen, (C₁-C₄)-alkyl, (C₁-C₄)-alkoxy, hydroxyl, sulfo, carboxyl, cyano, nitro, amido, ureido or halogen; and
A is a phenylene group of the formula (10) 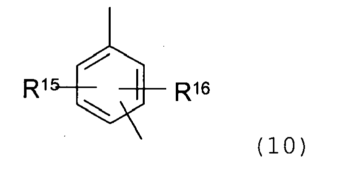 in which
R¹⁵ and R¹⁶ independently of one another are hydrogen, (C₁-C₄)-alkyl, (C₁-C₄)-alkoxy, hydroxyl, sulfo, carboxyl, cyano, nitro, amido, ureido or halogen; or
A is a naphthylene group of the formula (11) 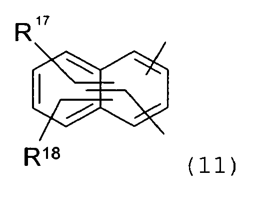 in which
R¹⁷ and R¹⁸ independently of one another are hydrogen, (C₁-C₄)-alkyl, (C₁-C₄)-alkoxy, hydroxyl, sulfo, carboxyl, cyano, nitro, amido, ureido or halogen; or
A -is a polymethylene group of the formula (12)
-(CR¹⁹R²⁰)ₖ- (12)
in which
k is an integer greater than 1 and
R¹⁹ and R²⁰ independently of one another are hydrogen, (C₁-C₄)-alkyl, (C₁-C₄)-alkoxy, hydroxyl, cyano, amido, halogen or aryl; and
X³ has one of the definitions of X¹; and
R⁰ is a group of the formula (4) or (5) or is a group of the formula (13) 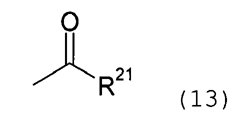
in which
R²¹ is (C₁-C₄)-alkyl, sulfo-(C₁-C₆)-alkyl, carboxy-(C₁-C₆)-alkyl or phenyl which is unsubstituted or substituted by (C₁-C₄)-alkyl, (C₁-C₄)-alkoxy, sulfo, halogen, carboxyl, acetamido or ureido; and
R²⁰⁰ and R²⁰¹ independently of one another are hydrogen, (C₁-C₄)-alkyl, (C₁-C₄)-alkoxy, -NH-COR^{a}, -NH-CONH₂, -SO₃H, -COOH, -COOR^{b}, where
R^{a} and R^{b} are (C₁-C₄)-alkyl or unsubstituted or substituted aryl; and
R* and R** independently of one another are hydrogen, (C₁-C₄)-alkyl or a group of the formula (14)
-CH₂-SO₃M (14);
b, f and v independently of one another are 0 or 1;
and
T is hydroxyl or NH₂, and if T is NH₂ v is 0; and
M is hydrogen, an alkali metal or one equivalent of an alkaline earth metal,
the dyes of the formulae (I)-(IV) containing at least one fiber-reactive group of the formula -SO₂-Z or -Z².

2. Reactive dye mixtures according to Claim 1, comprising one or more dyes of the hereinbelow indicated and defined formula (I), 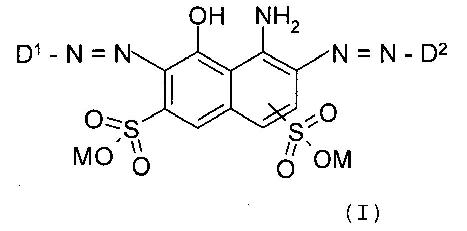 and one or more dyes of the hereinbelow indicated and defined formula (II), 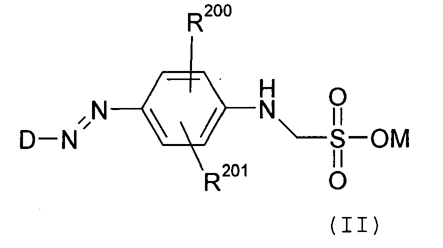 in which D, D¹, D², R²⁰⁰, R²⁰¹ and M are as defined in Claim 1.

3. Reactive dye mixtures according to Claim 1, comprising one or more dyes of the hereinbelow indicated and defined formula (I) 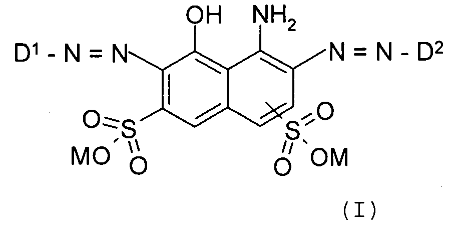 one or more dyes of the hereinbelow indicated and defined formula (II) 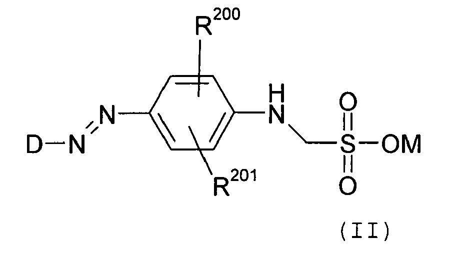 and one or more dyes of the hereinbelow indicated and defined formula (III) 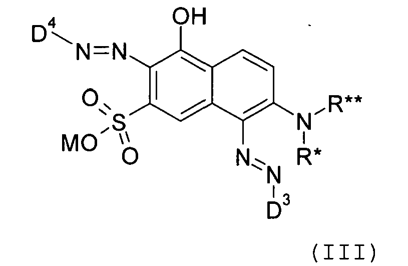 in which D, D¹, D², D³, D⁴, R²⁰⁰, R²⁰¹, R*, R** and M are as defined in Claim 1.

4. Reactive dye mixtures according to Claim 1, comprising one or more dyes of the hereinbelow indicated and defined formula (I) 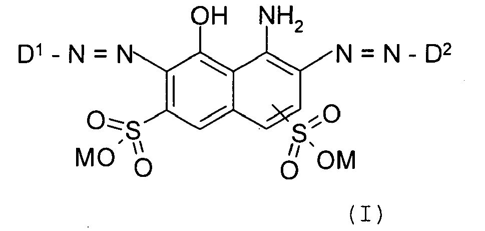 one or more, such as two or three, preferably 1 or 2, dyes of the hereinbelow indicated and defined formula (II) 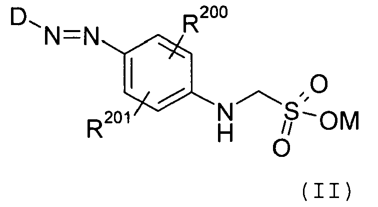 and one or more dyes of the hereinbelow indicated and defined formula (IV), 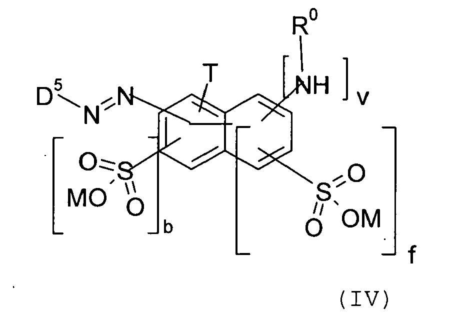 in which D¹, D², D⁵, D, R²⁰⁰, R²⁰¹, R⁰, T, b, f, v and M are as defined above.

5. Reactive dye mixtures according to Claim 1, comprising one or more dyes of the of the hereinbelow indicated and defined formula (I), 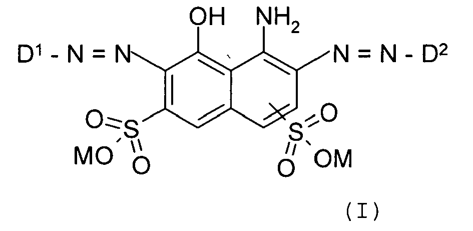 in which D¹, D² and M are as defined above,
one or more, such as two or three, preferably 1 or 2, dyes of the hereinbelow indicated and defined formula (II) 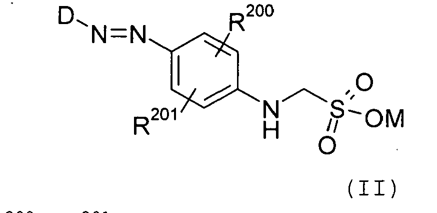 in which D, R²⁰⁰, R²⁰¹ and M are as defined in Claim 1, and one or more dyes of the formula (III) 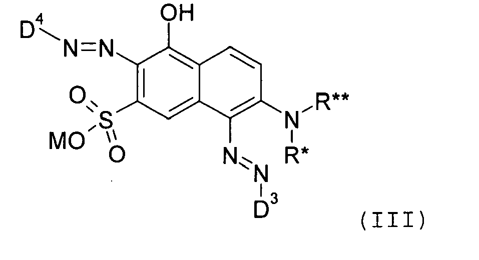 in which D³, D⁴, R*, R** and M are as defined in Claim 1,
and also
one or more dyes of the formula (IV) 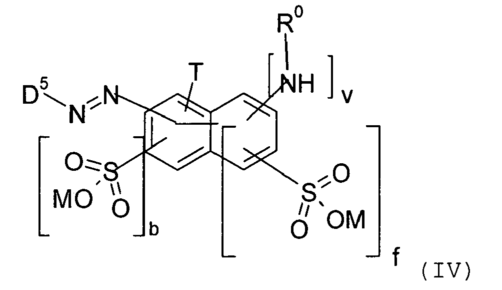 in which D⁵, R⁰, T, M, b, f, and v are as defined in Claim 1.

6. Reactive dye mixtures according to Claim 1, comprising one or more dyes of the hereinbelow indicated and defined formula (I), 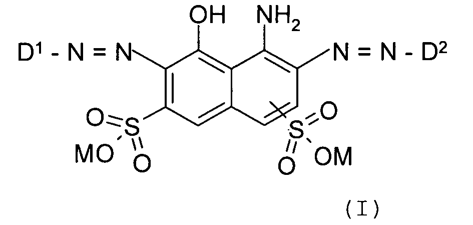 one or more dyes of the hereinbelow indicated and defined formula (II) 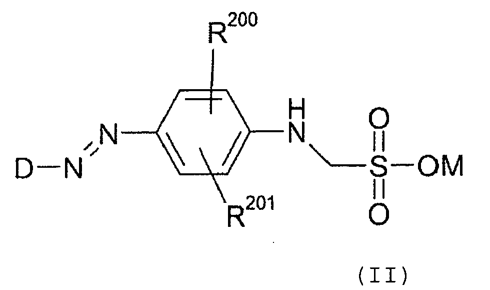 and one or more, such as two or three, preferably 1 or 2, dyes of the hereinbelow indicated and defined formula (III-a) 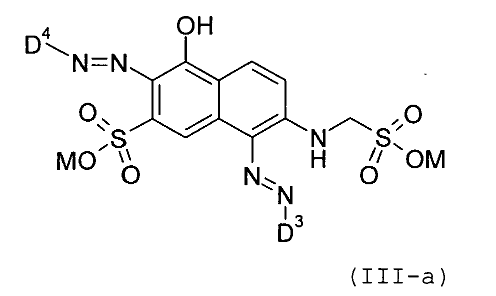 in which
D, D¹, D², D³, D⁴, R²⁰⁰, R²⁰¹ and M are as defined in Claim 1.

7. Reactive dye mixtures according to Claim 1, comprising one or more dyes of the hereinbelow indicated and defined formula (I), 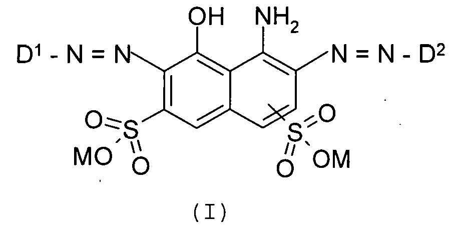 one or more, such as two or three, preferably 1 or 2, dyes of the hereinbelow indicated and defined formula (II) 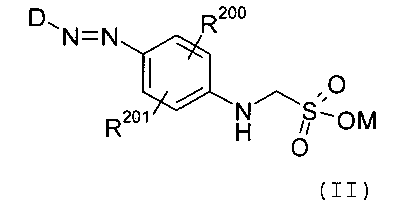 and one or more dyes of the hereinbelow indicated and defined formula (IV-a), 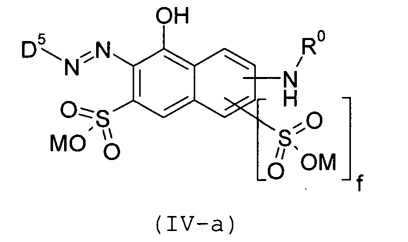 in which D¹, D², D⁵, D, R²⁰⁰, R²⁰¹, R⁰, f and M are as defined in Claim 1.

8. Reactive dye mixtures according to Claim 1, comprising one or more dyes of the hereinbelow indicated and defined formula (I-b) 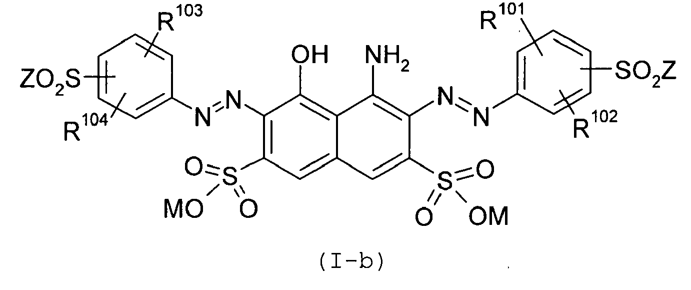 and at least one dye of the formula (II-a) 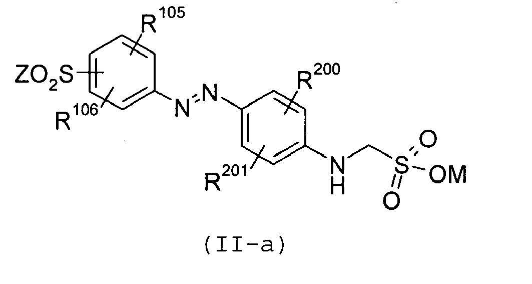 where
R¹⁰¹ to R¹⁰⁶ independently of one another are hydrogen, C₁-C₄ alkyl, C₁-C₄ alkoxy, sulfo, carboxyl or halogen,
R²⁰⁰ and R²⁰¹ independently of one another have one of the definitions stated in claim 1, and
Z is vinyl or ß-sulfatoethyl.

9. Reactive dye mixtures according to Claim 1, comprising at least one dye of the formula (I-b), 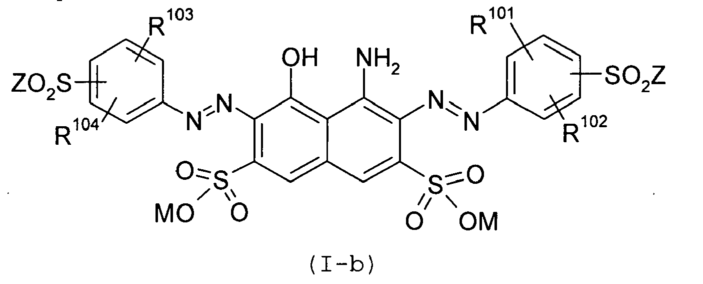 at least one dye of the formula (II-a) 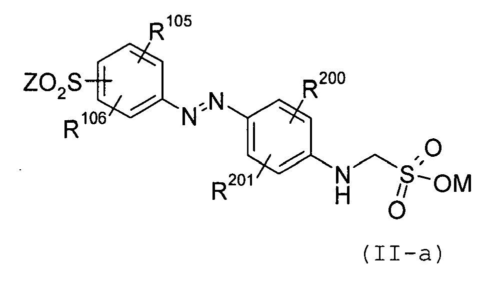 and at least one dye of the formula (III-b) 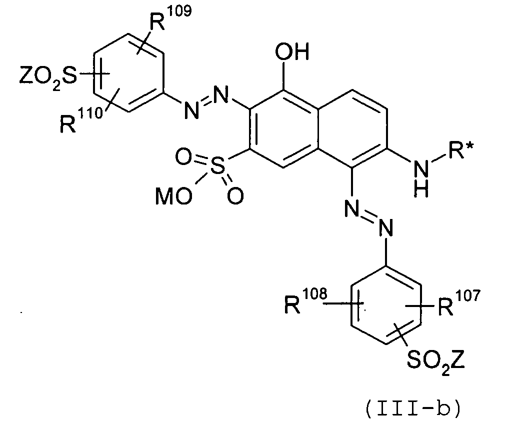 in which M, Z, R²⁰⁰, R²⁰¹ and R* are as defined in Claim 1 and R¹⁰¹ to R¹¹⁰ independently of one another are hydrogen, methyl, methoxy or sulfo.

10. Reactive dye mixtures according to Claim 1, comprising at least one dye of the formula (I-b) 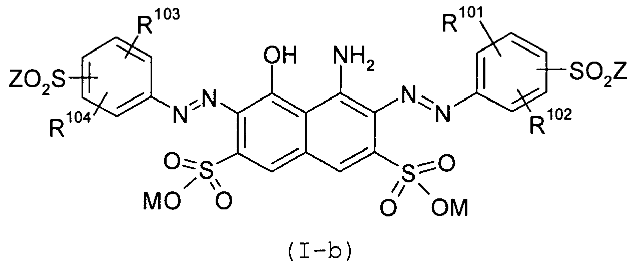 at least one dye of the formula (II-a) 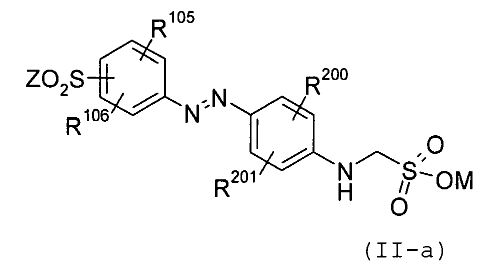 and one or more dyes of the formula (III-c) 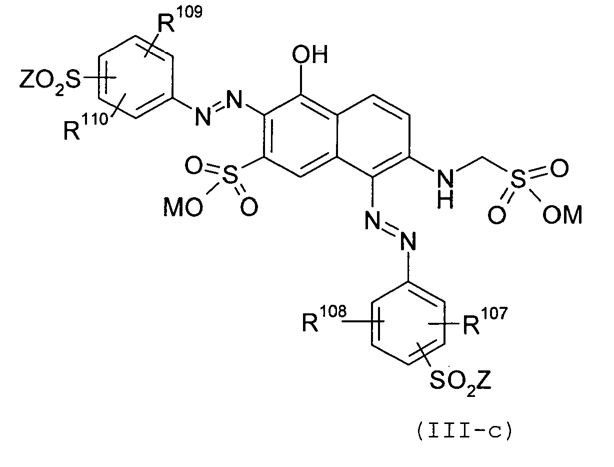 in which
R²⁰⁰, R²⁰¹ M and Z are as defined in Claim 1 and
R¹⁰¹ to R¹¹⁰ independently of one another are hydrogen, C₁-C₄ alkyl, C₁-C₄ alkoxy, sulfo, carboxyl or halogen and Z is vinyl or ß-sulfatoethyl.

11. Reactive dye mixtures according to Claim 1, comprising at least one dye of the formula (I-b), 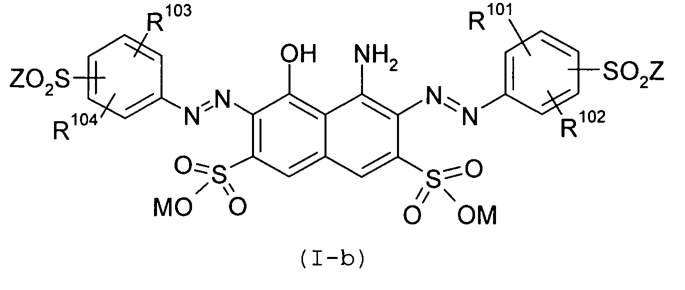 at least one dye of the formula (II-a) 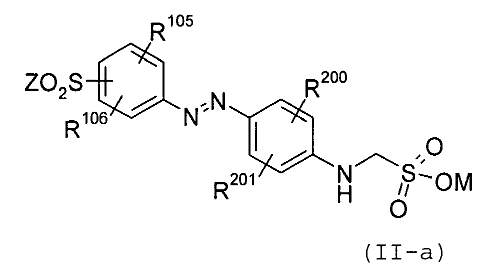 and at least one dye of the formula (IV-b) 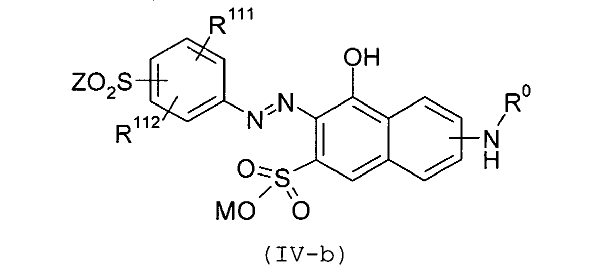 in which
M, Z, R²⁰⁰, R²⁰¹ and R⁰ are as defined in Claim 1 and R¹⁰¹ to R¹⁰⁶ and R¹¹¹ and R¹¹² independently of one another are hydrogen, methyl methoxy or sulfo.

12. Reactive dye mixtures according to Claim 1, comprising at least one dye of the formula (I-b), 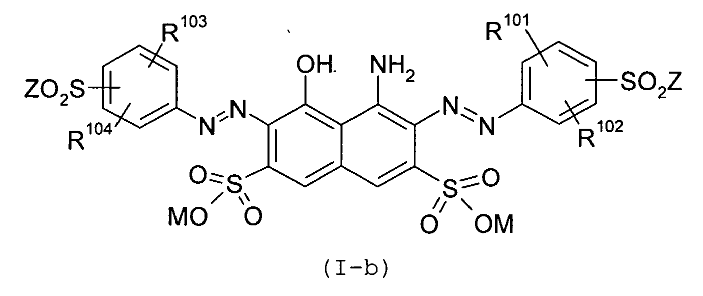 at least one dye of the formula (II-a) 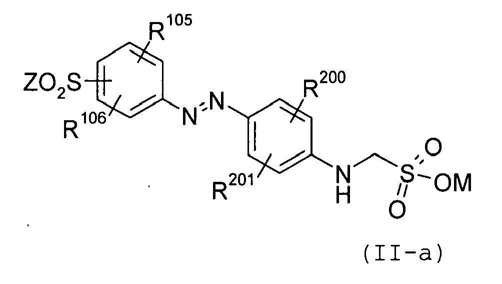 and at least one dye of the formula (IV-c), 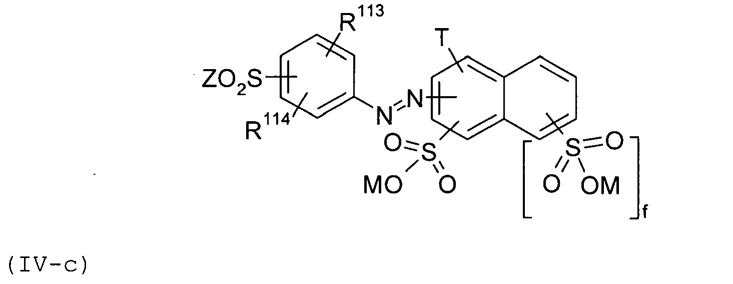 in which
M, Z, R²⁰⁰ R²⁰¹, T and f are as defined in Claim 1 and
R¹⁰¹ to R¹⁰⁶ and R¹¹³ and R¹¹⁴ independently of one another are hydrogen, methyl, methoxy or sulfo.

13. Reactive dye mixtures according to at least one of the Claims 1 to 12, comprising one or more monoazo dyes of the formula (15) and/or one or more monoazo dyes of the formula (16) each at 0.5% to 6% by weight, 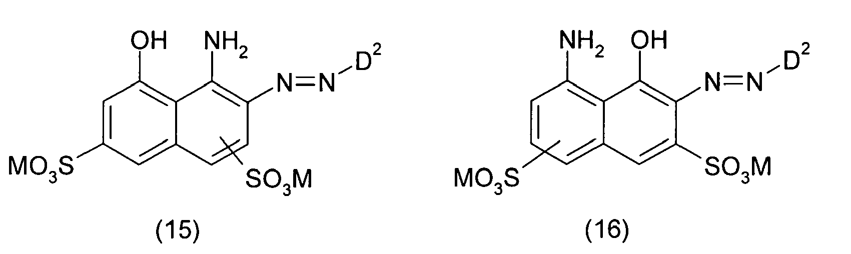 where D² and M possess the definitions stated in Claim 1.

14. Reactive dye mixtures according to Claim 1, comprising one or more monoazo dyes of the formulae (17) and/or (18), each in an amount of 0-10% by weight, 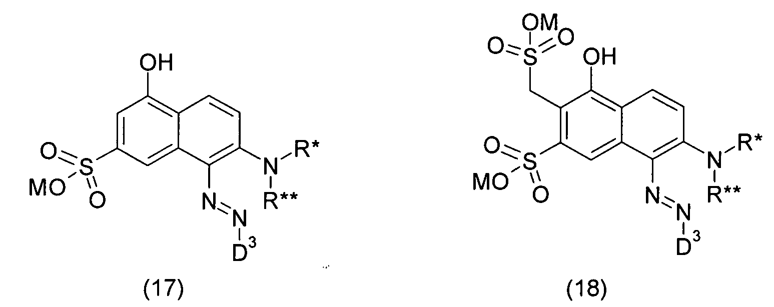 where M, R*, R** and D³ possess the definitions stated in Claim 1.

15. Reactive dye mixtures according to Claim 1, comprising one or more dyes of the formula (I) in a fraction of 25% to 99% by weight and one or more dyes of the formula (II) in a fraction of 1% to 75% by weight.

16. Reactive dye mixtures according to Claim 1, comprising one or more dyes of the formula (I) in a fraction of 30% to 95% by weight and one or more dyes of the formulae (II) and (III) and/or (IV) independently of one another each in a fraction of 1% to 70% by weight.

17. Reactive dye mixtures according to Claim 1, comprising one or more dyes of the formula (I) in a fraction of 50% to 90% by weight and one or more dyes of the formulae (II) and (III) and/or (IV) independently of one another each in a fraction of 5% to 50% by weight.

18. Process for preparing dye mixtures according to one or more of Claims 1 to 17, **characterized in that** the individual dyes of the formulae (I), (II) and, where appropriate, (III) and/or (IV) are mixed in the specified ratio either with one another mechanically in solid form, or in the form of the aqueous solutions.

19. Process for preparing dye mixtures according to one or more of Claims 1 to 17 by diazotizing and coupling appropriate mixtures of diazo components and coupling components in the desired proportions.

20. Process for preparing dye mixtures according to one or more of Claims 1 to 17 for diazo components containing the groups D¹, D⁴ D⁵ and D according to formulae (I) and (II) and also, where appropriate, (III) and/or (IV) with the same definition, by diazotizing an amine of the formula (19)
D¹ - NH₂ (19),
in which D¹ is defined as indicated in Claim 1 in conventional manner and then reacting the resultant diazonium compound with an aqueous solution or suspension of a mixture in defined proportion of a monoazo dye of the formula (15) and a coupling component of the formula (24), 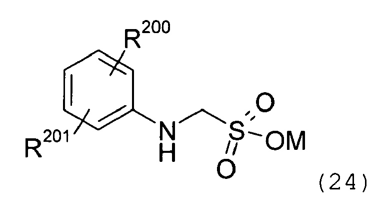 in which R²⁰⁰ , R²⁰¹ and M are defined as indicated in Claim 1 and also, where appropriate, with a monoazo dye of the formula (17) and/or a coupling component of the formula (20), 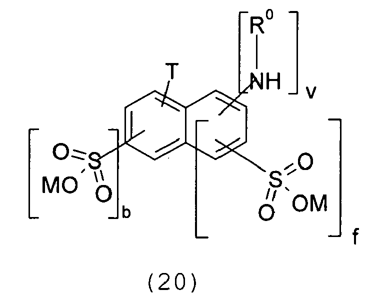 in which T, R⁰, M, b, f and v are defined as indicated in claim 1.

21. Use of reactive dye mixtures according to one or more of Claims 1 to 17 for dyeing or printing hydroxyl- and/or carboxamido-containing fiber material.

22. Aqueous liquid preparation comprising a dye mixture according to at least one of Claims 1 to 17 having a total dye content of 5-50% by weight for dyeing or printing hydroxyl- and/or carboxamido-containing fiber material.

23. Aqueous liquid preparation comprising a dye mixture according to at least one of Claims 1 to 17 having a total dye content of 0.1-50% by weight for printing hydroxyl- and/or carboxamido-containing fiber material by the ink jet process.

## Revendications

1. Mélanges de colorants, qui contiennent un ou plusieurs, comme deux ou trois, de préférence 1 ou 2, colorants de formule générale (I) indiquée et définie ci-après, 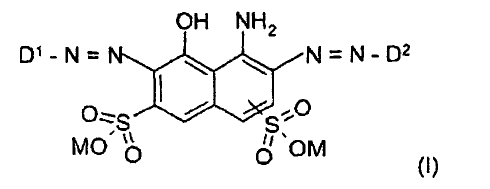 un ou plusieurs, comme deux ou trois, de préférence 1 ou 2, colorants de formule générale (II) indiquée et définie ci-après, 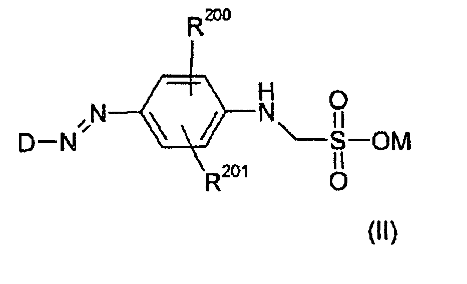 et en option un ou plusieurs, comme deux ou trois, de préférence 1 ou 2, colorants de formule générale (III) indiquée et définie ci-après, 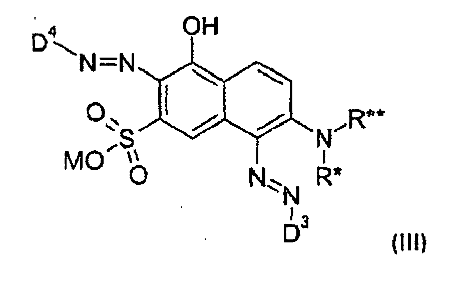 et en option un ou plusieurs, comme deux ou trois, de préférence un ou deux colorants de formule générale (IV) indiquée et définie ci-après, 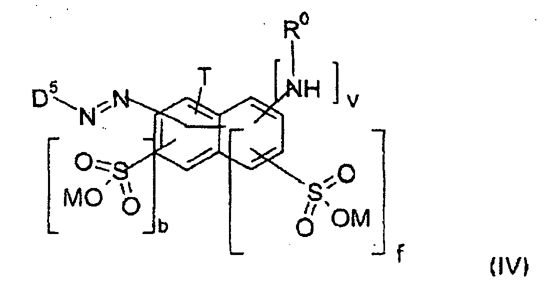 formules dans lesquelles :
D, D¹, D² D³ D⁴ et D⁵ représentent, indépendamment les uns des autres, un groupe de formule générale (1) 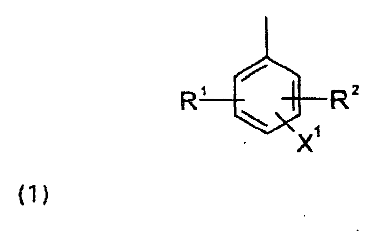
dans laquelle
R¹ et R² représentent, indépendamment l'un de l'autre, un atome d'hydrogène ou d'halogène ou un groupe alkyle en C₁-C₄, alcoxy en C₁-C₄, hydroxy, sulfo, carbony, ctano, bitro, amido ou ureido ; et
X¹ représente un atome d'hydrogène ou un groupe de formule -SO₂-Z,
Z représentant un groupe -CH=CH₂, -CH₂CH₂Z¹ ou hydroxy, où
Z¹
est un groupe hydroxy ou un séparable sous l'effet d'un alcali ou
D, D¹, D², D³, D⁴ et D⁵ représentent, indépendamment les uns des autres, un groupe naphtyle de formule générale (2) 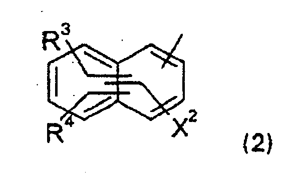 dans laquelle
R³ et R⁴ représentent, indépendamment l'un de l'autre, un atome d'hydrogène ou d'halogène ou un groupe alkyle en C₁-C₄, alcoxy en C₁-C₄, hydroxy, sulfo, carboxy, cyano, nitro, amido ou uréido ; et
X² a l'une des significations de X¹ ; ou
D, D¹, D², D³, D⁴ et D⁵ représentent, indépendamment les uns des autres, un groupe de formule générale (3) 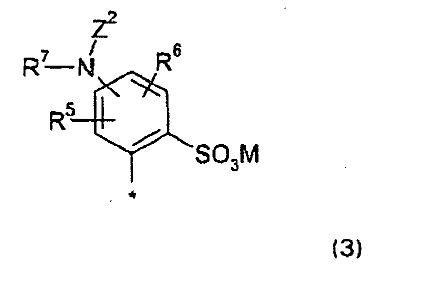 dans laquelle
R⁵ et R⁶ ont, indépendamment l'un de l'autre, l'une des significations de R¹ et R² ;
R⁷ est un atome d'hydrogène ou d'halogène, un groupe alkyle en C₁-C₄, un groupe phényle non substitué ou substitué par alkyle en C₁-C₄, alcoxy en C₁-C₄, sulfo, halogène ou carboxy ; et
Z² est un groupe de formule générale (4) ou (5) ou (6) 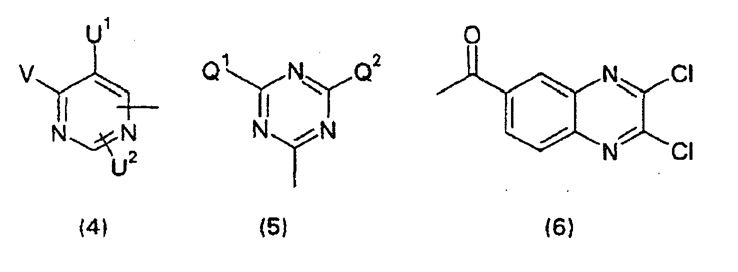
formules dans lesquelles
V représente le fluor ou le chlore ;
U¹, U² représentent, indépendamment l'un de l'autre, un atome de fluor, de chlore ou d'hydrogène ; et
Q¹, Q² représentent, indépendamment l'un de l'autre, un atome de chlore ou de fluor, un groupe cyanamido, hydroxy, alcoxy en C₁-C₆, phénoxy, sulfophénoxy, mercapto, alkyl(C₁-C₆)mercapto, pyridino, carboxy- pyridino, carbamoylpyridino ou un groupe de formule générale (7) ou (8) 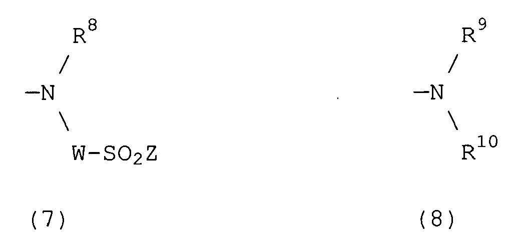
où
R⁸ est un atome d'hydrogène ou un groupe alkyle en C₁-C₆, sulfo- alkyle(C₁-C₆) ou phényle, qui est non substitué ou substitué par alkyle en C₁-C₄, alcoxy en C₁-C₄, sulfo, halogène, carboxy, acétamido, uréido ;
R⁹ et R¹⁰ ont, indépendamment l'un de l'autre, l'une des significations de R⁸, ou forment un système cyclique de formule -(CH₂)ⱼ-, j ayant la valeur 4 ou 5, ou bien -(CH₂)₂-E-(CH₂)₂-, E étant un atome d'oxygène ou de soufre ou un groupe sulfonyle ou -NR¹¹, où R¹¹ = alkyle en C₁-C₆ ;
W est un groupe phénylène qui est non substitué ou porte 1 ou 2 substituants, tels qu'alkyle en C₁-C₄, alcoxy en C₁-C₄, carboxy, sulfo, chloro, bromo, ou est un groupe alkylène(C₁-C₄)-arylène ou alkylène en C₂-C₆, qui peut être interrompu par oxygène, soufre, sulfonyle, amino, carbonyle, carbamoyle, ou est un groupe phénylène-CONH-phénylène qui est non substitué ou substitué par alkyle en _{C1}-C₄, alcoxy en C₁-C₄, hydroxy, sulfo, carboxy, amido, uréido ou halogène, ou est un groupe naphtylène qui est non substitué ou substitué par un ou deux groupes sulfo ; et
Z a la signification donnée plus haut ; ou
D, D¹, D², D³, D⁴ et D⁵ représentent, indépendamment les uns des autres, un groupe de formule générale (9) 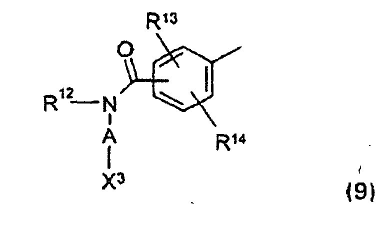 dans laquelle
R¹² est un atome d'hydrogène, un groupe alkyle en C₁-C₄, aryle ou un radical aryle substitué ;
R¹³ et R¹⁴ représentent, indépendamment l'un de l'autre, un atome d'hydrogène ou d'halogène ou un groupe alkyle en C₁-C₄, alcoxy en C₁-C₄, hydroxy, sulfo, carboxy, cyano, nitro, amido ou uréido ; et
A est un groupe phénylène de formule générale (10) 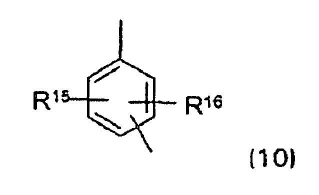
où
R¹⁵ et R¹⁶ représentent, indépendamment l'un de l'autre, un atome d'hydrogène ou d'halogène ou un groupe alkyle en C₁-C₄, alcoxy en C₁-C₄, hydroxy, sulfo, carboxy, cyano, nitro, amido ou uréido ; ou
A est un groupe naphtylène de formule générale (11) 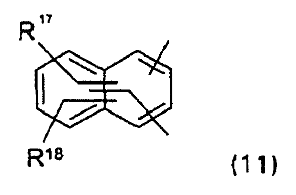
où
¹⁷ et R¹⁸ Rreprésentent, indépendamment l'un de l'autre, un atome d'hydrogène ou d'halogène ou un groupe alkyle en C₁-C₄, alcoxy en C₁-C₄, hydroxy, sulfo, carboxy, cyano, nitro, amido ou uréido ; ou
A est un groupe polyméthylène de formule générale (12)
-(CR¹⁹R²⁰)ₖ- (12)
où
k est un nombre entier supérieur à 1
R¹⁹ et R²⁰ et
représentent, indépendamment l'un de l'autre, un atome d'hydrogène ou d'halogène ou un groupe alkyle en C₁-C₄, alcoxy en C₁-C₄, hydroxy, cyano, amido ou aryle ; et
X³ a l'une des significations de X¹ ; et
R⁰ représente un groupe de formule générale (4) ou (5) ou un groupe de formule générale (13) 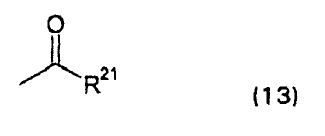
dans laquelle :
R²¹ représente un groupe alkyle en C₁-C₆, sulfo- alkyle (C₁-C₆), carboxy-alkyle (C₁-C₆) ou phényle, qui est non substitué ou substitué R²⁰⁰ et R²⁰¹ par alkyle en C₁-C₄, alcoxy en C₁-C₄, sulfo, halogène, carboxy, acétamido, uréido ; et représentent, indépendamment l'un de l'autre, un atome d'hydrogène, un groupe alkyle en C₁-C₄, alcoxy en C₁-C₄, -NH-COR^{a}, -NH-CONH₂, -SO₃H, -COOH, -COOR^{b}, R^{a} et R^{b} représentant un groupe alkyle en C₁-C₄ ou un groupe aryle éventuellement substitué ; et
R*, R** représentent, indépendamment l'un de l'autre, un atome d'hydrogène, un groupe alkyle en C₁-C₄ ou un groupe de formule (14) -CH₂-SO₃M (14) ;
b, f et v représentent, chacun indépendamment, 0 ou 1 ; et
T représente un groupe hydroxy ou NH₂, pour T représentant NH₂ v étant égal à 0 ; et
M représente un atome d'hydrogène, un métal alcalin ou un équivalent d'un métal alcalino-terreux,
les colorants de formules générales (I)-(IV) contenant au moins un groupe réactif avec les fibres, de formule -SO₂-Z ou -Z².

2. Mélanges de colorants réactifs selon la revendication 1, qui contiennent un ou plusieurs colorants de formule générale (I) indiquée et définie ci-après, 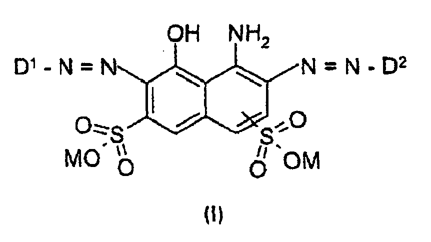 et un ou plusieurs colorants de formule générale (II) indiquée et définie ci-après, 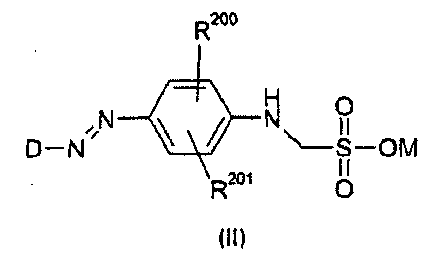 formules dans lesquelles D, D¹, D², R²⁰⁰, R²⁰¹ et M ont les significations données dans la revendication 1.

3. Mélanges de colorants réactifs selon la revendication 1, qui contiennent un ou plusieurs colorants de formule générale (I) indiquée et définie ci-après, 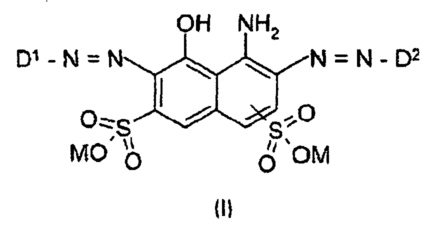 un ou plusieurs colorants de formule générale (II) indiquée et définie ci-après, 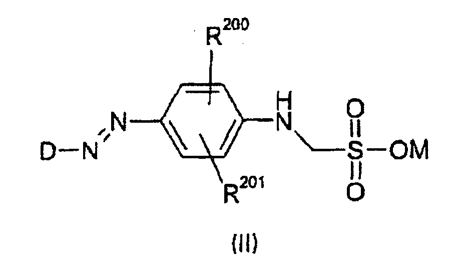 et un ou plusieurs colorants de formule générale (III) indiquée et définie ci-après, 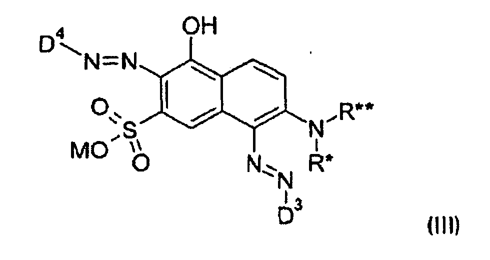 formules dans lesquelles D, D¹, D², D³, D⁴, R²⁰⁰, R²⁰¹, R*, R** et M ont les significations données dans la revendication 1.

4. Mélanges de colorants réactifs selon la revendication 1, qui contiennent un ou plusieurs colorants de formule générale (I) indiquée et définie ci-après, 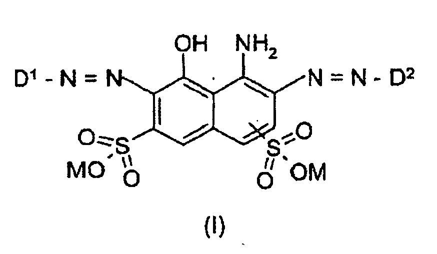 un ou plusieurs, comme deux ou trois, de préférence 1 ou 2, colorants de formule générale (II) indiquée et définie ci-après, 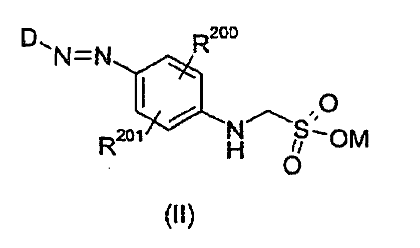 et un ou plusieurs colorants de formule générale (IV) indiquée et définie ci-après, 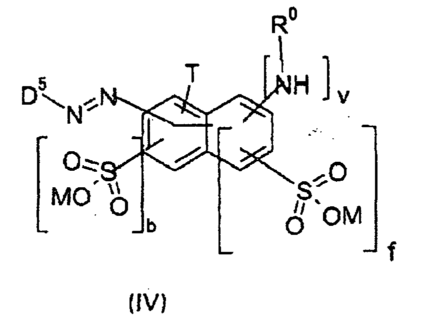 formules dans lesquelles D¹, D², D⁵, D, R²⁰⁰, R²⁰¹, R⁰, T, b, f, v et M ont les significations données plus haut.

5. Mélanges de colorants réactifs selon la revendication 1, qui contiennent un ou plusieurs colorants de formule générale (I) indiquée et définie ci-après, 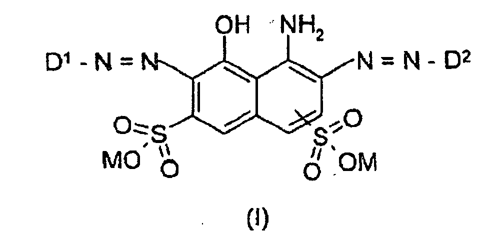 dans laquelle D¹, D² et M ont les significations données plus haut,
un ou plusieurs, comme deux ou trois, de préférence 1 ou 2, colorants de formule générale (II) indiquée et définie ci-après, 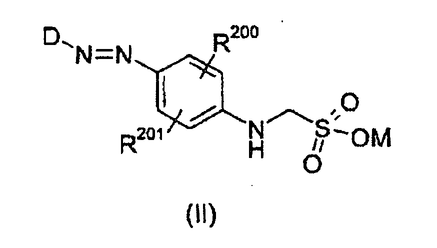 dans laquelle D, R²⁰⁰, R²⁰¹ et M ont les significations indiquées dans la revendication 1,
ainsi qu'un ou plusieurs colorants de formule générale (III), 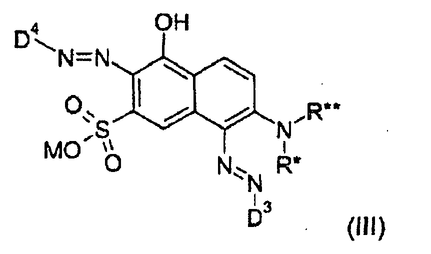 dans laquelle D³, D⁴, R*, R** et M ont les significations données dans la revendication 1,
ainsi qu'un ou plusieurs colorants de formule générale (IV), 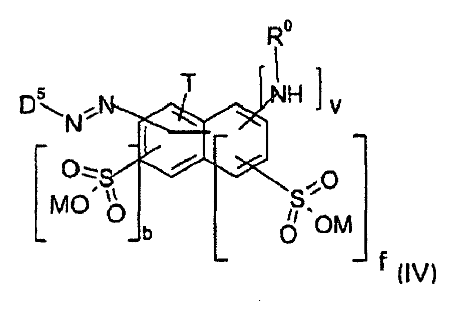 dans laquelle D⁵, R⁰, T, M, b, f et v ont les significations données dans la revendication 1.

6. Mélanges de colorants réactifs selon la revendication 1, qui contiennent un ou plusieurs colorants de formule générale (I) indiquée et définie ci-après, 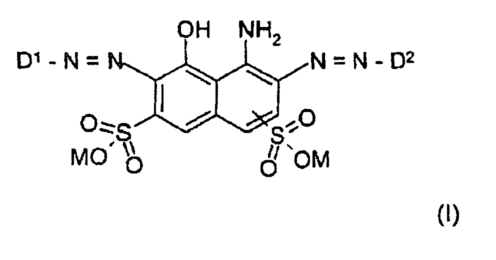 un ou plusieurs colorants de formule générale (II) indiquée et définie ci-après, 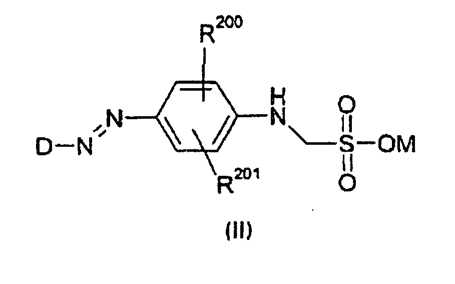 et un ou plusieurs, comme deux ou trois, de préférence 1 ou 2, colorants de formule générale (III-a) indiquée et définie ci-après, 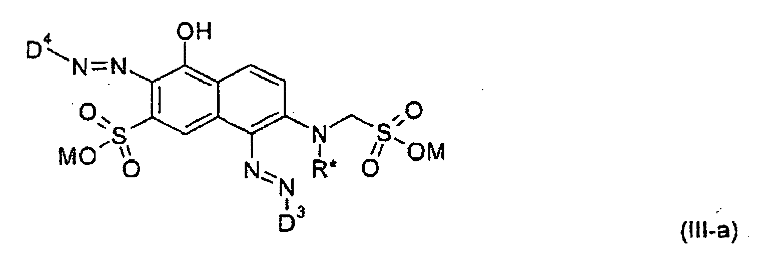 formules dans lesquelles
D, D¹, D², D³, D⁴, R²⁰⁰, R²⁰¹ et M ont les significations données dans la revendication 1.

7. Mélanges de colorants réactifs selon la revendication 1, qui contiennent un ou plusieurs colorants de formule générale (I) indiquée et définie ci-après, 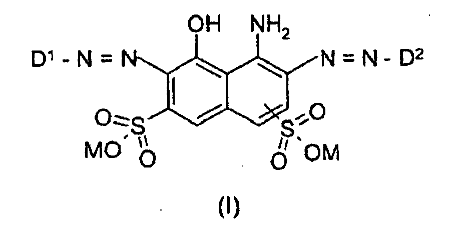 un ou plusieurs, comme deux ou trois, de préférence 1 ou 2, colorants de formule générale (II) indiquée et définie ci-après, 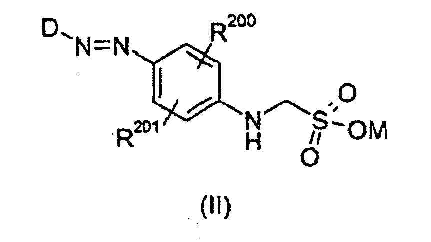 et un ou plusieurs colorants de formule générale (IV-a) indiquée et définie ci-après, 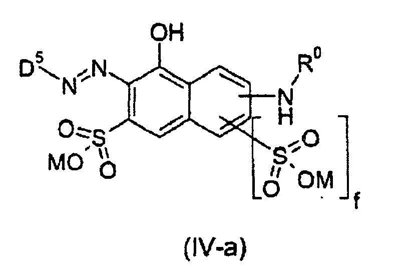 formules dans lesquelles D¹, D², D⁵, D, R²⁰⁰, R²⁰¹, R⁰, f et M ont les significations données dans la revendication 1.

8. Mélanges de colorants réactifs selon la revendication 1, qui contiennent un ou plusieurs colorants de formule générale (I-b) indiquée et définie ci-après, 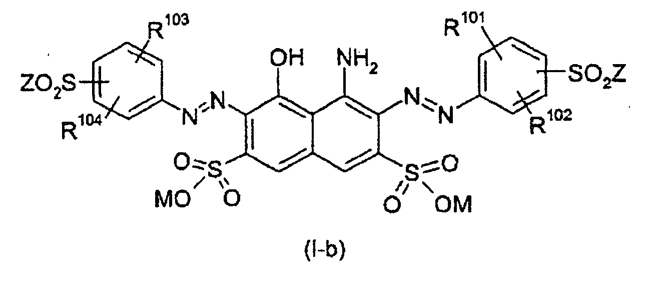 et au moins un colorant de formule générale (II-a) 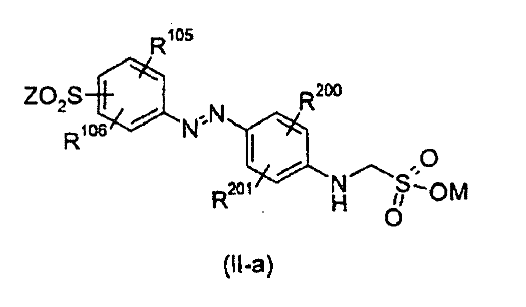
R¹⁰¹ à R¹⁰⁶ représentant, indépendamment les uns des autres, un atome d'hydrogène ou d'halogène ou un groupe alkyle en C₁-C₄, alcoxy en C₁-C₄, sulfo ou carboxy,
R²⁰⁰ et R²⁰¹ ayant, indépendamment l'un de l'autre, l'une des significations indiquées dans la revendication 1 et
Z représente le groupe vinyle ou β-sulfato- éthyle.

9. Mélanges de colorants réactifs selon la revendication 1, qui contiennent au moins un colorant de formule générale (1-b), 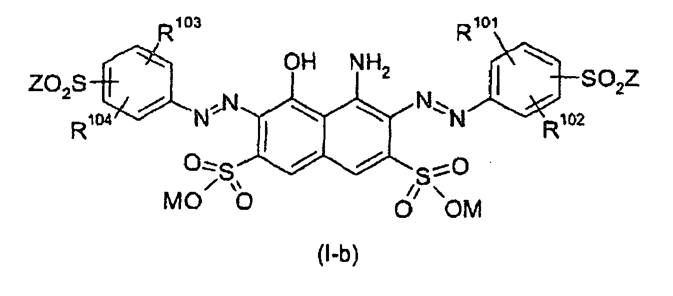 au moins un colorant de formule générale (II-a) 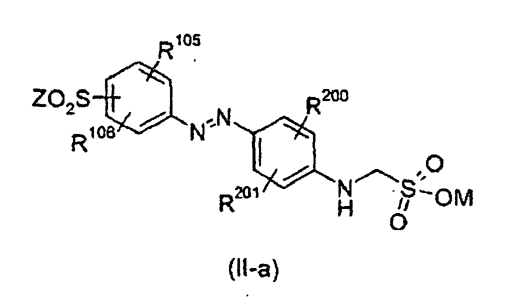 et au moins un colorant de formule générale (III-b) 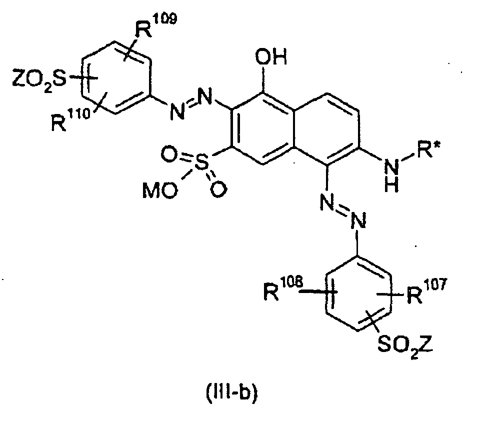 formules dans lesquelles M, Z, R²⁰⁰, R²⁰¹ et R* ont les significations données dans la revendication 1 et R¹⁰¹ à R¹¹⁰ représentent, indépendamment les uns des autres, un atome d'hydrogène, le groupe méthyle, méthoxy ou sulfo.

10. Mélanges de colorants réactifs selon la revendication 1, qui contiennent au moins un colorant de formule générale (I-b), 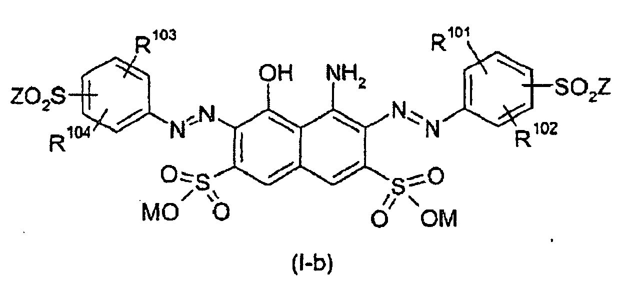 au moins un colorant de formule générale (II-a) 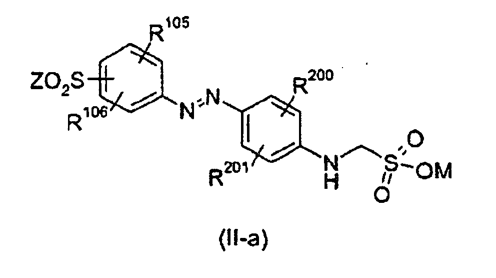 et un ou plusieurs colorants de formule générale (III-c) 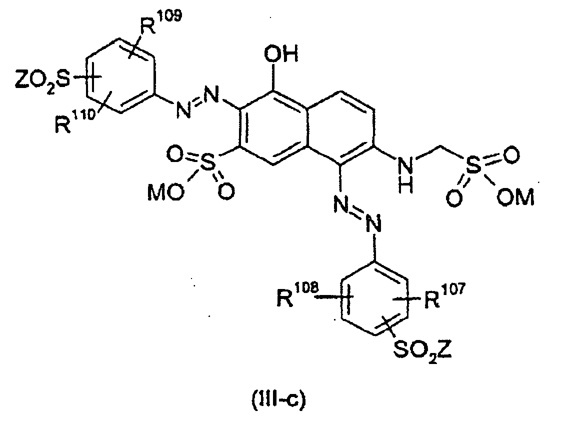 formules dans lesquelles
R²⁰⁰, R²⁰¹, M et Z ont la signification indiquée dans la revendication 1 et
R¹⁰¹ à R¹¹⁰ représentant, indépendamment les uns des
autres, un atome d'hydrogène ou d'halogène ou un groupe alkyle en C₁-C₄, alcoxy en C₁-C₄, sulfo ou carboxy, et Z représente le groupe vinyle ou β-sulfatoéthyle.

11. Mélanges de colorants réactifs selon la revendication 1, qui contiennent au moins un colorant de formule générale (I-b), 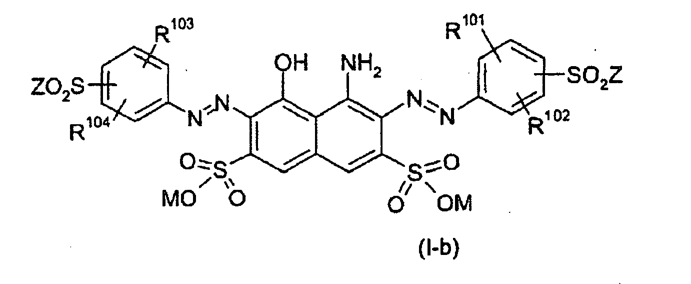 au moins un colorant de formule générale (II-a) 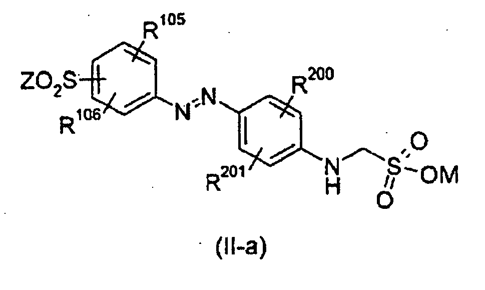 et au moins un colorant de formule générale (IV-b) 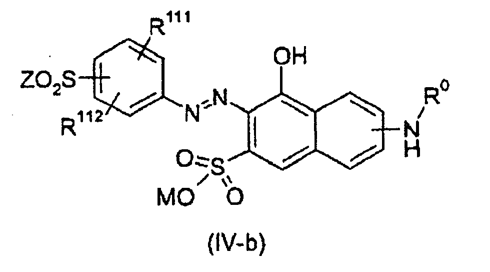 formules dans lesquelles
M, Z, R²⁰⁰, R²⁰¹ et R⁰ ont les significations données dans la revendication 1 et
R¹⁰¹ à R¹⁰⁶ et R¹¹¹ et R¹¹² représentant, indépendamment les uns des autres, un atome d'hydrogène, le groupe méthyle, méthoxy ou sulfo.

12. Mélanges de colorants réactifs selon la revendication 1, qui contiennent au moins un colorant de formule générale (I-b), 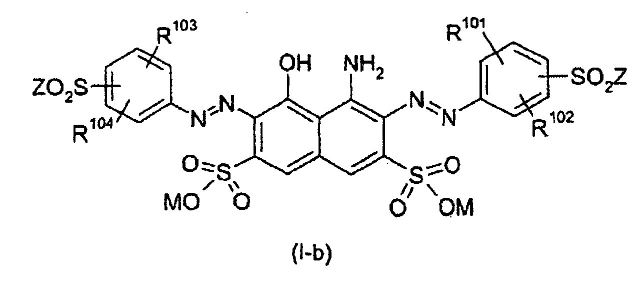 au moins un colorant de formule générale (II-a) 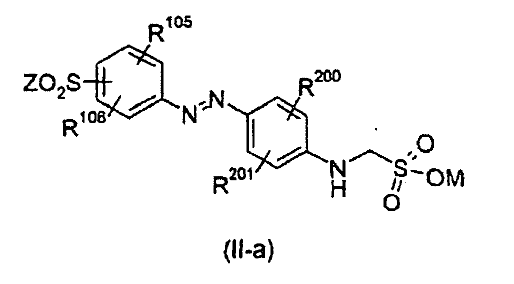 et au moins un colorant de formule générale (IV-c), 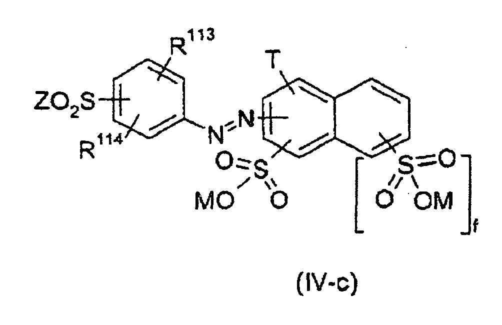 formules dans lesquelles
M, Z, R²⁰⁰, R²⁰¹ T et f ont la signification indiquée dans la revendication 1 et
R¹⁰¹ à R¹⁰⁶ et R¹¹³ et R¹¹⁴ représentent, indépendamment les uns des autres, un atome d'hydrogène, le groupe méthyle, méthoxy ou sulfo.

13. Mélanges de colorants réactifs selon au moins l'une des revendications 1 à 12, contenant un ou plusieurs colorants monoazoïques de formule (15) et/ou un ou plusieurs colorants monoazoïques de formule (16) à chacun 0,5 à 6 % en poids, 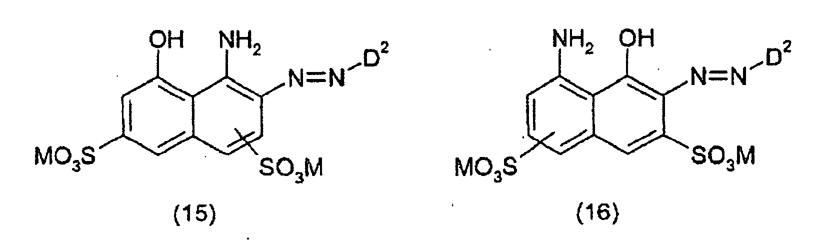 D² et M ayant les significations indiquées dans la revendication 1.

14. Mélanges de colorants réactifs selon la revendication 1, contenant un ou plusieurs colorants monoazoïques de formules générales (17) et/ou (18), chacun en une quantité de 0 - 10 % en poids, 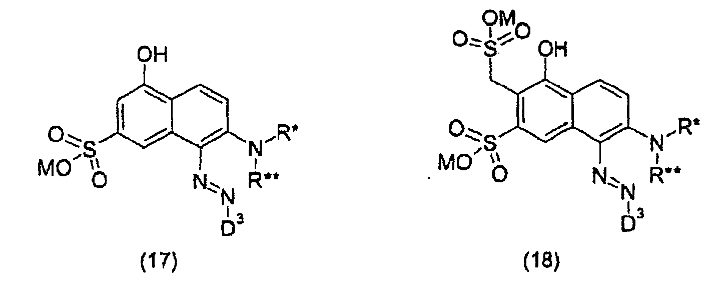 M, R*, R** et D³ ayant les significations indiquées dans la revendication 1.

15. Mélanges de colorants réactifs selon la revendication 1, contenant un ou plusieurs colorants de formule (I) en une proportion de 25 à 99 % en poids et un ou plusieurs colorants de formule (II) en une proportion de 1 à 75 % en poids.

16. Mélanges de colorants réactifs selon la revendication 1, contenant un ou plusieurs colorants de formule (I) en une proportion de 30 à 95 % en poids et un ou plusieurs colorants de formules (II) et (III) et/ou (IV) chacun indépendamment en une proportion de 1 à 70 % en poids.

17. Mélanges de colorants réactifs selon la revendication 1, contenant un ou plusieurs colorants de formule (I) en une proportion de 50 à 90 % en poids et un ou plusieurs colorants de formules (II) et (III) et/ou (IV) chacun indépendamment en une proportion de 5 à 50 % en poids.

18. Procédé pour la préparation de mélanges de colorants selon une ou plusieurs des revendications 1 à 17, **caractérisé en ce qu'**on mélange entre eux en le rapport préétabli les colorants individuels de formules (I), (II) et éventuellement (III) et/ou (IV), soit sous forme solide, mécaniquement, soit on les mélange sous forme des solutions aqueuses.

19. Procédé pour la préparation de mélanges de colorants selon une ou plusieurs des revendications 1 à 17, par diazotation et copulation de mélanges appropriés de composants diazotables et de copulants en les rapports de mélange désirés.

20. Procédé pour la préparation de mélanges de colorants selon une ou plusieurs des revendications 1 à 17, pour des composants diazotables comportant les groupes D¹, D⁴, D⁵ et D selon les formules générales (I) et (II) ainsi qu'éventuellement (III) et/ou (IV) à même signification, par diazotation d'une amine de formule générale (19)
D¹ - NH₂ (19),
dans laquelle D¹ est défini comme indiqué dans la revendication 1, à la manière usuelle et mise en réaction subséquente du composé diazonium ainsi obtenu avec une solution ou suspension aqueuse d'un mélange à rapport fixé d'un colorant monoazoïque selon la formule générale (15), et d'un copulant de formule générale (24), 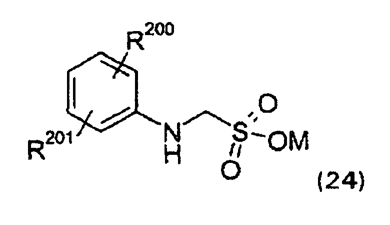 dans laquelle R²⁰⁰ , R²⁰¹, et M sont définis comme indiqué dans la revendication 1, ainsi qu'éventuellement un colorant monoazoïque selon la formule générale (17) et/ou un copulant de formule générale (20), 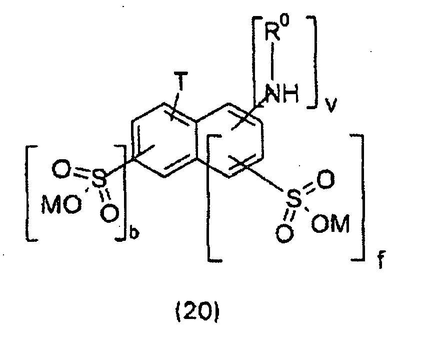 dans laquelle T, R⁰, M, b, f et v sont tels que définis dans la revendication 1.

21. Utilisation de mélanges de colorants réactifs selon une ou plusieurs des revendications 1 à 17, pour la teinture ou l'impression de matière fibreuse contenant des groupes hydroxy et/ou carbamoyle.

22. Préparation liquide aqueuse, contenant un mélange de colorants selon au moins l'une des revendications 1 à 17, ayant une teneur totale en colorants de 5-50 % en poids, pour la teinture ou l'impression de matière fibreuse contenant des groupes hydroxy et/ou carbamoyle.

23. Préparation liquide aqueuse, contenant un mélange de colorants selon au moins l'une des revendications 1 à 17, ayant une teneur totale en colorants de 0,1-50 % en poids, pour l'impression de matière fibreuse contenant des groupes hydroxy et/ou carbamoyle, selon le procédé jet d'encre.
